# EUROPÄISCHE PATENTANMELDUNG

(11) **EP 2 000 027 A1**
(43) Veröffentlichungstag der Anmeldung: **10.12.2008**
(21) Anmeldenummer: 07109732.3
(22) Anmeldetag: 06.06.2007
(51) Int. Cl.: A01N 33/12, A01N 59/02, A01N 43/78, A01N 43/40, A01P 7/00

(54) **Insektizide Zusammensetzungen mit verbesserter Wirkung**

(71) Anmelder: Bayer CropScience AG, 40789 Monheim (DE)
(72) Erfinder: Jeschke, Peter Dr., 51467 Bergisch Gladbach (DE); Velten, Robert Dr., 40764 Langenfeld (DE); Fischer, Reiner Dr., 40789 Monheim am Rhein (DE); Pontzen, Rolf Dr., 42799 Leichlingen (DE); Reckmann, Udo Dr., 50823 Köln (DE); Sanwald, Erich, 24159 Kiel (DE); Arnold, Christian Dr., 40764 Gladbach (DE); Schenke, Thomas Dr., 51469 Bergisch Gladbach (DE); Müller, Thomas Dr., 60322 Frankfurt (DE)

(57) **Zusammenfassung**

Die vorliegende Erfindung betrifft die Steigerung der Wirkung von Pflanzenschutzmitteln enthaltend Enaminocarbonylverbindungen durch die Zugabe von Ammoniumsalzen und / oder Phosphoniumsalzen oder durch die Zugabe von Ammonium- bzw. Phosphoniumsalzen und Penetrationsförderern, die entsprechenden Mittel, Verfahren zu ihrer Herstellung und ihre Anwendung im Pflanzenschutz.

## Beschreibung

Die vorliegende Erfindung betrifft die Steigerung der Wirkung von Pflanzenschutzmitteln enthaltend Enaminocarbonylverbindungen durch die Zugabe von Ammonium- oder Phosphoniumsalzen oder durch die Zugabe von Ammonium- oder Phosphoniumsalzen und Penetrationsförderern, die entsprechenden Mittel, Verfahren zu ihrer Herstellung und ihre Anwendung im Pflanzenschutz.

Enaminocarbonylverbindungen sind beispielsweise aus EP 0 539 588 und WO 2006/037475 bekannt. Die Wirkungssteigerung für einzelne Enaminocarbonylverbindungen ist in der internationalen Patentanmeldung PCT/EP2006/011468 beschrieben.

Erfindungsgemäße Enaminocarbonylverbindungen werden beispielweise durch Formel (I) beschrieben: 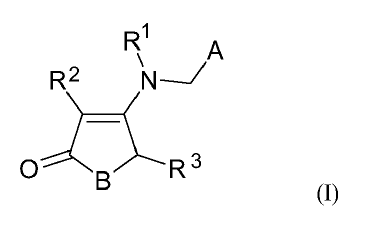 in welcher
- A: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder
- A: für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
- A: für einen Rest 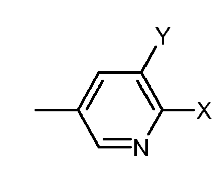
steht,
in welchem
- X: für Halogen, Alkyl oder Halogenalkyl steht
- Y: für Halogen, Alkyl, Halogenalkyl, Halogenalkoxy, Azido oder Cyan steht,
- B: für Sauerstoff, Schwefel, Ethylen oder Methylen steht,
- R¹: für Wasserstoff, Alkyl, Halogenalkyl, Alkenyl, Halogenalkenyl, Alkinyl, Cycloalkyl, Cyclo-alkylalkyl, Halogencycloalkyl, Alkoxy oder Halogencycloalkylalkyl steht,
- R²: für Wasserstoff oder Halogen steht und
- R³: für Wasserstoff oder Alkyl steht,
mit der Maßgabe, dass 4-{[(6-Chlorpyrid-3-yl)methyl](methyl)amino}furan-2(5H)-on und 4-{[(6-Chlorpyrid-3-yl)methyl]amino}furan-2(5H)-on ausgeschlossen sind.

Bevorzugte, besonders bevorzugte und ganz besonders bevorzugte Substituenten bzw. Bereiche der in der oben erwähnten Formel (I) aufgeführten Reste werden im Folgenden erläutert.
- A: steht bevorzugt für 6-Fluor-pyrid-3-yl, 6-Chlor-pyrid-3-yl, 6-Brom-pyrid-3-yl, 6-Methyl-pyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl, 2-Chlor-pyrimidin-5-yl, 2-Trifluormethyl-pyrimidin-5-yl, 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl oder 5-Difluormethyl-6-iod-pyrid-3-yl.
- B: steht bevorzugt für Sauerstoff oder Methylen.
- R¹: steht bevorzugt für gegebenenfalls durch Fluor substituiertes C₁-C₅-Alkyl, C₂-C₅-Alkenyl, C₃-C₅-Cycloalkyl oder C₃-C₅-Cycloalkylalkyl.
- R²: steht bevorzugt für Wasserstoff oder Halogen.
- R³: steht bevorzugt für jeweils Wasserstoff oder Methyl.
- A: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl, 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brompyrid-3-yl, 5-Chlor-6-brom-pyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl.
- B: steht besonders bevorzugt für Sauerstoff oder Methylen.
- R¹: steht besonders bevorzugt für Methyl, Ethyl, Propyl, Vinyl, Allyl, Propargyl, Cyclopropyl, 2-Fluor-ethyl, 2,2-Difluor-ethyl oder 2-Fluor-cyclopropyl.
- R²: steht besonders bevorzugt für Wasserstoff, Fluor oder Chlor.
- R³: steht besonders bevorzugt für Wasserstoff.
- B: steht ganz besonders bevorzugt für Sauerstoff.
- A: steht ganz besonders bevorzugt für den Rest 6-Chlor-pyrid-3-yl, 6-Brom-pyrid-3-yl, oder 6-Chlor-1,4-pyridazin-3-yl, 5-Fluor-6-chlor-pyrid-3-yl oder 5-Fluor-6-brom-pyrid-3-yl.
- R¹: steht ganz besonders bevorzugt für Methyl, Ethyl, n-Propyl, n-Prop-2-enyl, n-Prop-2-inyl, Cyclopropyl, 2-Fluorethyl, oder 2,2-Difluor-ethyl.
- R²: steht ganz besonders bevorzugt für Wasserstoff.
- R³: steht ganz besonders bevorzugt für Wasserstoff.

In einer hervorgehobenen Gruppe von Verbindungen der Formel (I) steht A für 6-Fluor-pyrid-3-yl

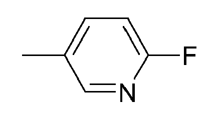

In einer hervorgehobenen Gruppe von Verbindungen der Formel (I) steht A für 6-Chlor-pyrid-3-yl

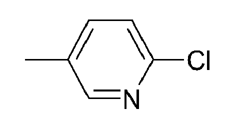

In einer weiteren hervorgehobenen Gruppe von Verbindungen der Formel (I) steht A für 6-Brom-pyrid-3-yl

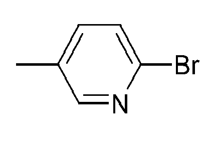

In einer weiteren hervorgehobenen Gruppe von Verbindungen der Formel (I) steht A für 6-Trifluormethyl-pyrid-3-yl-

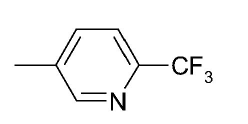

In einer weiteren hervorgehobenen Gruppe von Verbindungen der Formel (I) steht A für 6-Chlor-1,4-pyridazin-3-yl-

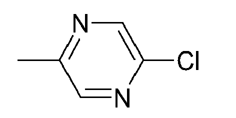

In einer weiteren hervorgehobenen Gruppe von Verbindungen der Formel (I) steht A für 2-Chlor-1,3-thiazol-5-yl-

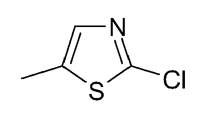

Im Folgenden ist eine weitere Gruppe bevorzugter Verbindungen der Formel (I) definiert, in welchen
- A: für Pyrid-3-yl, welches in 6-Position durch Fluor, Chlor, Brom, Methyl oder Trifluormethyl substituiert ist oder für 2-Chlor-pyrazin-5-yl oder für 2-Chlor-1,3-thiazol-5-yl steht,
- B: für Sauerstoff, Schwefel oder Methylen steht,

- R¹: für Halogen-C₁₋₃-alkyl, Halogen-C₂₋₃-alkenyl, Halogencyclopropyl steht (wobei Halogen insbesondere für Fluor oder Chlor steht),
- R²: für Wasserstoff oder Halogen steht,
- R³: für Wasserstoff oder Methyl steht,
- A: bevorzugt für 6-Fluor-pyrid-3-yl, 6-Chlor-pyrid-3-yl, 6-Brom-pyrid-3-yl, 6-Trifluormethylpyrid-3-yl, 2-Chlor-pyrazin-5-yl oder 2-Chlor-1,3-thiazol-5-yl steht,
- B: bevorzugt für Sauerstoff oder Methylen steht,
- R¹: bevorzugt für Difluormethyl, 2-Fluorethyl, 2,2-Difluorethyl, 2-Chlor-2-fluorethyl, 3-Fluor-*n*-propyl, 2-Fluor-vinyl, 3,3-Difluor-prop-2-enyl oder 3,3-Dichlor-prop-2-enyl steht,
- R²: bevorzugt für Wasserstoff oder Halogen (wobei Halogen insbesondere für Fluor oder Chlor steht) steht,
- R³: bevorzugt für jeweils Wasserstoff steht,
- A: besonders bevorzugt für den Rest 6-Chlor-pyrid-3-yl oder 6-Brom-pyrid-3-yl steht,
- B: besonders bevorzugt für Sauerstoff steht,
- R¹: besonders bevorzugt für 2-Fluorethyl oder 2,2-Difluorethyl steht,
- R²: besonders bevorzugt für Wasserstoff steht,
- R³: besonders bevorzugt für jeweils Wasserstoff steht,
- A: ganz besonders bevorzugt für den Rest 6-Chlor-pyrid-3-yl oder 6-Brom-pyrid-3-yl steht,
- B: ganz besonders bevorzugt für Sauerstoff steht,
- R¹: ganz besonders bevorzugt für 2,2-Difluorethyl steht,
- R²: ganz besonders bevorzugt für Wasserstoff steht und
- R³: ganz besonders bevorzugt für jeweils Wasserstoff steht.

In einer weiteren hervorgehobenen Gruppe von Verbindungen der Formel (I) stehen R³ für Wasserstoff, B für Sauerstoff und A für 6-Chlor-pyrid-3-yl

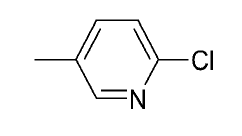

In einer weiteren hervorgehobenen Gruppe von Verbindungen der Formel (I) stehen R³ für Wasserstoff, B für Sauerstoff und A für 6-Brom-pyrid-3-yl

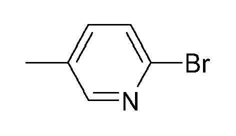

In einer weiteren hervorgehobenen Gruppe von Verbindungen der Formel (I) stehen R³ für Wasserstoff, B für Sauerstoff und A für 6-Fluor-pyrid-3-yl

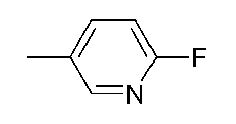

In einer weiteren hervorgehobenen Gruppe von Verbindungen der Formel (I) stehen R³ für Wasserstoff, B für Sauerstoff und A für 6-Trifluormethyl-pyrid-3-yl-

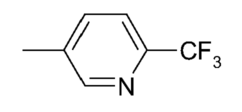

In einer weiteren hervorgehobenen Gruppe von Verbindungen der Formel (I) stehen R³ für Wasserstoff, B für Sauerstoff und A für 2-Chlor-1,3-thiazol-5-yl-

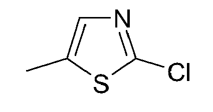

In einer weiteren hervorgehobenen Gruppe von Verbindungen der Formel (I) stehen R² und R³ für Wasserstoff, B für Sauerstoff und A für 6-Chlor-pyrid-3-yl

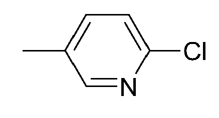

In einer weiteren hervorgehobenen Gruppe von Verbindungen der Formel (I) stehen R² und R³ für Wasserstoff, B für Sauerstoff und A für 6-Brom-pyrid-3-yl

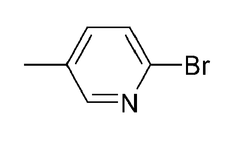

In einer weiteren hervorgehobenen Gruppe von Verbindungen der Formel (I) stehen R² und R³ für Wasserstoff, B für Sauerstoff und A für 6-Fluor-pyrid-3-yl

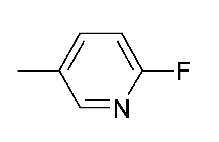

In einer weiteren hervorgehobenen Gruppe von Verbindungen der Formel (I) stehen R² und R³ für Wasserstoff, B für Sauerstoff und A für 6-Trifluormethyl-pyrid-3-yl-

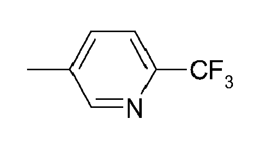

In einer weiteren hervorgehobenen Gruppe von Verbindungen der Formel (I) stehen R² und R³ für Wasserstoff, B für Sauerstoff und A für 2-Chlor-1,3-thiazol-5-yl-

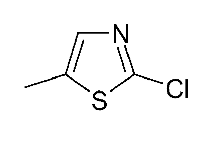

In einer weiteren hervorgehobenen Gruppe von Verbindungen der Formel (I) stehen R² und R³ für Wasserstoff, B für Methylen und A für 6-Chlor-pyrid-3-yl

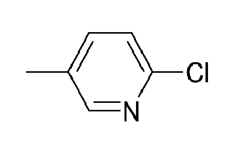

In einer weiteren hervorgehobenen Gruppe von Verbindungen der Formel (I) stehen R² und R³ für Wasserstoff, B für Methylen und A für 6-Brom-pyrid-3-yl

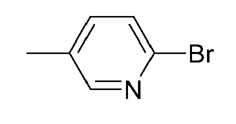

In einer weiteren hervorgehobenen Gruppe von Verbindungen der Formel (I) stehen R² und R³ für Wasserstoff, B für Methylen und A für 6-Fluor-pyrid-3-yl

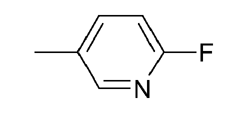

In einer weiteren hervorgehobenen Gruppe von Verbindungen der Formel (I) stehen R² und R³ für Wasserstoff, B für Methylen und A für 6-Trifluormethyl-pyrid-3-yl-

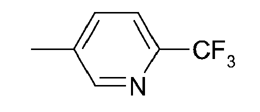

In einer weiteren hervorgehobenen Gruppe von Verbindungen der Formel (I) stehen R² und R³ für Wasserstoff, B für Methylen und A für 2-Chlor-1,3-thiazol-5-yl-

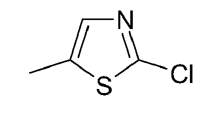

In einer weiteren hervorgehobenen Gruppe von Verbindungen der Formel (I) stehen R¹ für Difluormethyl, R² und R³ für Wasserstoff und B für Sauerstoff.

In einer weiteren hervorgehobenen Gruppe von Verbindungen der Formel (I) stehen R¹ für 2-Fluorethyl, R² und R³ für Wasserstoff und B für Sauerstoff.

In einer weiteren hervorgehobenen Gruppe von Verbindungen der Formel (I) stehen R¹ für 2,2-Difluorethyl, R² und R³ für Wasserstoff und B für Sauerstoff

In einer weiteren hervorgehobenen Gruppe von Verbindungen der Formel (I) stehen R¹ für Difluormethyl, R² und R³ für Wasserstoff und B für Methylen.

In einer weiteren hervorgehobenen Gruppe von Verbindungen der Formel (I) stehen R¹ für 2-Fluorethyl, R² und R³ für Wasserstoff und B für Methylen.

In einer weiteren hervorgehobenen Gruppe von Verbindungen der Formel (I) stehen R¹ für 2,2-Difluorethyl, R² und R³ für Wasserstoff und B für Methylen.

Die oben aufgeführten allgemeinen oder in Vorzugsbereiche aufgeführten Restedefinitionen bzw. Erläuterungen können untereinander, also auch zwischen den jeweiligen Vorzugsbereichen, beliebig kombiniert werden.

Erfindungsgemäß bevorzugt werden Verbindungen der Formel (I), in welchen eine Kombination der vorstehend als bevorzugt aufgeführten Bedeutungen vorliegt.

Erfindungsgemäß besonders bevorzugt werden Verbindungen der Formel (I), in welchen eine Kombination der vorstehend als besonders bevorzugt aufgeführten Bedeutungen vorliegt.

Erfindungsgemäß ganz besonders bevorzugt werden Verbindungen der Formel (I), in welchen eine Kombination der vorstehend als ganz besonders bevorzugt aufgeführten Bedeutungen vorliegt.

Eine bevorzugte Untergruppe der erfindungsgemässen Enaminocarbonylverbindungen sind solche der Formel (I-a) 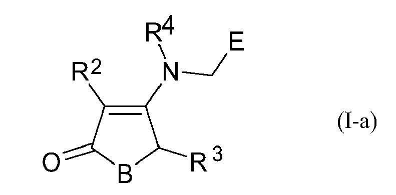 in welcher
- E: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl,
- R⁴: für Halogenalkyl, Halogenalkenyl, Halogencycloalkyl oder Halogencycloalkylalkyl steht,
und R², R³ und B die oben angegebenen Bedeutungen haben.

Bevorzugte Substituenten bzw. Bereiche der in der oben und nachstehend erwähnten Formel (I-a) aufgeführten Reste werden im Folgenden erläutert.
- E: steht bevorzugt für 6-Fluor-pyrid-3-yl, 6-Chlor-pyrid-3-yl, 6-Brom-pyrid-3-yl, 6-Methyl-pyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl.
- B: steht bevorzugt für Sauerstoff oder Methylen.
- R²: steht bevorzugt für Wasserstoff oder Halogen (wobei Halogen insbesondere für Fluor oder Chlor steht).
- R³: steht bevorzugt für jeweils Wasserstoff oder Methyl.
- R⁴: steht bevorzugt für durch Fluor substituiertes C₁-C₅-Alkyl, C₂-C₅-Alkenyl, C₃-C₅-Cycloalkyl oder C₃-C₅-Cycloalkylalkyl.
- E: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl.
- B: steht besonders bevorzugt für Sauerstoff oder Methylen.
- R²: steht besonders bevorzugt für Wasserstoff.
- R³: steht besonders bevorzugt für Wasserstoff.
- R⁴: steht besonders bevorzugt für 2-Fluor-ethyl, 2,2-Difluor-ethyl, 2-Fluor-cyclopropyl.
- E: steht ganz besonders bevorzugt für den Rest 6-Chlor-pyrid-3-yl, 6-Brom-pyrid-3-yl, oder 6-Chlor-1,4-pyridazin-3-yl.
- B: steht ganz besonders bevorzugt für Sauerstoff.
- R²: steht ganz besonders bevorzugt für Wasserstoff.
- R³: steht ganz besonders bevorzugt für Wasserstoff.
- R⁴: steht ganz besonders bevorzugt für 2,2-Difluor-ethyl.

In einer hervorgehobenen Gruppe von Verbindungen der Formel (I-a) steht E für 6-Chlor-pyrid-3-yl

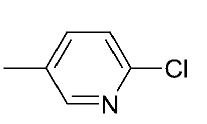

In einer weiteren hervorgehobenen Gruppe von Verbindungen der Formel (I-a) steht E für 6-Brom-pyrid-3-yl

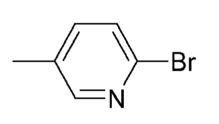

In einer weiteren hervorgehobenen Gruppe von Verbindungen der Formel (I-a) steht E für 6-Chlor-1,4-pyridazin-3-yl-

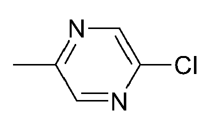

In einer weiteren hervorgehobenen Gruppe von Verbindungen der Formel (I-a) steht E für 2-Chlor-1,3-thiazol-5-yl-

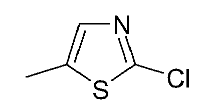

Im Folgenden ist eine weitere Gruppe bevorzugter Verbindungen der Formel (I-a) definiert, in welcher
- E: für Pyrid-3-yl, welches in 6-Position durch Fluor, Chlor, Brom, Methyl oder Trifluormethyl substituiert ist oder für 2-Chlor-pyrazin-5-yl oder für 2-Chlor-1,3-thiazol-5-yl steht,
- B: für Sauerstoff, Schwefel oder Methylen steht,
- R²: für Wasserstoff oder Halogen steht,
- R³: für Wasserstoff oder Methyl steht,
- R⁴: für Halogen-C₁₋₃-alkyl, Halogen-C₂₋₃-alkenyl, Halogencyclopropyl steht (wobei Halogen insbesondere für Fluor oder Chlor steht),
- E: bevorzugt für 6-Fluor-pyrid-3-yl, 6-Chlor-pyrid-3-yl, 6-Brom-pyrid-3-yl, 6-Trifluormethylpyrid-3-yl, 2-Chlor-pyrazin-5-yl oder 2-Chlor-1,3-thiazol-5-yl steht,
- B: bevorzugt für Sauerstoff oder Methylen steht,
- R²: bevorzugt für Wasserstoff oder Halogen steht (wobei Halogen insbesondere für Fluor oder Chlor steht),
- R³: bevorzugt für jeweils Wasserstoff steht,
- R⁴: bevorzugt für Difluormethyl, 2-Fluorethyl, 2,2-Difluorethyl, 2-Chlor-2-fluorethyl, 3-Fluor-*n*-propyl, 2-Fluor-vinyl, 3,3-Difluor-prop-2-enyl oder 3,3-Dichlor-prop-2-enyl steht,
- E: besonders bevorzugt für den Rest 6-Chlor-pyrid-3-yl oder 6-Brom-pyrid-3-yl steht,
- B: besonders bevorzugt für Sauerstoff steht,
- R²: besonders bevorzugt für Wasserstoff steht,
- R³: besonders bevorzugt für Wasserstoff steht,
- R⁴: besonders bevorzugt für 2-Fluorethyl oder 2,2-Difluorethyl steht,
- E: ganz besonders bevorzugt für den Rest 6-Chlor-pyrid-3-yl oder 6-Brom-pyrid-3-yl steht,
- B: ganz besonders bevorzugt für Sauerstoff,
- R²: ganz besonders bevorzugt für Wasserstoff steht,
- R³: ganz besonders bevorzugt für Wasserstoff steht und
- R⁴: ganz besonders bevorzugt für 2,2-Difluorethyl steht.

In einer hervorgehobenen Gruppe von Verbindungen der Formel (I-a) stehen R³ für Wasserstoff, B für Sauerstoff und E für 6-Chlor-pyrid-3-yl

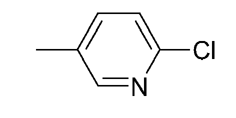

In einer weiteren hervorgehobenen Gruppe von Verbindungen der Formel (I-a) stehen R³ für Wasserstoff, B für Sauerstoff und E für 6-Brom-pyrid-3-yl

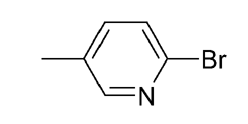

In einer weiteren hervorgehobenen Gruppe von Verbindungen der Formel (I-a) stehen R³ für Wasserstoff, B für Sauerstoff und E für 6-Fluor-pyrid-3-yl

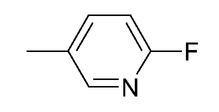

In einer weiteren hervorgehobenen Gruppe von Verbindungen der Formel (I-a) stehen R³ für Wasserstoff, B für Sauerstoff und E für 6-Trifluormethyl-pyrid-3-yl-

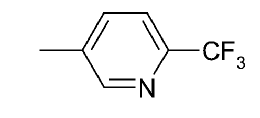

In einer weiteren hervorgehobenen Gruppe von Verbindungen der Formel (I-a) stehen R³ für Wasserstoff, B für Sauerstoff und E für 2-Chlor-1,3-thiazol-5-yl-

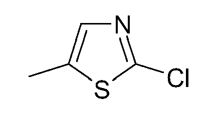

In einer weiteren hervorgehobenen Gruppe von Verbindungen der Formel (I-a) stehen R² und R³ für Wasserstoff, B für Sauerstoff und E für 6-Chlor-pyrid-3-yl

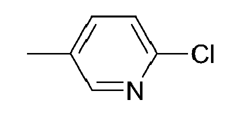

In einer weiteren hervorgehobenen Gruppe von Verbindungen der Formel (I-a) stehen R² und R³ für Wasserstoff, B für Sauerstoff und E für 6-Brom-pyrid-3-yl

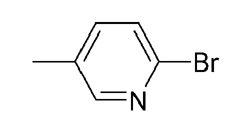

In einer weiteren hervorgehobenen Gruppe von Verbindungen der Formel (I-a) stehen R² und R³ für Wasserstoff, B für Sauerstoff und E für 6-Fluor-pyrid-3-yl

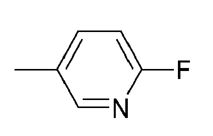

In einer weiteren hervorgehobenen Gruppe von Verbindungen der Formel (I-a) stehen R² und R³ für Wasserstoff, B für Sauerstoff und E für 6-Trifluormethyl-pyrid-3-yl-

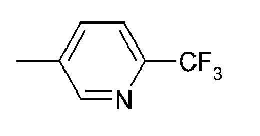

In einer weiteren hervorgehobenen Gruppe von Verbindungen der Formel (I-a) stehen R² und R³ für Wasserstoff, B für Sauerstoff und E für 2-Chlor-1,3-thiazol-5-yl-

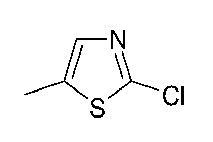

In einer weiteren hervorgehobenen Gruppe von Verbindungen der Formel (I-a) stehen R² und R³ für Wasserstoff, B für Methylen und E für 6-Chlor-pyrid-3-yl

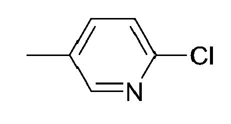

In einer weiteren hervorgehobenen Gruppe von Verbindungen der Formel (I-a) stehen R² und R³ für Wasserstoff, B für Methylen und E für 6-Brom-pyrid-3-yl

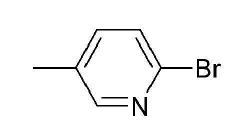

In einer weiteren hervorgehobenen Gruppe von Verbindungen der Formel (I-a) stehen R² und R³ für Wasserstoff, B für Methylen und E für 6-Fluor-pyrid-3-yl

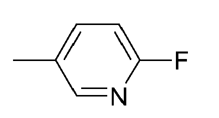

In einer weiteren hervorgehobenen Gruppe von Verbindungen der Formel (I-a) stehen R² und R³ für Wasserstoff, B für Methylen und E für 6-Trifluormethyl-pyrid-3-yl-

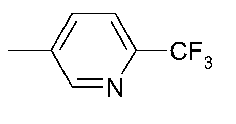

In einer weiteren hervorgehobenen Gruppe von Verbindungen der Formel (I-a) stehen R² und R³ für Wasserstoff, B für Methylen und E für 2-Chlor-1,3-thiazol-5-yl-

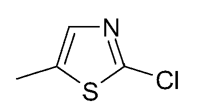

In einer weiteren hervorgehobenen Gruppe von Verbindungen der Formel (I-a) stehen R⁴ für Difluormethyl, R² und R³ für Wasserstoff und B für Sauerstoff.

In einer weiteren hervorgehobenen Gruppe von Verbindungen der Formel (I-a) stehen R⁴ für 2-Fluorethyl, R² und R³ für Wasserstoff und B für Sauerstoff.

In einer weiteren hervorgehobenen Gruppe von Verbindungen der Formel (I-a) stehen R⁴ für 2,2-Difluorethyl, R² und R³ für Wasserstoff und B für Sauerstoff.

In einer weiteren hervorgehobenen Gruppe von Verbindungen der Formel (I-a) stehen R⁴ für Difluormethyl, R² und R³ für Wasserstoff und B für Methylen.

In einer weiteren hervorgehobenen Gruppe von Verbindungen der Formel (I-a) stehen R⁴ für 2-Fluorethyl, R² und R³ für Wasserstoff und B für Methylen.

In einer weiteren hervorgehobenen Gruppe von Verbindungen der Formel (I-a) stehen R⁴ für 2,2-Difluorethyl, R² und R³ für Wasserstoff und B für Methylen.

Eine weitere bevorzugte Untergruppe der erfindungsgemässen Enaminocarbonylverbindungen sind solche der Formel (I-b) 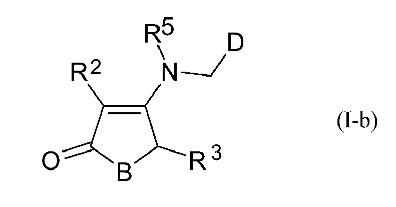 in welcher
- D: für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
- D: für einen Rest 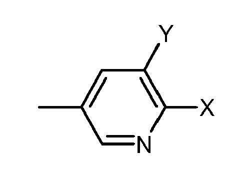
steht
in welchem
- X und Y: die oben angegebenen Bedeutungen haben,
- R⁵: für Wasserstoff, Alkyl, Alkenyl, Alkinyl, Cycloalkyl oder Alkoxy steht,
und R², R³ und B die oben angegebenen Bedeutungen haben.

Bevorzugte Substituenten bzw. Bereiche der in der oben und nachstehend erwähnten Formel (I-b) aufgeführten Reste werden im Folgenden erläutert.
- D: steht bevorzugt für 2-Chlor-pyrimidin-5-yl oder 2-Trifluormethyl-pyrimidin-5-yl,
des Weiteren steht
- D: bevorzugt für einen der Reste 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl, 5-Difluormethyl-6-iod-pyrid-3-yl.
- B: steht bevorzugt für Sauerstoff oder Methylen.
- R²: steht bevorzugt für Wasserstoff oder Halogen (wobei Halogen insbesondere für Fluor oder Chlor steht).
- R³: steht bevorzugt für Wasserstoff.
- R⁵: steht bevorzugt für C₁-C₄-Alkyl, C₂-C₄-Alkenyl, C₂-C₄-Alkinyl oder C₃-C₄-Cycloalkyl.
- D: steht besonders bevorzugt für 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brompyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl.
- B: steht besonders bevorzugt für Sauerstoff.
- R²: steht besonders bevorzugt für Wasserstoff.
- R³: steht besonders bevorzugt für Wasserstoff.
- D: steht ganz besonders bevorzugt für 5-Fluor-6-chlor-pyrid-3-yl oder 5-Fluor-6-brom-pyrid-3-yl.
- B: steht ganz besonders bevorzugt für Sauerstoff.
- R²: steht ganz besonders bevorzugt für Wasserstoff.
- R³: steht ganz besonders bevorzugt für Wasserstoff.
- R⁵: steht ganz besonders bevorzugt für Methyl, Ethyl, Propyl, Vinyl, Allyl, Propargyl oder Cyclopropyl.

In einer hervorgehobenen Gruppe von Verbindungen der Formel (I-b) stehen R³ für Wasserstoff, B für Sauerstoff und D für 2-Chlor-pyrimidin-5-yl,

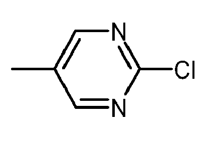

In einer weiteren hervorgehobenen Gruppe von Verbindungen der Formel (I-b) stehen R³ für Wasserstoff, B für Sauerstoff und D für 5-Fluor-6-chlor-pyrid-3-yl,

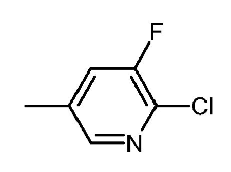

In einer weiteren hervorgehobenen Gruppe von Verbindungen der Formel (I-b) stehen R³ für Wasserstoff, B für Sauerstoff und D für 5,6-Dichlor-pyrid-3-yl

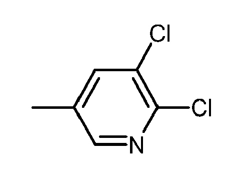

In einer weiteren hervorgehobenen Gruppe von Verbindungen der Formel (I-b) stehen R³ für Wasserstoff, B für Sauerstoff und D für 5-Brom-6-chlor-pyrid-3-yl

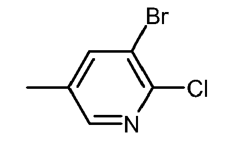

In einer weiteren hervorgehobenen Gruppe von Verbindungen der Formel (I-b) stehen R³ für Wasserstoff, B für Sauerstoff und D für 5-Methyl-6-chlor-pyrid-3-yl

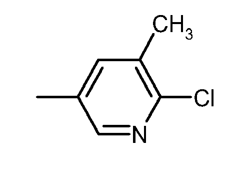

In einer weiteren hervorgehobenen Gruppe von Verbindungen der Formel (I-b) stehen R³ für Wasserstoff, B für Sauerstoff und D für 5-Fluor-6-brom-pyrid-3-yl

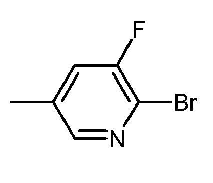

In einer weiteren hervorgehobenen Gruppe von Verbindungen der Formel (I-b) stehen R³ für Wasserstoff, B für Sauerstoff und D für 5-Chlor-6-brom-pyrid-3-yl

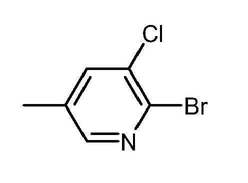

In einer weiteren hervorgehobenen Gruppe von Verbindungen der Formel (I-b) stehen R³ für Wasserstoff, B für Sauerstoff und D für 5-Chlor-6-iod-pyrid-3-yl

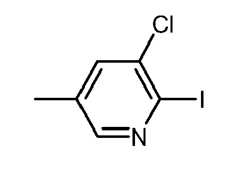

In einer hervorgehobenen Gruppe von Verbindungen der Formel (I-b) stehen R² und R³ für Wasserstoff, B für Sauerstoff und D für 2-Chlor-pyrimidin-5-yl,

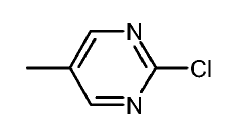

In einer weiteren hervorgehobenen Gruppe von Verbindungen der Formel (I-b) stehen R² und R³ für Wasserstoff, B für Sauerstoff und D für 5-Fluor-6-chlor-pyrid-3-yl,

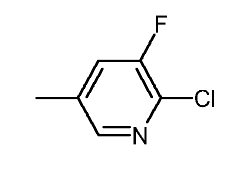

In einer weiteren hervorgehobenen Gruppe von Verbindungen der Formel (I-b) stehen R² und R³ für Wasserstoff, B für Sauerstoff und D für 5,6-Dichlor-pyrid-3-yl

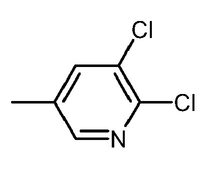

In einer weiteren hervorgehobenen Gruppe von Verbindungen der Formel (I-b) stehen R² und R³ für Wasserstoff, B für Sauerstoff und D für 5-Brom-6-chlor-pyrid-3-yl

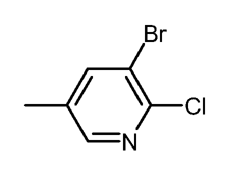

In einer weiteren hervorgehobenen Gruppe von Verbindungen der Formel (I-b) stehen R² und R³ für Wasserstoff, B für Sauerstoff und D für 5-Methyl-6-chlor-pyrid-3-yl

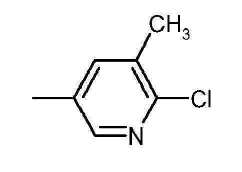

In einer weiteren hervorgehobenen Gruppe von Verbindungen der Formel (I-b) stehen R² und R³ für Wasserstoff, B für Sauerstoff und D für 5-Fluor-6-brom-pyrid-3-yl

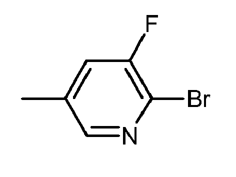

In einer weiteren hervorgehobenen Gruppe von Verbindungen der Formel (I-b) stehen R² und R³ für Wasserstoff, B für Sauerstoff und D für 5-Chlor-6-brom-pyrid-3-yl

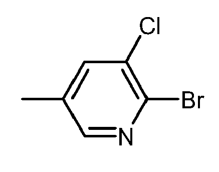

In einer weiteren hervorgehobenen Gruppe von Verbindungen der Formel (I-b) R² und R³ für Wasserstoff, B für Sauerstoff und D für 5-Chlor-6-iod-pyrid-3-yl

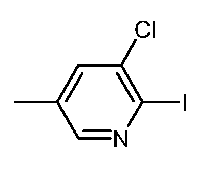

In einer hervorgehobenen Gruppe von Verbindungen der Formel (I-b) stehen R² und R³ für Wasserstoff, B für Methylen und D für 2-Chlor-pyrimidin-5-yl,

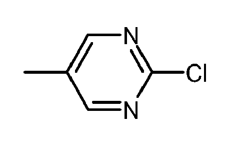

In einer weiteren hervorgehobenen Gruppe von Verbindungen der Formel (I-b) stehen R² und R³ für Wasserstoff, B für Methylen und D für 5-Fluor-6-chlor-pyrid-3-yl,

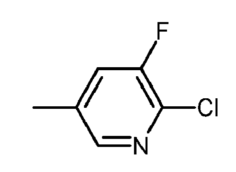

In einer weiteren hervorgehobenen Gruppe von Verbindungen der Formel (I-b) stehen R² und R³ für Wasserstoff, B für Methylen und D für 5,6-Dichlor-pyrid-3-yl

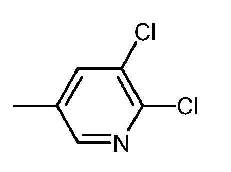

In einer weiteren hervorgehobenen Gruppe von Verbindungen der Formel (I-b) stehen R² und R³ für Wasserstoff, B für Methylen und D für 5-Brom-6-chlor-pyrid-3-yl

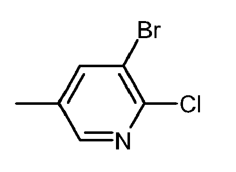

In einer weiteren hervorgehobenen Gruppe von Verbindungen der Formel (I-b) stehen R² und R³ für Wasserstoff, B für Methylen und D für 5-Methyl-6-chlor-pyrid-3-yl

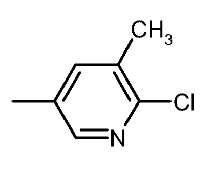

In einer weiteren hervorgehobenen Gruppe von Verbindungen der Formel (I-b) stehen R² und R³ für Wasserstoff, B für Methylen und D für 5-Fluor-6-brom-pyrid-3-yl

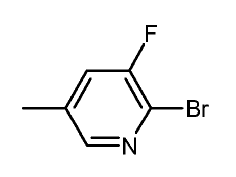

In einer weiteren hervorgehobenen Gruppe von Verbindungen der Formel (I-b) stehen R² und R³ für Wasserstoff, B für Methylen und D für 5-Chlor-6-brom-pyrid-3-yl

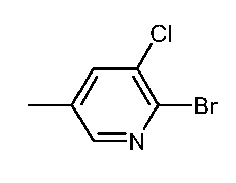

In einer weiteren hervorgehobenen Gruppe von Verbindungen der Formel (I-b) R² und R³ für Wasserstoff, B für Methylen und D für 5-Chlor-6-iod-pyrid-3-yl

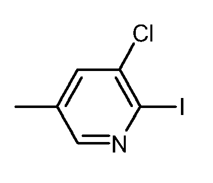

In einer weiteren hervorgehobenen Gruppe von Verbindungen der Formel (I-b) stehen R⁵ für Methyl, R² und R³ für Wasserstoff und B für Sauerstoff.

In einer weiteren hervorgehobenen Gruppe von Verbindungen der Formel (I-b) stehen R⁵ für Ethyl, R² und R³ für Wasserstoff und B für Sauerstoff.

In einer weiteren hervorgehobenen Gruppe von Verbindungen der Formel (I-b) stehen R⁵ für Cyclopropyl, R² und R³ für Wasserstoff und B für Sauerstoff.

In einer weiteren hervorgehobenen Gruppe von Verbindungen der Formel (I-b) stehen R⁵ für Methyl, R² und R³ für Wasserstoff und B für Methylen.

In einer weiteren hervorgehobenen Gruppe von Verbindungen der Formel (I-b) stehen R⁵ für Ethyl, R² und R³ für Wasserstoff und B für Methylen.

In einer weiteren hervorgehobenen Gruppe von Verbindungen der Formel (I-b) stehen R⁵ für Cyclopropyl, R² und R³ für Wasserstoff und B für Methylen.

Eine weitere bevorzugte Untergruppe der erfindungsgemässen Enaminocarbonylverbindungen sind solche der Formel (I-c) 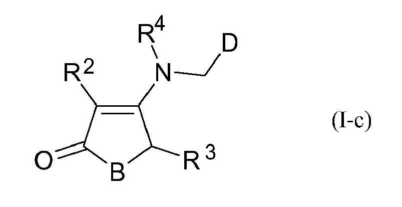 in welcher
- D: für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
- D: für einen Rest 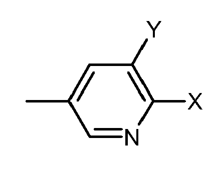
steht
in welchem
- X und Y: die oben angegebenen Bedeutungen haben,
- R⁴: für Halogenalkyl, Halogenalkenyl, Halogencycloalkyl oder Halogencycloalkylalkyl steht,
und R², R³ und B die oben angegebenen Bedeutungen haben.

Bevorzugte Substituenten bzw. Bereiche der in der oben und nachstehend erwähnten Formel (I-c) aufgeführten Reste werden im Folgenden erläutert.
- D: steht bevorzugt für 2-Chlor-pyrimidin-5-yl oder 2-Trifluormethyl-pyrimidin-5-yl,
des Weiteren steht
- D: bevorzugt für einen der Reste 5,6-Difluor-pyrid-3-yl, 5-Chlor-6-fluor-pyrid-3-yl, 5-Brom-6-fluor-pyrid-3-yl, 5-Iod-6-fluor-pyrid-3-yl, 5-Fluor-6-chlor-pyrid-3-yl, 5,6-dichlor-pyrid-3-yl, 5-Brom-6-chlor-pyrid-3-yl, 5-Iod-6-chlor-pyrid-3-yl, 5-Fluor-6-brom-pyrid-3-yl, 5-Chlor-6-brom-pyrid-3-yl, 5,6-Dibrom-pyrid-3-yl, 5-Fluor-6-iod-pyrid-3-yl, 5-Chlor-6-iod-pyrid-3-yl, 5-Brom-6-iod-pyrid-3-yl, 5-Methyl-6-fluor-pyrid-3-yl, 5-Methyl-6-chlor-pyrid-3-yl, 5-Methyl-6-brom-pyrid-3-yl, 5-Methyl-6-iod-pyrid-3-yl, 5-Difluormethyl-6-fluor-pyrid-3-yl, 5-Difluormethyl-6-chlor-pyrid-3-yl, 5-Difluormethyl-6-brom-pyrid-3-yl, 5-Difluormethyl-6-iod-pyrid-3-yl.
- B: steht bevorzugt für Sauerstoff oder Methylen.
- R²: steht bevorzugt für Wasserstoff oder Halogen (wobei Halogen insbesondere für Fluor oder Chlor steht).
- R³: steht bevorzugt für Wasserstoff.
- R⁴: steht bevorzugt für durch Fluor substituiertes C₁-C₅-Alkyl, C₂-C₅-Alkenyl, C₃-C₅-Cycloalkyl oder C₃-C₅-Cycloalkylalkyl.
- D: steht besonders bevorzugt für 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brompyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl.
- B: steht besonders bevorzugt für Sauerstoff.
- R²: steht besonders bevorzugt für Wasserstoff.
- R³: steht besonders bevorzugt für Wasserstoff.
- R⁴: steht besonders bevorzugt für 2-Fluor-ethyl, 2,2-Difluor-ethyl, 2-Fluor-cyclopropyl.
- D: steht ganz besonders bevorzugt für 5-Fluor-6-chlor-pyrid-3-yl oder 5-Fluor-6-brom-pyrid-3-yl.
- B: steht ganz besonders bevorzugt für Sauerstoff.
- R²: steht ganz besonders bevorzugt für Wasserstoff.
- R³: steht ganz besonders bevorzugt für Wasserstoff.
- R⁴: steht ganz besonders bevorzugt für 2,2-Difluor-ethyl.

In einer hervorgehobenen Gruppe von Verbindungen der Formel (I-c) stehen R³ für Wasserstoff, B für Sauerstoff und D für 2-Chlor-pyrimidin-5-yl,

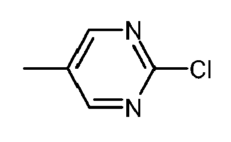

In einer weiteren hervorgehobenen Gruppe von Verbindungen der Formel (I-c) stehen R³ für Wasserstoff, B für Sauerstoff und D für 5-Fluor-6-chlor-pyrid-3-yl,

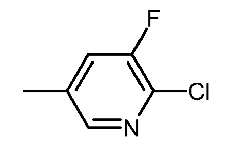

In einer weiteren hervorgehobenen Gruppe von Verbindungen der Formel (I-c) stehen R³ für Wasserstoff, B für Sauerstoff und D für 5,6-Dichlor-pyrid-3-yl

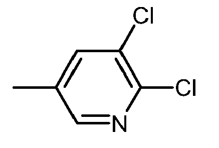

In einer weiteren hervorgehobenen Gruppe von Verbindungen der Formel (I-c) stehen R³ für Wasserstoff, B für Sauerstoff und D für 5-Brom-6-chlor-pyrid-3-yl

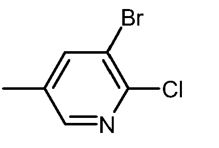

In einer weiteren hervorgehobenen Gruppe von Verbindungen der Formel (I-c) stehen R³ für Wasserstoff, B für Sauerstoff und D für 5-Methyl-6-chlor-pyrid-3-yl

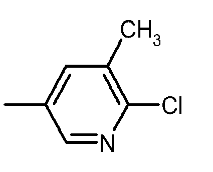

In einer weiteren hervorgehobenen Gruppe von Verbindungen der Formel (I-c) stehen R³ für Wasserstoff, B für Sauerstoff und D für 5-Fluor-6-brom-pyrid-3-yl

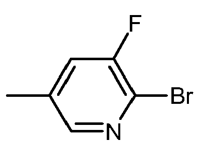

In einer weiteren hervorgehobenen Gruppe von Verbindungen der Formel (I-c) stehen R³ für Wasserstoff, B für Sauerstoff und D für 5-Chlor-6-brom-pyrid-3-yl

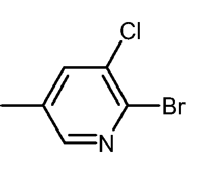

In einer weiteren hervorgehobenen Gruppe von Verbindungen der Formel (I-c) stehen R³ für Wasserstoff, B für Sauerstoff und D für 5-Chlor-6-iod-pyrid-3-yl

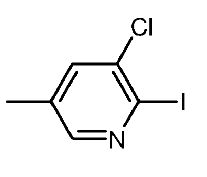

In einer hervorgehobenen Gruppe von Verbindungen der Formel (I-c) stehen R² und R³ für Wasserstoff, B für Sauerstoff und D für 2-Chlor-pyrimidin-5-yl,

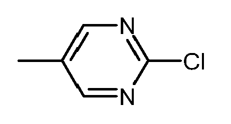

In einer weiteren hervorgehobenen Gruppe von Verbindungen der Formel (I-c) stehen R² und R³ für Wasserstoff, B für Sauerstoff und D für 5-Fluor-6-chlor-pyrid-3-yl,

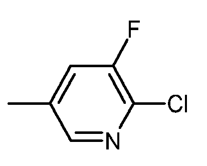

In einer weiteren hervorgehobenen Gruppe von Verbindungen der Formel (I-c) stehen R² und R³ für Wasserstoff, B für Sauerstoff und D für 5,6-Dichlor-pyrid-3-yl

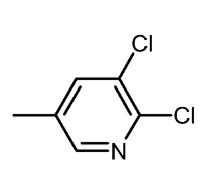

In einer weiteren hervorgehobenen Gruppe von Verbindungen der Formel (I-c) stehen R² und R³ für Wasserstoff, B für Sauerstoff und D für 5-Brom-6-chlor-pyrid-3-yl

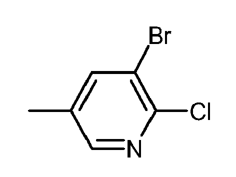

In einer weiteren hervorgehobenen Gruppe von Verbindungen der Formel (I-c) stehen R² und R³ für Wasserstoff, B für Sauerstoff und D für 5-Methyl-6-chlor-pyrid-3-yl

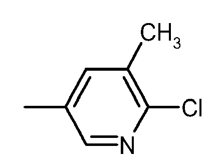

In einer weiteren hervorgehobenen Gruppe von Verbindungen der Formel (I-c) stehen R² und R³ für Wasserstoff, B für Sauerstoff und D für 5-Fluor-6-brom-pyrid-3-yl

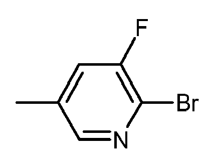

In einer weiteren hervorgehobenen Gruppe von Verbindungen der Formel (I-c) stehen R² und R³ für Wasserstoff, B für Sauerstoff und D für 5-Chlor-6-brom-pyrid-3-yl

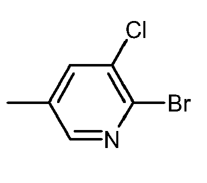

In einer weiteren hervorgehobenen Gruppe von Verbindungen der Formel (I-c) R² und R³ für Wasserstoff, B für Sauerstoff und D für 5-Chlor-6-iod-pyrid-3-yl

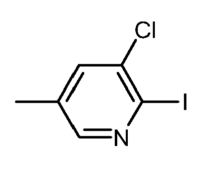

In einer hervorgehobenen Gruppe von Verbindungen der Formel (I-c) stehen R² und R³ für Wasserstoff, B für Methylen und D für 2-Chlor-pyrimidin-5-yl,

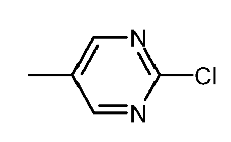

In einer weiteren hervorgehobenen Gruppe von Verbindungen der Formel (I-c) stehen R² und R³ für Wasserstoff, B für Methylen und D für 5-Fluor-6-chlor-pyrid-3-yl,

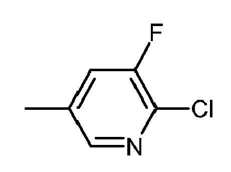

In einer weiteren hervorgehobenen Gruppe von Verbindungen der Formel (I-c) stehen R² und R³ für Wasserstoff, B für Methylen und D für 5,6-Dichlor-pyrid-3-yl

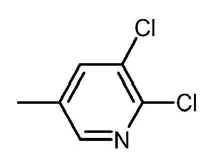

In einer weiteren hervorgehobenen Gruppe von Verbindungen der Formel (I-c) stehen R² und R³ für Wasserstoff, B für Methylen und D für 5-Brom-6-chlor-pyrid-3-yl

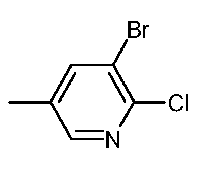

In einer weiteren hervorgehobenen Gruppe von Verbindungen der Formel (I-c) stehen R² und R³ für Wasserstoff, B für Methylen und D für 5-Methyl-6-chlor-pyrid-3-yl

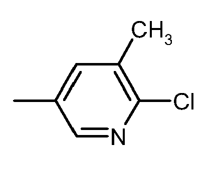

In einer weiteren hervorgehobenen Gruppe von Verbindungen der Formel (I-c) stehen R² und R³ für Wasserstoff, B für Methylen und D für 5-Fluor-6-brom-pyrid-3-yl

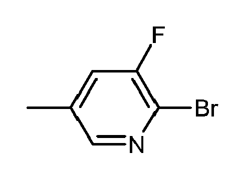

In einer weiteren hervorgehobenen Gruppe von Verbindungen der Formel (I-c) stehen R² und R³ für Wasserstoff, B für Methylen und D für 5-Chlor-6-brom-pyrid-3-yl

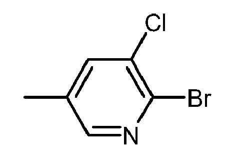

In einer weiteren hervorgehobenen Gruppe von Verbindungen der Formel (I-c) R² und R³ für Wasserstoff, B für Methylen und D für 5-Chlor-6-iod-pyrid-3-yl

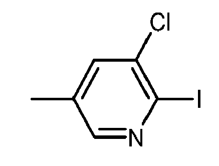

In einer weiteren hervorgehobenen Gruppe von Verbindungen der Formel (I-c) stehen R⁴ für Difluormethyl, R² und R³ für Wasserstoff und B für Sauerstoff.

In einer weiteren hervorgehobenen Gruppe von Verbindungen der Formel (I-c) stehen R⁴ für 2-Fluorethyl, R² und R³ für Wasserstoff und B für Sauerstoff.

In einer weiteren hervorgehobenen Gruppe von Verbindungen der Formel (I-c) stehen R⁴ für 2,2-Difluorethyl, R² und R³ für Wasserstoff und B für Sauerstoff

In einer weiteren hervorgehobenen Gruppe von Verbindungen der Formel (I-c) stehen R⁴ für Difluormethyl, R² und R³ für Wasserstoff und B für Methylen.

In einer weiteren hervorgehobenen Gruppe von Verbindungen der Formel (I-c) stehen R⁴ für 2-Fluorethyl, R² und R³ für Wasserstoff und B für Methylen.

In einer weiteren hervorgehobenen Gruppe von Verbindungen der Formel (I-c) stehen R⁴ für 2,2-Difluorethyl, R² und R³ für Wasserstoff und B für Methylen.

Eine bevorzugte Untergruppe der erfindungsgemässen Enaminocarbonylverbindungen sind solche der Formel (I-d) 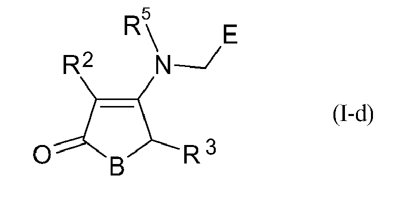 in welcher
- E: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl,
- R⁵: für C₂-C₄ -Alkyl, Alkenyl, Alkinyl, Cycloalkyl oder Alkoxy steht,
und R², R³ und B die oben angegebenen Bedeutungen haben.

Bevorzugte Substituenten bzw. Bereiche der in der oben und nachstehend erwähnten Formel (I-d) aufgeführten Reste werden im Folgenden erläutert.
- E: steht bevorzugt für 6-Fluor-pyrid-3-yl, 6-Chlor-pyrid-3-yl, 6-Brom-pyrid-3-yl, 6-Methyl-pyrid-3-yl, 6-Trifluormethyl-pyrid-3-yl, 6-Trifluormethoxypyrid-3-yl, 6-Chlor-1,4-pyridazin-3-yl, 6-Methyl-1,4-pyridazin-3-yl, 2-Chlor-1,3-thiazol-5-yl oder 2-Methyl-1,3-thiazol-5-yl.
- B: steht bevorzugt für Sauerstoff oder Methylen.
- R²: steht bevorzugt für Wasserstoff oder Halogen (wobei Halogen insbesondere für Fluor oder Chlor steht),
- R³: steht bevorzugt für jeweils Wasserstoff oder Methyl.
- R⁵: steht bevorzugt für C₂-C₄-Alkyl, C₂-C₄-Alkenyl, C₂-C₄-Alkinyl oder C₃-C₄-Cycloalkyl.
- E: steht besonders bevorzugt für den Rest 6-Fluor-pyrid-3-yl, 6-Chlor-pyrid-3-yl, 6-Brompyrid-3-yl, 6-Chlor-1,4-pyridazin-3-yl, 2-Chlor-1,3-thiazol-5-yl,
- B: steht besonders bevorzugt für Sauerstoff oder Methylen.
- R²: steht besonders bevorzugt für Wasserstoff.
- R³: steht besonders bevorzugt für Wasserstoff.
- R⁵: steht besonders bevorzugt für Ethyl, Propyl, Vinyl, Allyl, Propargyl oder Cyclopropyl.
- E: steht ganz besonders bevorzugt für den Rest 6-Chlor-pyrid-3-yl, 6-Brom-pyrid-3-yl, oder 6-Chlor-1,4-pyridazin-3-yl,
- B: steht ganz besonders bevorzugt für Sauerstoff.
- R²: steht ganz besonders bevorzugt für Wasserstoff.
- R³: steht ganz besonders bevorzugt für Wasserstoff.
- R⁵: steht ganz besonders bevorzugt für Ethyl oder Cyclopropyl.

In einer hervorgehobenen Gruppe von Verbindungen der Formel (I-d) steht E für 6-Chlor-pyrid-3-yl

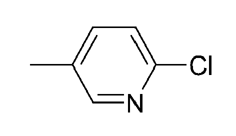

In einer weiteren hervorgehobenen Gruppe von Verbindungen der Formel (I-d) steht E für 6-Brompyrid-3-yl

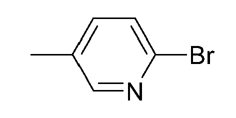

In einer weiteren hervorgehobenen Gruppe von Verbindungen der Formel (I-d) steht E für 6-Chlor-1,4-pyridazin-3-yl-

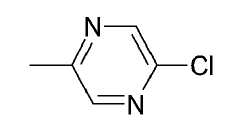

In einer weiteren hervorgehobenen Gruppe von Verbindungen der Formel (I-d) steht E für 2-Chlor-1,3-thiazol-5-yl-

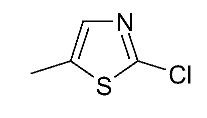

Im Folgenden ist eine weitere Gruppe bevorzugter Verbindungen der Formel (I-d) definiert, in welcher
- E: für Pyrid-3-yl, welches in 6-Position durch Fluor, Chlor, Brom, Methyl oder Trifluormethyl substituiert ist oder für 2-Chlor-pyrazin-5-yl oder für 2-Chlor-1,3-thiazol-5-yl steht,
- B: für Sauerstoff, Schwefel oder Methylen steht,
- R²: für Wasserstoff oder Halogen steht,
- R³: für Wasserstoff oder Methyl steht,
- R⁵: für C₂-C₄ -Alkyl, Alkenyl, Alkinyl, Cycloalkyl oder Alkoxy steht,
- E: bevorzugt für 6-Fluor-pyrid-3-yl, 6-Chlor-pyrid-3-yl, 6-Brom-pyrid-3-yl, 6-Trifluormethylpyrid-3-yl, 2-Chlor-pyrazin-5-yl oder 2-Chlor-1,3-thiazol-5-yl steht,
- B: bevorzugt für Sauerstoff oder Methylen steht,
- R²: bevorzugt für Wasserstoff oder Halogen steht (wobei Halogen insbesondere für Fluor oder Chlor steht),
- R³: bevorzugt für jeweils Wasserstoff steht,
- R⁵: bevorzugt für C₂-C₄-Alkyl, C₂-C₄-Alkenyl, C₂-C₄-Alkinyl oder C₃-C₄-Cycloalkyl steht,
- E: besonders bevorzugt für den Rest 6-Chlor-pyrid-3-yl oder 6-Brom-pyrid-3-yl steht,
- B: besonders bevorzugt für Sauerstoff steht,
- R²: besonders bevorzugt für Wasserstoff steht,
- R³: besonders bevorzugt für Wasserstoff,
- R⁵: besonders bevorzugt für Ethyl, Propyl, Vinyl, Allyl, Propargyl oder Cyclopropyl steht,
- E: ganz besonders bevorzugt für den Rest 6-Chlor-pyrid-3-yl oder 6-Brom-pyrid-3-yl steht,
- B: ganz besonders bevorzugt für Sauerstoff steht,
- R²: ganz besonders bevorzugt für Wasserstoff steht,
- R³: ganz besonders bevorzugt für Wasserstoff steht und
- R⁵: ganz besonders bevorzugt für Ethyl oder Cyclopropyl steht.

In einer hervorgehobenen Gruppe von Verbindungen der Formel (I-d) stehen R³ für Wasserstoff, B für Sauerstoff und E für 6-Chlor-pyrid-3-yl

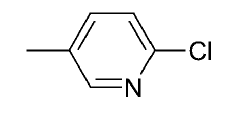

In einer weiteren hervorgehobenen Gruppe von Verbindungen der Formel (I-d) stehen R³ für Wasserstoff, B für Sauerstoff und E für 6-Brom-pyrid-3-yl

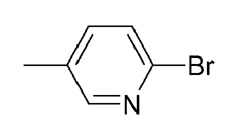

In einer weiteren hervorgehobenen Gruppe von Verbindungen der Formel (I-d) stehen R³ für Wasserstoff, B für Sauerstoff und E für 6-Fluor-pyrid-3-yl

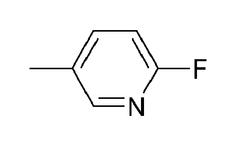

In einer weiteren hervorgehobenen Gruppe von Verbindungen der Formel (I-d) stehen R³ für Wasserstoff, B für Sauerstoff und E für 6-Trifluormethyl-pyrid-3-yl-

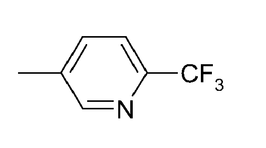

In einer weiteren hervorgehobenen Gruppe von Verbindungen der Formel (I-d) stehen R³ für Wasserstoff, B für Sauerstoff und E für 2-Chlor-1,3-thiazol-5-yl-

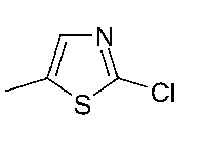

In einer weiteren hervorgehobenen Gruppe von Verbindungen der Formel (I-d) stehen R² und R³ für Wasserstoff, B für Sauerstoff und E für 6-Chlor-pyrid-3-yl

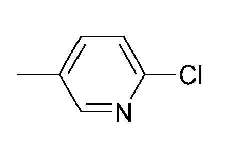

In einer weiteren hervorgehobenen Gruppe von Verbindungen der Formel (I-d) stehen R² und R³ für Wasserstoff, B für Sauerstoff und E für 6-Brom-pyrid-3-yl

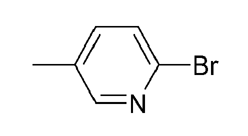

In einer weiteren hervorgehobenen Gruppe von Verbindungen der Formel (I-d) stehen R² und R³ für Wasserstoff, B für Sauerstoff und E für 6-Fluor-pyrid-3-yl

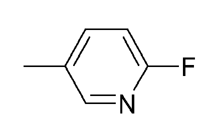

In einer weiteren hervorgehobenen Gruppe von Verbindungen der Formel (I-d) stehen R² und R³ für Wasserstoff, B für Sauerstoff und E für 6-Trifluormethyl-pyrid-3-yl-

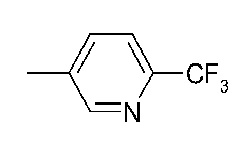

In einer weiteren hervorgehobenen Gruppe von Verbindungen der Formel (I-d) stehen R² und R³ für Wasserstoff, B für Sauerstoff und E für 2-Chlor-1,3-thiazol-5-yl-

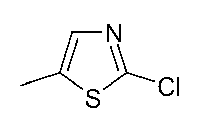

In einer weiteren hervorgehobenen Gruppe von Verbindungen der Formel (I-d) stehen R² und R³ für Wasserstoff, B für Methylen und E für 6-Chlor-pyrid-3-yl

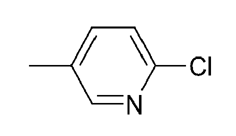

In einer weiteren hervorgehobenen Gruppe von Verbindungen der Formel (I-d) stehen R² und R³ für Wasserstoff, B für Methylen und E für 6-Brom-pyrid-3-yl

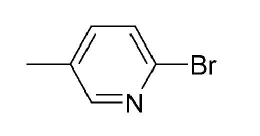

In einer weiteren hervorgehobenen Gruppe von Verbindungen der Formel (I-d) stehen R² und R³ für Wasserstoff, B für Methylen und E für 6-Fluor-pyrid-3-yl

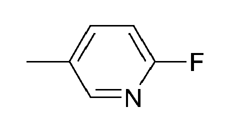

In einer weiteren hervorgehobenen Gruppe von Verbindungen der Formel (I-d) stehen R² und R³ für Wasserstoff, B für Methylen und E für 6-Trifluormethyl-pyrid-3-yl-

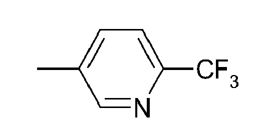

In einer weiteren hervorgehobenen Gruppe von Verbindungen der Formel (I-d) stehen R² und R³ für Wasserstoff, B für Methylen und E für 2-Chlor-1,3-thiazol-5-yl-

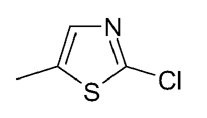

In einer weiteren hervorgehobenen Gruppe von Verbindungen der Formel (I-d) stehen R⁵ für Ethyl, R² und R³ für Wasserstoff und B für Sauerstoff.

In einer weiteren hervorgehobenen Gruppe von Verbindungen der Formel (I-d) stehen R⁵ für Cyclopropyl, R² und R³ für Wasserstoff und B für Sauerstoff.

In einer weiteren hervorgehobenen Gruppe von Verbindungen der Formel (I-d) stehen R⁵ für Ethyl, R² und R³ für Wasserstoff und B für Methylen.

In einer weiteren hervorgehobenen Gruppe von Verbindungen der Formel (I-d) stehen R⁵ für Cyclopropyl, R² und R³ für Wasserstoff und B für Methylen.

Im Einzelnen seien die folgenden Verbindungen der allgemeinen Formel (I) genannt:
- Verbindung (I-1), 4-{[(6-Brompyrid-3-yl)methyl](2-fluorethyl)amino}furan-2(5H)-on, besitzt die Formel 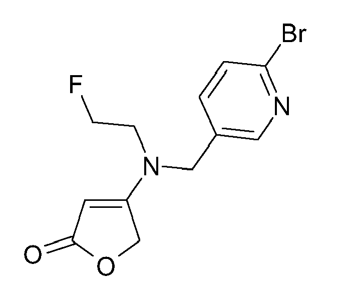 und ist bekannt aus der internationalen Patentanmeldung PCT/EP2007/002386.
- Verbindung (I-2), 4-{[(6-Brompynd-3-yl)methyl](2,2-difluorethyl)amino}furan-2(5H)-on, besitzt die Formel 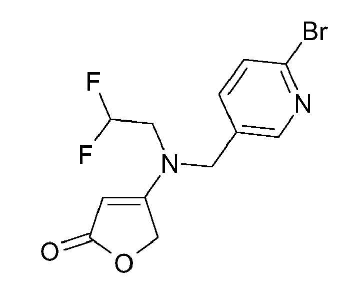 und ist bekannt aus der internationalen Patentanmeldung PCT/EP2007/002386.
- Verbindung (I-3), 4-{[(6-Fluorpynd-3-yl)methyl](2,2-difluorethyl)amino}furan-2(5H)-on, besitzt die Formel 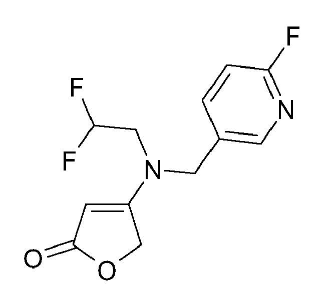 und ist bekannt aus der internationalen Patentanmeldung PCT/EP2007/002386.
   Verbindung (I-4), 4-{[(2-Chlor-1,3-thiazol-5-yl)methyl](2-fluorethyl)amino}furan-2(5H)-on, besitzt die Formel 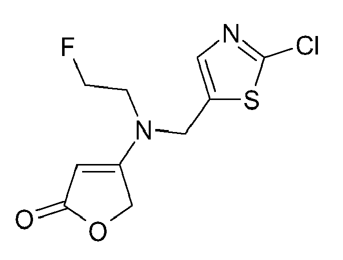 und ist bekannt aus der internationalen Patentanmeldung PCT/EP2007/002386.
- Verbindung (I-5), 3-Chlor-4-{[(6-chlorpyrid-3-yl)methyl](2-fluorethyl)amino}furan-2(5H)-on, besitzt die Formel 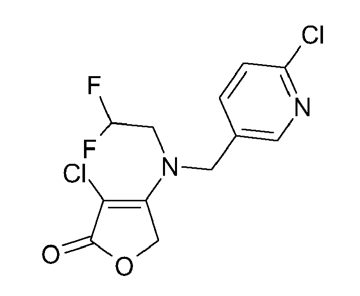 und ist bekannt aus der internationalen Patentanmeldung PCT/EP2007/002386.
- Verbindung (1-6), 4-{[(6-Chlorpyrid-3-yl)methyl](2-fluorethyl)amino}furan-2(5H)-on, besitzt die Formel 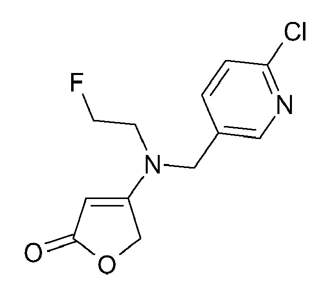 und ist bekannt aus der internationalen Patentanmeldung PCT/EP2007/002386.
- Verbindung (I-7), 4-{[(6-Chlorpyrid-3-yl)methyl](2,2-difluorethyl)amino}furan-2(5H)-on, besitzt die Formel 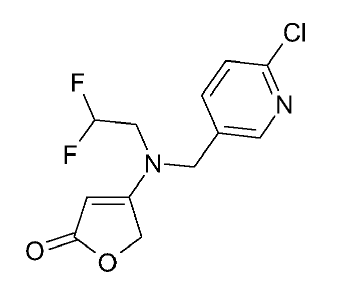 und ist bekannt aus der internationalen Patentanmeldung PCT/EP2007/002386.
- Verbindung (I-8), 4-{[(6-Chlor-5-fluorpyrid-3-yl)methyl](methyl)amino}furan-2(5H)-on, besitzt die Formel 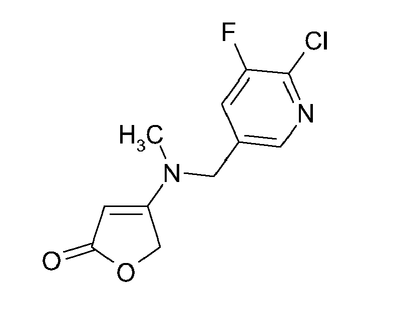 und ist bekannt aus der internationalen Patentanmeldung PCT/EP2007/002385
- Verbindung (I-9), 4-{[(5,6-Dichlorpynd-3-yl)methyl](cyclopropyl)amino}furan-2(5H)-on, besitzt die Formel 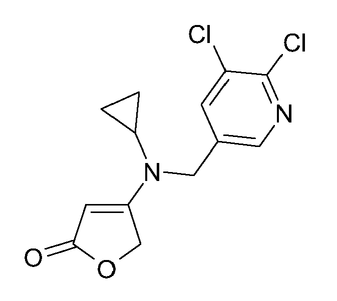 und ist bekannt aus der internationalen Patentanmeldung PCT/EP2007/002385
- Verbindung (I-10), 4-{[(5,6-Dichlorpynd-3-yl)methyl](methyl)amino}furan-2(5H)-on, besitzt die Formel 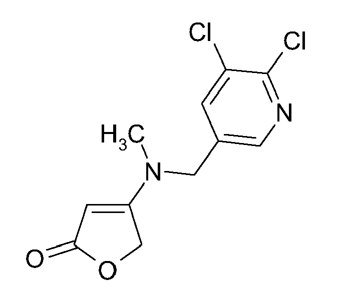 und ist bekannt aus der internationalen Patentanmeldung PCT/EP2007/002385
- Verbindung (I-11), 4-{[(6-Brom-5-fluorpyrid-3-yl)methyl](methyl)amino}furan-2(5H)-on, besitzt die Formel 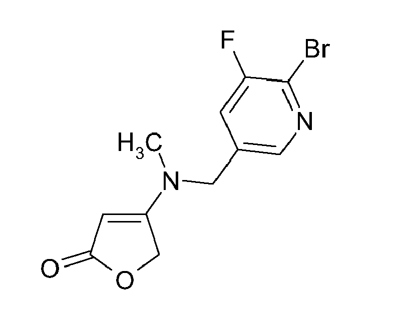 und ist bekannt aus der internationalen Patentanmeldung PCT/EP2007/002385
- Verbindung (I-12), 4-{[(6-Brom-5-fluorpyrid-3-yl)methyl](cyclopropyl)amino}furan-2(5H)-on, besitzt die Formel 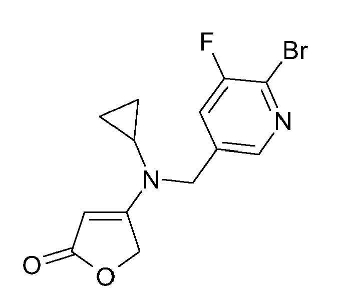 und ist bekannt aus der internationalen Patentanmeldung PCT/EP2007/002385
- Verbindung (I-13), 4-{[(6-Chlor-5-fluorpyrid-3-yl)methyl](cyclopropyl)amino}furan-2(5H)-on, besitzt die Formel 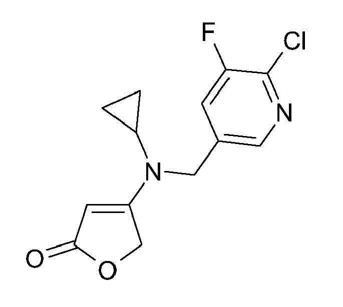 und ist bekannt aus der internationalen Patentanmeldung PCT/EP2007/002385
- Verbindung (I-14), 4-{[(5,6-Dichlorpyrid-3-yl)methyl](2-fluorethyl)amino}furan-2(5H)-on, besitzt die Formel 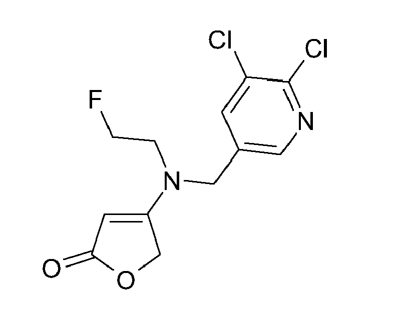 und ist bekannt aus der internationalen Patentanmeldung PCT/EP2007/002392.
- Verbindung (I-15), 4-{[(5,6-Dichlorpyrid-3-yl)methyl](2-fluorethyl)amino}furan-2(5H)-on, besitzt die Formel 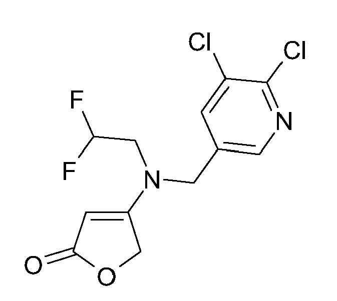 und ist bekannt aus der internationalen Patentanmeldung PCT/EP2007/002392.
- Verbindung (I-16), 4-{[(6-Brom-5-fluorpyrid-3-yl)methyl](2,2-difluorethyl)amino}furan-2(5H)-on, besitzt die Formel 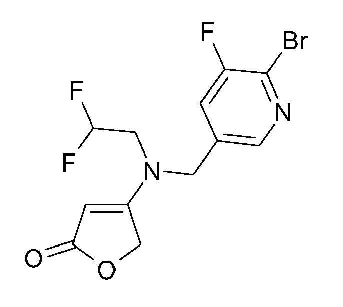 und ist bekannt aus der internationalen Patentanmeldung PCT/EP2007/002392.
- Verbindung (I-17), 4-{[(6-Chlor-5-fluorpyrid-3-yl)methyl](2,2-difluorethyl)amino}furan-2(5H)-on, besitzt die Formel 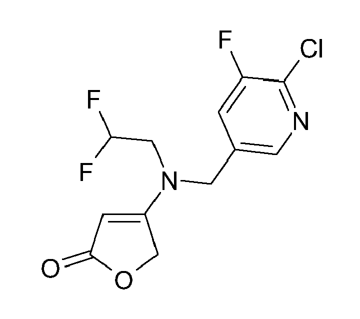 und ist bekannt aus der internationalen Patentanmeldung PCT/EP2007/002392.
- Verbindung (I-18), 3-{[(6-Chloropyrid-3-yl)methyl](methyl)amino}cyclopent-2-en-1-on,besitzt die Formel 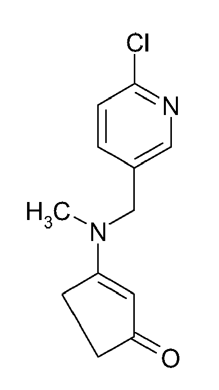 und ist bekannt aus EP 0 539 588.
- Verbindung (I-19), 3-{[(6-Chloropyrid-3-yl)methyl](cyclopropyl)amino}cyclopent-2-en-1-on, besitzt die Formel 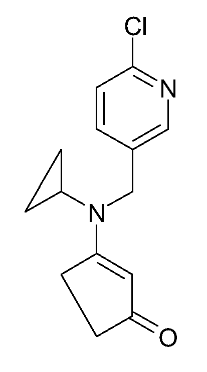 und ist bekannt aus EP 0 539 588.
- Verbindung (I-20), 4-{[(2-Chlor-2,3-dihydro-1,3-thiazol-5-yl)methyl](methyl) amino}furan-2(5H)-on, besitzt die Formel 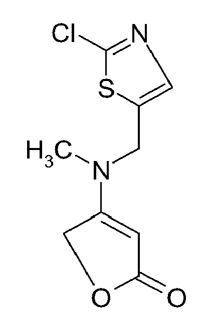 und ist bekannt aus EP 0 539 588.
- Verbindung (I-21), 4-[Methyl(pyrid-3-ylmethyl)amino]furan-2(5H)-on, besitzt die Formel 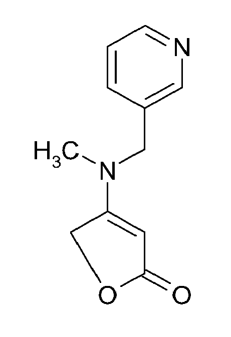 und ist bekannt aus EP 0 539 588.
- Verbindung (I-22), 4-{Cyclopropyl[(6-fluorpyrid-3-yl)methyl]amino}furan-2(5H)-on, besitzt die Formel 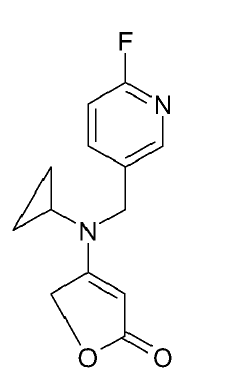 und ist bekannt aus EP 0 539 588.
- Verbindung (I-23), 4-(Methyl{[6-(trifluormethyl)pyrid-3-yl]methyl}amino)furan-2(5H)-on, besitzt die Formel 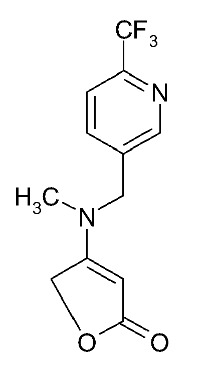 und ist bekannt aus EP 0 539 588.
- Verbindung (I-24), 4-(Cyclopropyl{[6-(trifluormethyl)pyrid-3-yl]methyl}amino) furan-2(5H)-on, besitzt die Formel 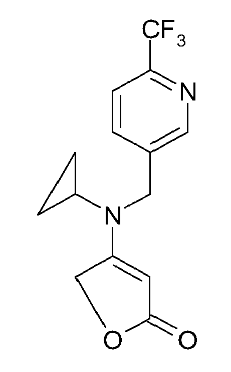 und ist bekannt aus EP 0 539 588.
- Verbindung (I-25), 4-{[(6-Chloropyrid-3-yl)methyl](methyl)amino}-5-methylfuran-2(5H)-on, besitzt die Formel 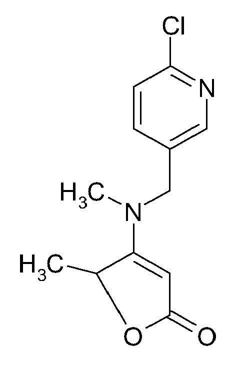 und ist bekannt aus EP 0 539 588.
- Verbindung (I-26), 4-{[(6-Brompynd-3-yl)methyl](methyl)amino}furan-2(5H)-on, besitzt die Formel 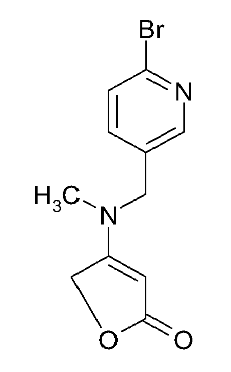 und ist bekannt aus EP 0 539 588.
- Verbindung (I-27), 4-{[(6-Chloropyrid-3-yl)methyl](methyl)amino}thiophen-2(5H)-on, besitzt die Formel 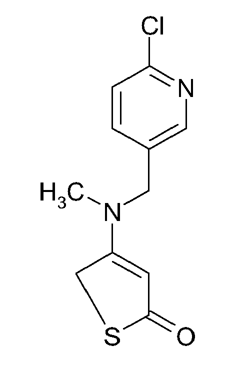 und ist bekannt aus EP 0 539 588.
- Verbindung (I-28), 4-{[(6-Chlorpyrid-3-yl)methyl](methyl)amino}-3-fluorofuran-2(5H)-on, besitzt die Formel 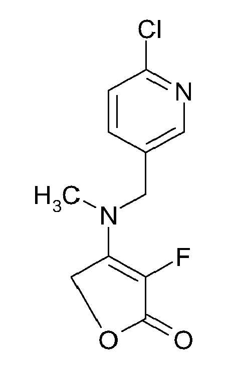 und ist bekannt aus EP 0 539 588.
- Verbindung (I-29), 4-{[(6-Chloropyrid-3-yl)methyl](methoxy)amino}furan-2(5H)-on, besitzt die Formel 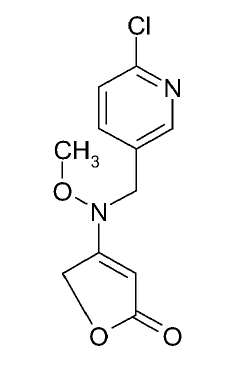 und ist bekannt aus EP 0 539 588.
- Verbindung (I-30), 4-{[(6-Chloropynd-3-yl)methyl](ethyl)amino}furan-2(5H)-on, besitzt die Formel 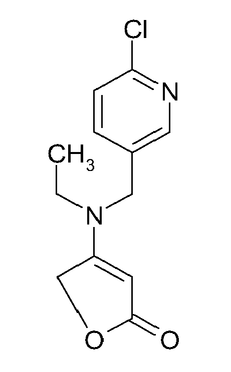 und ist bekannt aus EP 0 539 588.
- Verbindung (I-31), 4-{[(6-Chlorpyrid-3-yl)methyl](cyclopropyl)amino}furan-2(5H)-on, besitzt die Formel 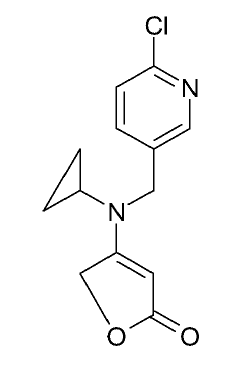 und ist bekannt aus EP 0 539 588.
- Verbindung (I-32), 4-{Allyl[(6-chlorpyrid-3-yl)methyl]amino}furan-2(5H)-on, besitzt die Formel 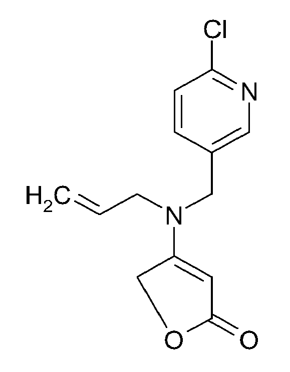 und ist bekannt aus EP 0 539 588.
- Verbindung (I-33), 4-{[(6-Chlorpyrid-3-yl)methyl](prop-2-in-1-yl)amino}furan-2(5H)-on, besitzt die Formel 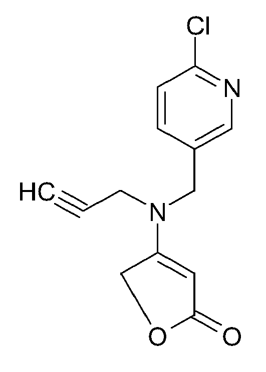 und ist bekannt aus EP 0 539 588.
- Verbindung (1-34), 3-{[(6-Chlorpynd-3-yl)methyl](propyl)amino}cyclohex-2-en-1-on, besitzt die Formel 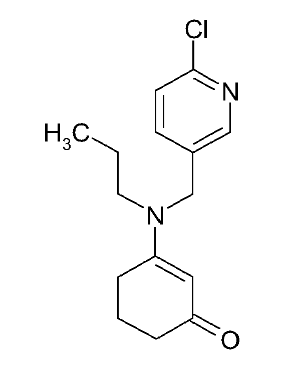 und ist bekannt aus EP 0 539 588.
- Verbindung (I-35), 3-{Allyl[(6-chlorpyrid-3-yl)methyl]amino}cyclohex-2-en-1-on,besitzt die Formel 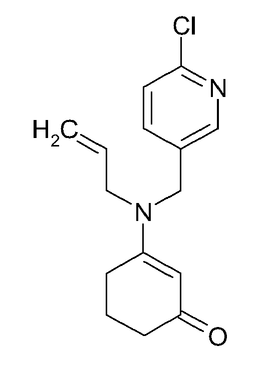 und ist bekannt aus EP 0 539 588.
- Verbindung (I-36), 3-{[(6-Chlorpyrid-3-yl)methyl](prop-2-in-1-yl)amino}cyclohex-2-en-1-on, besitzt die Formel 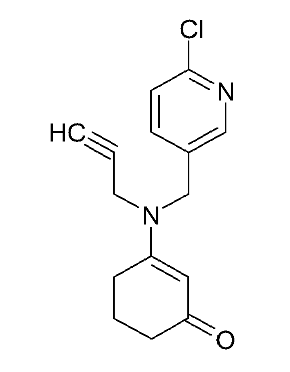 und ist bekannt aus EP 0 539 588.
- Verbindung (I-37), 3-{[(6-Chlorpyrid-3-yl)methyl]amino}cyclohex-2-en-1-on, besitzt die Formel 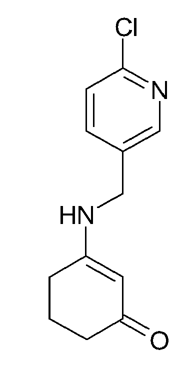 und ist bekannt aus EP 0 539 588.
- Verbindung (I-38), 3-{[(6-Chlorpyrid-3-yl)methyl](methyl)amino}cyclohex-2-en-1-on, besitzt die Formel 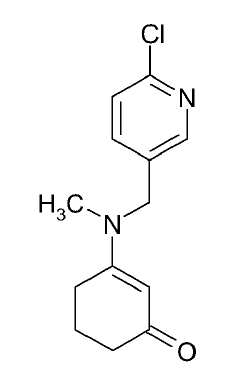 und ist bekannt aus EP 0 539 588.
- Verbindung (I-39), 3-{[(6-Chlorpyrid-3-yl)methyl](ethyl)amino}cyclohex-2-en-1-on, besitzt die Formel 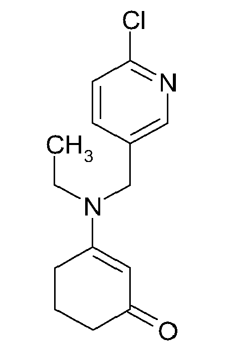 und ist bekannt aus EP 0 539 588.

Durch Halogen substituierte Reste, z.B. Haloalkyl, sind einfach oder mehrfach bis zur maximal möglichen Substituentenzahl halogeniert. Bei mehrfacher Halogenierung können die Halogenatome gleich oder verschieden sein. Halogen steht dabei für Fluor, Chlor, Brom oder Iod, insbesondere für Fluor, Chlor oder Brom.

Bevorzugt, besonders bevorzugt oder ganz besonders bevorzugt sind Verbindungen, welche jeweils die unter bevorzugt, besonders bevorzugt oder ganz besonders bevorzugt genannten Substituenten tragen.

Gesättigte oder ungesättigte Kohlenwasserstoffreste wie Alkyl oder Alkenyl können, auch in Verbindung mit Heteroatomen, wie z.B. in Alkoxy, soweit möglich, jeweils geradkettig oder verzweigt sein.

Gegebenenfalls substituierte Reste können einfach oder mehrfach substituiert sein, wobei bei Mehrfachsubstitutionen die Substituenten gleich oder verschieden sein können.

Die oben aufgeführten allgemeinen oder in Vorzugsbereichen aufgeführten Restedefinitionen bzw. Erläuterungen können jedoch auch untereinander, also zwischen den jeweiligen Bereichen und Vorzugsbereichen beliebig kombiniert werden.

Die Wirkstoffe können in den erfindungsgemäßen Zusammensetzungen in einem breiten Konzentrationsbereich eingesetzt werden. Die Konzentration der Wirkstoffe in der Formulierung beträgt dabei üblicherweise 0,1 - 50 Gew.-%.

In der Literatur wurde bereits beschrieben, dass sich die Wirkung verschiedener Wirkstoffe durch Zugabe von Ammonium- oder Phosphoniumsalzen steigern lässt. Dabei handelt es sich jedoch um als Detergens wirkende Salze (z.B. WO 95/017817) bzw. Salze mit längeren Alkyl- und / oder Arylsubstituenten, die permeabilisierend wirken oder die Löslichkeit des Wirkstoffs erhöhen (z.B. EP-A 0 453 086, EP-A 0 664 081, FR-A 2 600 494, US 4 844 734, US 5 462 912, US 5 538 937, US-A 03/0224939, US-A 05/0009880, US-A 05/0096386). Weiterhin beschreibt der Stand der Technik die Wirkung nur für bestimmte Wirkstoffe und / oder bestimmte Anwendungen der entsprechenden Mittel. In wieder anderen Fällen handelt es sich um Salze von Sulfonsäuren, bei denen die Säuren selber paralysierend auf Insekten wirken (US 2 842 476). Eine Wirkungssteigerung durch Ammoniumsulfat ist für die Herbizide Glyphosat und Phosphinothricin beschrieben (US 6 645 914, EP-A 0 036 106). Eine entsprechende Wirkung bei den erfindungsgemäßen Insektiziden wird durch diesen Stand der Technik weder offenbart noch nahe gelegt.

Auch der Einsatz von Ammoniumsulfat als Formulierhilfsmittel ist für bestimmte Wirkstoffe und Anwendungen beschrieben (WO 92/16108), es dient dort aber zur Stabilisierung der Formulierung, nicht zur Wirkungssteigerung.

Es wurde nun völlig überraschend gefunden, dass sich die Wirkung von insektiziden Enaminocarbonylverbindungen durch den Zusatz von Ammonium- und/oder Phosphoniumsalzen zur Anwendungslösung (Tankmix-Anwendung) oder durch den Einbau dieser Salze in eine Formulierung enthaltend solche Insektizide, deutlich steigern lässt. Gegenstand der vorliegenden Erfindung ist also die Verwendung von Ammonium- und/oder Phosphoniumsalzen zur Wirkungssteigerung von Pflanzenschutzmitteln, die insektizid wirksame Enaminocarbonylverbindungen enthalten. Gegenstand der Erfindung sind ebenfalls Mittel, die solche Insektizide und die Wirkung steigernde Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Ammonium- und Phosphoniumsalze, die erfindungsgemäß die Wirkung von Pflanzenschutzmitteln enthaltend Enaminocarbonylverbindungen steigern, werden durch Formel (II) definiert 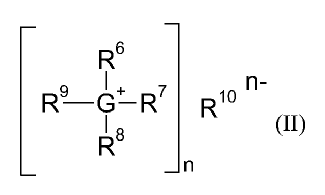 in welcher
- G: für Stickstoff oder Phosphor steht,
- G: bevorzugt für Stickstoff steht,
- R⁶, R⁷, R⁸ und R⁹: unabhängig voneinander für Wasserstoff oder jeweils gegebenenfalls substituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
- R⁶, R⁷, R⁸ und R⁹: bevorzugt unabhängig voneinander für Wasserstoff oder jeweils gegebenenfalls substituiertes C₁-C₄-Alkyl stehen, wobei die Substituenten aus Halogen, Nitro und Cyano ausgewählt sein können,
- R⁶, R⁷, R⁸ und R⁹: besonders bevorzugt unabhängig voneinander für Wasserstoff, Methyl, Ethyl, n-Propyl, i-Propyl, n-Butyl, i-Butyl, s-Butyl oder t-Butyl stehen,
- R⁶, R⁷, R⁸ und R⁹: ganz besonders bevorzugt für Wasserstoff stehen,
- R⁶, R⁷, R⁸ und R⁹: weiterhin ganz besonders bevorzugt gleichzeitig für Methyl oder gleichzeitig für Ethyl stehen,
- n: für 1, 2, 3 oder 4 steht,
- n: bevorzugt für 1 oder 2 steht,
- R¹⁰: für ein anorganisches oder organisches Anion steht,
- R¹⁰: bevorzugt für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat, Oxalat, Carbonat, Pentaborat, Sulfit, Benzoat, Hydrogenoxalat, Hydrogencitrat, Methylsulfat oder Tetrafluoroborat steht,
- R¹⁰: besonders bevorzugt für Laktat, Sulfat, Nitrat, Thiosulfat, Thiocyanat, Citrat, Oxalat, Formiat, Monohydrogenphosphat oder Dihydrogenphosphat steht und
- R¹⁰: ganz besonders bevorzugt für Sulfat steht.

Die Ammonium- und Phosphoniumsalze der Formel (II) können in einem breiten Konzentrationsbereich zur Steigerung der Wirkung von Pflanzenschutzmitteln enthaltend Enaminocarbonylverbindungen eingesetzt werden. Im Allgemeinen werden die Ammonium- oder Phosphoniumsalze im anwendungsfertigen Pflanzenschutzmittel in einer Konzentration von 0,5 bis 80 mmol/l, bevorzugt 0,75 bis 37,5 mmol/l, besonders bevorzugt 1,5 bis 25 mmol/l eingesetzt. Im Fall eines formulierten Produktes wird die Ammonium- und/oder Phosphoniumsalzkonzentration in der Formulierung so gewählt, dass sie nach Verdünnung der Formulierung auf die gewünschte Wirkstoffkonzentration in diesen angegebenen allgemeinen, bevorzugten oder besonders bevorzugten Bereichen liegt. Die Konzentration des Salzes in der Formulierung beträgt dabei üblicherweise 1-50 Gew.-%.

In einer bevorzugten Ausführungsform der Erfindung wird den Pflanzenschutzmitteln zur Wirkungssteigerung nicht nur ein Ammonium- und/oder Phosphoniumsalz, sondern zusätzlich ein Penetrationsförderer zugegeben. Es ist als völlig überraschend zu bezeichnen, dass selbst in diesen Fällen eine noch weiter gehende Wirkungssteigerung zu beobachten ist. Gegenstand der vorliegenden Erfindung ist also ebenfalls die Verwendung einer Kombination von Penetrationsförderer und Ammonium- und/oder Phosphoniumsalzen zur Wirkungssteigerung von Pflanzenschutzmitteln, die insektizid wirksame Enaminocarbonylverbindungen als Wirkstoff enthalten. Gegenstand der Erfindung sind ebenfalls Mittel, die insektizid wirksame Enaminocarbonylverbindungen, Penetrationsförderer und Ammonium- und/oder Phosphoniumsalze enthalten und zwar sowohl formulierte Wirkstoffe als auch anwendungsfertige Mittel (Spritzbrühen). Gegenstand der Erfindung ist schließlich weiterhin die Verwendung dieser Mittel zur Bekämpfung von Schadinsekten.

Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrationsförderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Als Penetrationsförderer kommen beispielsweise Alkanol-alkoxylate in Betracht. Erfindungsgemäße Penetrationsförderer sind Alkanol-alkoxylate der Formel

R-O-(-AO)ᵥ-R' (III)

in welcher
- R: für geradkettiges oder verzweigtes Alkyl mit 4 bis 20 Kohlenstoffatomen steht,
- R': für Wasserstoff, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- v: für Zahlen von 2 bis 30 steht.

Eine bevorzugte Gruppe von Penetrationsförderern sind Alkanolalkoxylate der Formel

R-O-(-EO-)ₘ-R' (III-a)

in welcher
- R: die oben angegebene Bedeutung hat,
- R': die oben angegebene Bedeutung hat,
- EO: für -CH₂-CH₂-O- steht und
- m: für Zahlen von 2 bis 20 steht.

Eine weitere bevorzugte Gruppe von Penetrationsförderern sind Alkanol-alkoxylate der Formel

R-O-(-EO-)ₚ-(-PO-)_{q}-R' (III-b)

in welcher
- R: die oben angegebene Bedeutung hat,
- R': die oben angegebene Bedeutung hat,
- EO: für -CH₂-CH₂-O- steht,

- PO: für 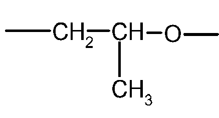
steht,
- p: für Zahlen von 1 bis 10 steht und
- q: für Zahlen von 1 bis 10 steht.

Eine weitere bevorzugte Gruppe von Penetrationsförderern sind Alkanol-Alkoxylate der Formel

R-O-(-PO-)ᵣ-(EO-)ₛ-R' (III-c)

in welcher
- R: die oben angegebene Bedeutung hat,
- R': die oben angegebene Bedeutung hat,
- EO: für -CH₂-CH₂-O- steht,

- PO: für 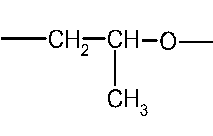
steht,
- r: für Zahlen von 1 bis 10 steht und
- s: für Zahlen von 1 bis 10 steht.

Eine weitere bevorzugte Gruppe von Penetrationsförderern sind Alkanol-alkoxylate der Formel

R-O-(-EO-)ᵥ-(-BO-)ₓ-R' (III-d)

in welcher
- R und R: die oben angegebenen Bedeutungen haben,
- EO: für CH₂-CH₂-O- steht,

- BO: für 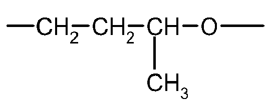
steht,
- v: für Zahlen von 1 bis 10 steht und
- x: für Zahlen von 1 bis 10 steht.

Eine weitere bevorzugte Gruppe von Penetrationsförderern sind Alkanol-alkoxylate der Formel

R-O-(-BO-)_{y}-(-EO-)_{z}-R' (III-e)

in welcher
- R und R': die oben angegebenen Bedeutungen haben,

- BO: für 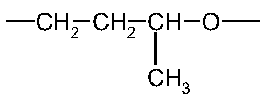
- steht,
- EO: für CH₂-CH₂-O- steht,
- y: für Zahlen von 1 bis 10 steht und
- z: für Zahlen von 1 bis 10 steht.

Eine weitere bevorzugte Gruppe von Penetrationsförderern sind Alkanol-Alkoxylate der Formel

CH₃-(CH₂)ₜ-CH₂-O-(-CH₂-CH₂-O-)ᵤ-R' (III-f)

in welcher
- R': die oben angegebene Bedeutung hat,
- t: für Zahlen von 8 bis 13 steht
- u: für Zahlen von 6 bis 17 steht.

### In den zuvor angegebenen Formeln steht

Rvorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

### Als Beispiel für ein Alkanol-Alkoxylat der Formel (III-c) sei 2-Ethyl-hexyl-alkoxylat der Formel

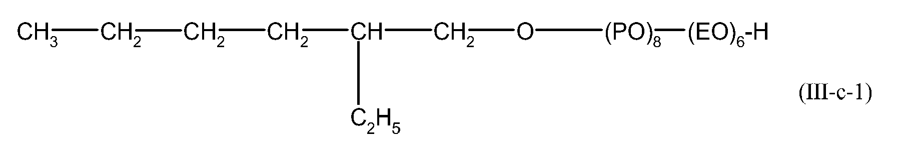

in welcher
- EO: für -CH₂-CH₂-O- steht,

- PO: für 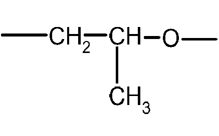 steht und
die Zahlen 8 und 6 Durchschnittswerte darstellen, genannt.

Als Beispiel für ein Alkanol-Alkoxylat der Formel (III-d) sei die Formel

CH₃-(CH₂)₁₀-O-(-EO-)₆-(-BO-)₂-CH₃ (III-d-1)

in welcher
- EO: für CH₂-CH₂-O- steht,

- BO: für 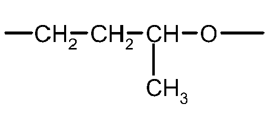 steht und
die Zahlen 10, 6 und 2 Durchschnittswerte darstellen, genannt.

Besonders bevorzugte Alkanol-Alkoxylate der Formel (III-f) sind Verbindungen dieser Formel, in denen
- t: für Zahlen von 9 bis 12 und
- u: für Zahlen von 7 bis 9
steht.

Ganz besonders bevorzugt genannt sei Alkanol-Alkoxylat der Formel (III-f-1)

CH₃-(CH₂)ₜ-CH₂-O-(-CH₂-CH₂-O-)ᵤ-H (III-f-1)

in welcher
- t: für den Durchschnittswert 10,5 steht und
- u: für den Durchschnittswert 8,4 steht.

Die Alkanol-Alkoxylate sind durch die obigen Formeln allgemein definiert. Bei diesen Substanzen handelt es sich um Gemische von Stoffen des angegebenen Typs mit unterschiedlichen Kettenlängen.

Für die Indices errechnen sich deshalb Durchschnittswerte, die auch von ganzen Zahlen abweichen können.

Die Alkanol-Alkoxylate der angegebenen Formeln sind bekannt und sind teilweise kommerziell erhältlich oder lassen sich nach bekannten Methoden herstellen (vgl. WO 98-35 553, WO 00-35 278 und EP-A 0 681 865).

Als Penetrationsförderer kommen beispielsweise auch Substanzen in Betracht, die die Löslichkeit der Verbindungen der Formel (I) im Spritzbelag fördern. Dazu gehören beispielsweise mineralische oder vegetabile Öle. Als Öle kommen alle üblicherweise in agrochemischen Mitteln einsetzbaren mineralischen oder vegetabilen - gegebenenfalls modifizierte - Öle in Frage. Beispielhaft genannt seien Sonnenblumenöl, Rapsöl, Olivenöl, Rizinusöl, Rüböl, Maiskernöl, Baumwollsaatöl und Sojabohnenöl oder die Ester der genannten Öle. Bevorzugt sind Rapsöl, Sonnenblumenöl und deren Methyl- oder Ethylester.

Die Konzentration an Penetrationsförderer kann in den erfindungsgemäßen Mitteln in einem weiten Bereich variiert werden. Bei einem formulierten Pflanzenschutzmittel liegt sie im allgemeinen bei 1 bis 95 Gew.-%, bevorzugt bei 1 bis 55 Gew.-%, besonders bevorzugt bei 15 - 40 Gew.-%. In den anwendungsfertigen Mitteln (Spritzbrühen) liegen die Konzentration im allgemeinen zwischen 0,1 und 10 g/l, bevorzugt zwischen 0,5 und 5 g/l.

Erfindungsgemäß hervorgehobene Kombinationen von Wirkstoff, Salz und Penetrations-förderer sind in folgender Tabelle aufgeführt, wobei jede einzelne Kombination für sich hervorgehoben ist. "gemäß Test" bedeutet dabei, dass jede Verbindung geeignet ist, die in dem Test für die Kutikelpenetration (Baur et al., 1997, Pesticide Science 51, 131-152) als Penetrationsförderer wirkt.

| Nummer | Wirkstoff | Salz | Penetrations-förderer |
|---|---|---|---|
| 1 | (I-1) | Ammoniumsulfat | gemäß Test |
| 2 | (I-1) | Ammoniumlaktat | gemäß Test |
| 3 | (I-1) | Ammoniumnitrat | gemäß Test |
| 4 | (I-1) | Ammoniumthiosulfat | gemäß Test |
| 5 | (I-1) | Ammoniumthiocyanat | gemäß Test |
| 6 | (I-1) | Ammoniumcitrat | gemäß Test |
| 7 | (I-1) | Ammoniumoxalat | gemäß Test |
| 8 | (I-1) | Ammoniumformiat | gemäß Test |
| 9 | (I-1) | Ammoniumhydrogenphosphat | gemäß Test |
| 10 | (I-1) | Ammoniumdihydrogenphosphat | gemäß Test |
| 11 | (I-1) | Ammoniumcarbonat | gemäß Test |
| 12 | (I-1) | Ammoniumsulfit | gemäß Test |
| 13 | (I-1) | Ammoniumbenzoat | gemäß Test |
| 14 | (I-1) | Ammoniumhydrogenoxalat | gemäß Test |
| 15 | (I-1) | Ammoniumhydrogencitrat | gemäß Test |
| 16 | (I-1) | Ammoniumacetat | gemäß Test |
| 17 | (I-1) | Tetramethylammoniumsulfat | gemäß Test |
| 18 | (I-1) | Tetramethylammoniumlaktat | gemäß Test |
| 19 | (I-1) | Tetramethylammoniumnitrat | gemäß Test |
| 20 | (I-1) | Tetramethylammoniumthiosulfat | gemäß Test |
| 21 | (I-1) | Tetramethylammoniumthiocyanat | gemäß Test |
| 22 | (I-1) | Tetramethylammoniumcitrat | gemäß Test |
| 23 | (I-1) | Tetramethylammoniumoxalat | gemäß Test |
| 24 | (I-1) | Tetramethylammoniumformiat | gemäß Test |
| 25 | (I-1) | Tetramethylammoniumhydrogenphosphat | gemäß Test |
| 26 | (I-1) | Tetramethylammoniumdihydrogenphosphat | gemäß Test |
| 27 | (I-1) | Tetraethylammoniumsulfat | gemäß Test |
| 28 | (I-1) | Tetraethylammoniumlaktat | gemäß Test |
| 29 | (I-1) | Tetraethylammoniumnitrat | gemäß Test |
| 30 | (I-1) | Tetraethylammoniumthiosulfat | gemäß Test |
| 31 | (I-1) | Tetraethylammoniumthiocyanat | gemäß Test |
| 32 | (I-1) | Tetraethylammoniumcitrat | gemäß Test |
| 33 | (I-1) | Tetraethylammoniumoxalat | gemäß Test |
| 34 | (I-1) | Tetraethylammoniumformiat | gemäß Test |
| 35 | (I-1) | Tetraethylammoniumhydrogenphosphat | gemäß Test |
| 36 | (I-1) | Tetraethylammoniumdihydrogenphosphat | gemäß Test |
| 37 | (I-2) | Ammoniumsulfat | gemäß Test |
| 38 | (I-2) | Ammoniumlaktat | gemäß Test |
| 39 | (I-2) | Ammoniumnitrat | gemäß Test |
| 40 | (I-2) | Ammoniumthiosulfat | gemäß Test |
| 41 | (I-2) | Ammoniumthiocyanat | gemäß Test |
| 42 | (I-2) | Ammoniumcitrat | gemäß Test |
| 43 | (I-2) | Ammoniumoxalat | gemäß Test |
| 44 | (I-2) | Ammoniumformiat | gemäß Test |
| 45 | (I-2) | Ammoniumhydrogenphosphat | gemäß Test |
| 46 | (I-2) | Ammoniumdihydrogenphosphat | gemäß Test |
| 47 | (I-2) | Ammoniumcarbonat | gemäß Test |
| 48 | (I-2) | Ammoniumsulfit | gemäß Test |
| 49 | (I-2) | Ammoniumbenzoat | gemäß Test |
| 50 | (I-2) | Ammoniumhydrogenoxalat | gemäß Test |
| 51 | (I-2) | Ammoniumhydrogencitrat | gemäß Test |
| 52 | (I-2) | Ammoniumacetat | gemäß Test |
| 53 | (I-2) | Tetramethylammoniumsulfat | gemäß Test |
| 54 | (I-2) | Tetramethylammoniumlaktat | gemäß Test |
| 55 | (I-2) | Tetramethylammoniumnitrat | gemäß Test |
| 56 | (I-2) | Tetramethylammoniumthiosulfat | gemäß Test |
| 57 | (I-2) | Tetramethylammoniumthiocyanat | gemäß Test |
| 58 | (I-2) | Tetramethylammoniumcitrat | gemäß Test |
| 59 | (I-2) | Tetramethylammoniumoxalat | gemäß Test |
| 60 | (I-2) | Tetramethylammoniumformiat | gemäß Test |
| 61 | (I-2) | Tetramethylammoniumhydrogenphosphat | gemäß Test |
| 62 | (I-2) | Tetramethylammoniumdihydrogenphosphat | gemäß Test |
| 63 | (I-2) | Tetraethylammoniumsulfat | gemäß Test |
| 64 | (I-2) | Tetraethylammoniumlaktat | gemäß Test |
| 65 | (I-2) | Tetraethylammoniumnitrat | gemäß Test |
| 66 | (I-2) | Tetraethylammoniumthiosulfat | gemäß Test |
| 67 | (I-2) | Tetraethylammoniumthiocyanat | gemäß Test |
| 68 | (I-2) | Tetraethylammoniumcitrat | gemäß Test |
| 69 | (I-2) | Tetraethylammoniumoxalat | gemäß Test |
| 70 | (I-2) | Tetraethylammoniumformiat | gemäß Test |
| 71 | (I-2) | Tetraethylammoniumhydrogenphosphat | gemäß Test |
| 72 | (I-2) | Tetraethylammoniumdihydrogenphosphat | gemäß Test |
| 73 | (I-3) | Ammoniumsulfat | gemäß Test |
| 74 | (I-3) | Ammoniumlaktat | gemäß Test |
| 75 | (I-3) | Ammoniumnitrat | gemäß Test |
| 76 | (I-3) | Ammoniumthiosulfat | gemäß Test |
| 77 | (I-3) | Ammoniumthiocyanat | gemäß Test |
| 78 | (I-3) | Ammoniumcitrat | gemäß Test |
| 79 | (I-3) | Ammoniumoxalat | gemäß Test |
| 80 | (I-3) | Ammoniumformiat | gemäß Test |
| 81 | (I-3) | Ammoniumhydrogenphosphat | gemäß Test |
| 82 | (I-3) | Ammoniumdihydrogenphosphat | gemäß Test |
| 83 | (I-3) | Ammoniumcarbonat | gemäß Test |
| 84 | (I-3) | Ammoniumsulfit | gemäß Test |
| 85 | (I-3) | Ammoniumbenzoat | gemäß Test |
| 86 | (I-3) | Ammoniumhydrogenoxalat | gemäß Test |
| 87 | (I-3) | Ammoniumhydrogencitrat | gemäß Test |
| 88 | (I-3) | Ammoniumacetat | gemäß Test |
| 89 | (I-3) | Tetramethylammoniumsulfat | gemäß Test |
| 90 | (I-3) | Tetramethylammoniumlaktat | gemäß Test |
| 91 | (I-3) | Tetramethylammoniumnitrat | gemäß Test |
| 92 | (I-3) | Tetramethylammoniumthiosulfat | gemäß Test |
| 93 | (I-3) | Tetramethylammoniumthiocyanat | gemäß Test |
| 94 | (I-3) | Tetramethylammoniumcitrat | gemäß Test |
| 95 | (I-3) | Tetramethylammoniumoxalat | gemäß Test |
| 96 | (I-3) | Tetramethylammoniumformiat | gemäß Test |
| 97 | (I-3) | Tetramethylammoniumhydrogenphosphat | gemäß Test |
| 98 | (I-3) | Tetramethylammoniumdihydrogenphosphat | gemäß Test |
| 99 | (I-3) | Tetraethylammoniumsulfat | gemäß Test |
| 100 | (I-3) | Tetraethylammoniumlaktat | gemäß Test |
| 101 | (I-3) | Tetraethylammoniumnitrat | gemäß Test |
| 102 | (I-3) | Tetraethylammoniumthiosulfat | gemäß Test |
| 103 | (I-3) | Tetraethylammoniumthiocyanat | gemäß Test |
| 104 | (I-3) | Tetraethylammoniumcitrat | gemäß Test |
| 105 | (I-3) | Tetraethylammoniumoxalat | gemäß Test |
| 106 | (I-3) | Tetraethylammoniumformiat | gemäß Test |
| 107 | (I-3) | Tetraethylammoniumhydrogenphosphat | gemäß Test |
| 108 | (I-3) | Tetraethylammoniumdihydrogenphosphat | gemäß Test |
| 109 | (I-4) | Ammoniumsulfat | gemäß Test |
| 110 | (I-4) | Ammoniumlaktat | gemäß Test |
| 111 | (I-4) | Ammoniumnitrat | gemäß Test |
| 112 | (I-4) | Ammoniumthiosulfat | gemäß Test |
| 113 | (I-4) | Ammoniumthiocyanat | gemäß Test |
| 114 | (I-4) | Ammoniumcitrat | gemäß Test |
| 115 | (I-4) | Ammoniumoxalat | gemäß Test |
| 116 | (I-4) | Ammoniumformiat | gemäß Test |
| 117 | (I-4) | Ammoniumhydrogenphosphat | gemäß Test |
| 118 | (I-4) | Ammoniumdihydrogenphosphat | gemäß Test |
| 119 | (I-4) | Ammoniumcarbonat | gemäß Test |
| 120 | (I-4) | Ammoniumsulfit | gemäß Test |
| 121 | (I-4) | Ammoniumbenzoat | gemäß Test |
| 122 | (I-4) | Ammoniumhydrogenoxalat | gemäß Test |
| 123 | (I-4) | Ammoniumhydrogencitrat | gemäß Test |
| 124 | (I-4) | Ammoniumacetat | gemäß Test |
| 125 | (I-4) | Tetramethylammoniumsulfat | gemäß Test |
| 126 | (I-4) | Tetramethylammoniumlaktat | gemäß Test |
| 127 | (I-4) | Tetramethylammoniumnitrat | gemäß Test |
| 128 | (I-4) | Tetramethylammoniumthiosulfat | gemäß Test |
| 129 | (I-4) | Tetramethylammoniumthiocyanat | gemäß Test |
| 130 | (I-4) | Tetramethylammoniumcitrat | gemäß Test |
| 131 | (I-4) | Tetramethylammoniumoxalat | gemäß Test |
| 132 | (I-4) | Tetramethylammoniumformiat | gemäß Test |
| 133 | (I-4) | Tetramethylammoniumhydrogenphosphat | gemäß Test |
| 134 | (I-4) | Tetramethylammoniumdihydrogenphosphat | gemäß Test |
| 135 | (I-4) | Tetraethylammoniumsulfat | gemäß Test |
| 136 | (I-4) | Tetraethylammoniumlaktat | gemäß Test |
| 137 | (I-4) | Tetraethylammoniumnitrat | gemäß Test |
| 138 | (I-4) | Tetraethylammoniumthiosulfat | gemäß Test |
| 139 | (I-4) | Tetraethylammoniumthiocyanat | gemäß Test |
| 140 | (I-4) | Tetraethylammoniumcitrat | gemäß Test |
| 141 | (I-4) | Tetraethylammoniumoxalat | gemäß Test |
| 142 | (I-4) | Tetraethylammoniumformiat | gemäß Test |
| 143 | (I-4) | Tetraethylammoniumhydrogenphosphat | gemäß Test |
| 144 | (I-4) | Tetraethylammoniumdihydrogenphosphat | gemäß Test |
| 145 | (I-5) | Ammoniumsulfat | gemäß Test |
| 146 | (I-5) | Ammoniumlaktat | gemäß Test |
| 147 | (I-5) | Ammoniumnitrat | gemäß Test |
| 148 | (I-5) | Ammoniumthiosulfat | gemäß Test |
| 149 | (I-5) | Ammoniumthiocyanat | gemäß Test |
| 150 | (I-5) | Ammoniumcitrat | gemäß Test |
| 151 | (I-5) | Ammoniumoxalat | gemäß Test |
| 152 | (I-5) | Ammoniumformiat | gemäß Test |
| 153 | (I-5) | Ammoniumhydrogenphosphat | gemäß Test |
| 154 | (I-5) | Ammoniumdihydrogenphosphat | gemäß Test |
| 155 | (I-5) | Ammoniumcarbonat | gemäß Test |
| 156 | (I-5) | Ammoniumsulfit | gemäß Test |
| 157 | (I-5) | Ammoniumbenzoat | gemäß Test |
| 158 | (I-5) | Ammoniumhydrogenoxalat | gemäß Test |
| 159 | (I-5) | Ammoniumhydrogencitrat | gemäß Test |
| 160 | (I-5) | Ammoniumacetat | gemäß Test |
| 161 | (I-5) | Tetramethylammoniumsulfat | gemäß Test |
| 162 | (I-5) | Tetramethylammoniumlaktat | gemäß Test |
| 163 | (I-5) | Tetramethylammoniumnitrat | gemäß Test |
| 164 | (I-5) | Tetramethylammoniumthiosulfat | gemäß Test |
| 165 | (I-5) | Tetramethylammoniumthiocyanat | gemäß Test |
| 166 | (I-5) | Tetramethylammoniumcitrat | gemäß Test |
| 167 | (I-5) | Tetramethylammoniumoxalat | gemäß Test |
| 168 | (I-5) | Tetramethylammoniumformiat | gemäß Test |
| 169 | (I-5) | Tetramethylammoniumhydrogenphosphat | gemäß Test |
| 170 | (I-5) | Tetramethylammoniumdihydrogenphosphat | gemäß Test |
| 171 | (I-5) | Tetraethylammoniumsulfat | gemäß Test |
| 172 | (I-5) | Tetraethylammoniumlaktat | gemäß Test |
| 173 | (I-5) | Tetraethylammoniumnitrat | gemäß Test |
| 174 | (I-5) | Tetraethylammoniumthiosulfat | gemäß Test |
| 175 | (I-5) | Tetraethylammoniumthiocyanat | gemäß Test |
| 176 | (I-5) | Tetraethylammoniumcitrat | gemäß Test |
| 177 | (I-5) | Tetraethylammoniumoxalat | gemäß Test |
| 178 | (I-5) | Tetraethylammoniumformiat | gemäß Test |
| 179 | (I-5) | Tetraethylammoniumhydrogenphosphat | gemäß Test |
| 180 | (I-5) | Tetraethylammoniumdihydrogenphosphat | gemäß Test |
| 181 | (I-6) | Ammoniumsulfat | gemäß Test |
| 182 | (I-6) | Ammoniumlaktat | gemäß Test |
| 183 | (I-6) | Ammoniumnitrat | gemäß Test |
| 184 | (I-6) | Ammoniumthiosulfat | gemäß Test |
| 185 | (I-6) | Ammoniumthiocyanat | gemäß Test |
| 186 | (I-6) | Ammoniumcitrat | gemäß Test |
| 187 | (I-6) | Ammoniumoxalat | gemäß Test |
| 188 | (I-6) | Ammoniumformiat | gemäß Test |
| 189 | (I-6) | Ammoniumhydrogenphosphat | gemäß Test |
| 190 | (I-6) | Ammoniumdihydrogenphosphat | gemäß Test |
| 191 | (I-6) | Ammoniumcarbonat | gemäß Test |
| 192 | (I-6) | Ammoniumsulfit | gemäß Test |
| 193 | (I-6) | Ammoniumbenzoat | gemäß Test |
| 194 | (I-6) | Ammoniumhydrogenoxalat | gemäß Test |
| 195 | (I-6) | Ammoniumhydrogencitrat | gemäß Test |
| 196 | (I-6) | Ammoniumacetat | gemäß Test |
| 197 | (I-6) | Tetramethylammoniumsulfat | gemäß Test |
| 198 | (I-6) | Tetramethylammoniumlaktat | gemäß Test |
| 199 | (I-6) | Tetramethylammoniumnitrat | gemäß Test |
| 200 | (I-6) | Tetramethylammoniumthiosulfat | gemäß Test |
| 201 | (I-6) | Tetramethylammoniumthiocyanat | gemäß Test |
| 202 | (I-6) | Tetramethylammoniumcitrat | gemäß Test |
| 203 | (I-6) | Tetramethylammoniumoxalat | gemäß Test |
| 204 | (I-6) | Tetramethylammoniumformiat | gemäß Test |
| 205 | (I-6) | Tetramethylammoniumhydrogenphosphat | gemäß Test |
| 206 | (I-6) | Tetramethylammoniumdihydrogenphosphat | gemäß Test |
| 207 | (I-6) | Tetraethylammoniumsulfat | gemäß Test |
| 208 | (I-6) | Tetraethylammoniumlaktat | gemäß Test |
| 209 | (I-6) | Tetraethylammoniumnitrat | gemäß Test |
| 210 | (I-6) | Tetraethylammoniumthiosulfat | gemäß Test |
| 211 | (I-6) | Tetraethylammoniumthiocyanat | gemäß Test |
| 212 | (I-6) | Tetraethylammoniumcitrat | gemäß Test |
| 213 | (I-6) | Tetraethylammoniumoxalat | gemäß Test |
| 214 | (I-6) | Tetraethylammoniumformiat | gemäß Test |
| 215 | (I-6) | Tetraethylammoniumhydrogenphosphat | gemäß Test |
| 216 | (I-6) | Tetraethylammoniumdihydrogenphosphat | gemäß Test |
| 217 | (I-7) | Ammoniumsulfat | gemäß Test |
| 218 | (I-7) | Ammoniumlaktat | gemäß Test |
| 219 | (I-7) | Ammoniumnitrat | gemäß Test |
| 220 | (I-7) | Ammoniumthiosulfat | gemäß Test |
| 221 | (I-7) | Ammoniumthiocyanat | gemäß Test |
| 222 | (I-7) | Ammoniumcitrat | gemäß Test |
| 223 | (I-7) | Ammoniumoxalat | gemäß Test |
| 224 | (I-7) | Ammoniumformiat | gemäß Test |
| 225 | (I-7) | Ammoniumhydrogenphosphat | gemäß Test |
| 226 | (I-7) | Ammoniumdihydrogenphosphat | gemäß Test |
| 227 | (I-7) | Ammoniumcarbonat | gemäß Test |
| 228 | (I-7) | Ammoniumsulfit | gemäß Test |
| 229 | (I-7) | Ammoniumbenzoat | gemäß Test |
| 230 | (I-7) | Ammoniumhydrogenoxalat | gemäß Test |
| 231 | (I-7) | Ammoniumhydrogencitrat | gemäß Test |
| 232 | (I-7) | Ammoniumacetat | gemäß Test |
| 233 | (I-7) | Tetramethylammoniumsulfat | gemäß Test |
| 234 | (I-7) | Tetramethylammoniumlaktat | gemäß Test |
| 235 | (I-7) | Tetramethylammoniumnitrat | gemäß Test |
| 236 | (I-7) | Tetramethylammoniumthiosulfat | gemäß Test |
| 237 | (I-7) | Tetramethylammoniumthiocyanat | gemäß Test |
| 238 | (I-7) | Tetramethylammoniumcitrat | gemäß Test |
| 239 | (I-7) | Tetramethylammoniumoxalat | gemäß Test |
| 240 | (I-7) | Tetramethylammoniumformiat | gemäß Test |
| 241 | (I-7) | Tetramethylammoniumhydrogenphosphat | gemäß Test |
| 242 | (I-7) | Tetramethylammoniumdihydrogenphosphat | gemäß Test |
| 243 | (I-7) | Tetraethylammoniumsulfat | gemäß Test |
| 244 | (I-7) | Tetraethylammoniumlaktat | gemäß Test |
| 245 | (I-7) | Tetraethylammoniumnitrat | gemäß Test |
| 246 | (I-7) | Tetraethylammoniumthiosulfat | gemäß Test |
| 247 | (I-7) | Tetraethylammoniumthiocyanat | gemäß Test |
| 248 | (I-7) | Tetraethylammoniumcitrat | gemäß Test |
| 249 | (I-7) | Tetraethylammoniumoxalat | gemäß Test |
| 250 | (I-7) | Tetraethylammoniumformiat | gemäß Test |
| 251 | (I-7) | Tetraethylammoniumhydrogenphosphat | gemäß Test |
| 252 | (I-7) | Tetraethylammoniumdihydrogenphosphat | gemäß Test |
| 253 | (I-8) | Ammoniumsulfat | gemäß Test |
| 254 | (I-8) | Ammoniumlaktat | gemäß Test |
| 255 | (I-8) | Ammoniumnitrat | gemäß Test |
| 256 | (I-8) | Ammoniumthiosulfat | gemäß Test |
| 257 | (I-8) | Ammoniumthiocyanat | gemäß Test |
| 258 | (I-8) | Ammoniumcitrat | gemäß Test |
| 259 | (I-8) | Ammoniumoxalat | gemäß Test |
| 260 | (I-8) | Ammoniumformiat | gemäß Test |
| 261 | (I-8) | Ammoniumhydrogenphosphat | gemäß Test |
| 262 | (I-8) | Ammoniumdihydrogenphosphat | gemäß Test |
| 263 | (I-8) | Ammoniumcarbonat | gemäß Test |
| 264 | (I-8) | Ammoniumsulfit | gemäß Test |
| 265 | (I-8) | Ammoniumbenzoat | gemäß Test |
| 266 | (I-8) | Ammoniumhydrogenoxalat | gemäß Test |
| 267 | (I-8) | Ammoniumhydrogencitrat | gemäß Test |
| 268 | (I-8) | Ammoniumacetat | gemäß Test |
| 269 | (I-8) | Tetramethylammoniumsulfat | gemäß Test |
| 270 | (I-8) | Tetramethylammoniumlaktat | gemäß Test |
| 271 | (I-8) | Tetramethylammoniumnitrat | gemäß Test |
| 272 | (I-8) | Tetramethylammoniumthiosulfat | gemäß Test |
| 273 | (I-8) | Tetramethylammoniumthiocyanat | gemäß Test |
| 274 | (I-8) | Tetramethylammoniumcitrat | gemäß Test |
| 275 | (I-8) | Tetramethylammoniumoxalat | gemäß Test |
| 276 | (I-8) | Tetramethylammoniumformiat | gemäß Test |
| 277 | (I-8) | Tetramethylammoniumhydrogenphosphat | gemäß Test |
| 278 | (I-8) | Tetramethylammoniumdihydrogenphosphat | gemäß Test |
| 279 | (I-8) | Tetraethylammoniumsulfat | gemäß Test |
| 280 | (I-8) | Tetraethylammoniumlaktat | gemäß Test |
| 281 | (I-8) | Tetraethylammoniumnitrat | gemäß Test |
| 282 | (I-8) | Tetraethylammoniumthiosulfat | gemäß Test |
| 283 | (I-8) | Tetraethylammoniumthiocyanat | gemäß Test |
| 284 | (I-8) | Tetraethylammoniumcitrat | gemäß Test |
| 285 | (I-8) | Tetraethylammoniumoxalat | gemäß Test |
| 286 | (I-8) | Tetraethylammoniumformiat | gemäß Test |
| 287 | (I-8) | Tetraethylammoniumhydrogenphosphat | gemäß Test |
| 288 | (I-8) | Tetraethylammoniumdihydrogenphosphat | gemäß Test |
| 289 | (I-9) | Ammoniumsulfat | gemäß Test |
| 290 | (I-9) | Ammoniumlaktat | gemäß Test |
| 291 | (I-9) | Ammoniumnitrat | gemäß Test |
| 292 | (I-9) | Ammoniumthiosulfat | gemäß Test |
| 293 | (I-9) | Ammoniumthiocyanat | gemäß Test |
| 294 | (I-9) | Ammoniumcitrat | gemäß Test |
| 295 | (I-9) | Ammoniumoxalat | gemäß Test |
| 296 | (I-9) | Ammoniumformiat | gemäß Test |
| 297 | (I-9) | Ammoniumhydrogenphosphat | gemäß Test |
| 298 | (I-9) | Ammoniumdihydrogenphosphat | gemäß Test |
| 299 | (I-9) | Ammoniumcarbonat | gemäß Test |
| 300 | (I-9) | Ammoniumsulfit | gemäß Test |
| 301 | (I-9) | Ammoniumbenzoat | gemäß Test |
| 302 | (I-9) | Ammoniumhydrogenoxalat | gemäß Test |
| 303 | (I-9) | Ammoniumhydrogencitrat | gemäß Test |
| 304 | (I-9) | Ammoniumacetat | gemäß Test |
| 305 | (I-9) | Tetramethylammoniumsulfat | gemäß Test |
| 306 | (I-9) | Tetramethylammoniumlaktat | gemäß Test |
| 307 | (I-9) | Tetramethylammoniumnitrat | gemäß Test |
| 308 | (I-9) | Tetramethylammoniumthiosulfat | gemäß Test |
| 309 | (I-9) | Tetramethylammoniumthiocyanat | gemäß Test |
| 310 | (I-9) | Tetramethylammoniumcitrat | gemäß Test |
| 311 | (I-9) | Tetramethylammoniumoxalat | gemäß Test |
| 312 | (I-9) | Tetramethylammoniumformiat | gemäß Test |
| 313 | (I-9) | Tetramethylammoniumhydrogenphosphat | gemäß Test |
| 314 | (I-9) | Tetramethylammoniumdihydrogenphosphat | gemäß Test |
| 315 | (I-9) | Tetraethylammoniumsulfat | gemäß Test |
| 316 | (I-9) | Tetraethylammoniumlaktat | gemäß Test |
| 317 | (I-9) | Tetraethylammoniumnitrat | gemäß Test |
| 318 | (I-9) | Tetraethylammoniumthiosulfat | gemäß Test |
| 319 | (I-9) | Tetraethylammoniumthiocyanat | gemäß Test |
| 320 | (I-9) | Tetraethylammoniumcitrat | gemäß Test |
| 321 | (I-9) | Tetraethylammoniumoxalat | gemäß Test |
| 322 | (I-9) | Tetraethylammoniumformiat | gemäß Test |
| 323 | (I-9) | Tetraethylammoniumhydrogenphosphat | gemäß Test |
| 324 | (I-9) | Tetraethylammoniumdihydrogenphosphat | gemäß Test |
| 325 | (I-10) | Ammoniumsulfat | gemäß Test |
| 326 | (I-10) | Ammoniumlaktat | gemäß Test |
| 327 | (I-10) | Ammoniumnitrat | gemäß Test |
| 328 | (I-10) | Ammoniumthiosulfat | gemäß Test |
| 329 | (I-10) | Ammoniumthiocyanat | gemäß Test |
| 330 | (I-10) | Ammoniumcitrat | gemäß Test |
| 331 | (I-10) | Ammoniumoxalat | gemäß Test |
| 332 | (I-10) | Ammoniumformiat | gemäß Test |
| 333 | (I-10) | Ammoniumhydrogenphosphat | gemäß Test |
| 334 | (I-10) | Ammoniumdihydrogenphosphat | gemäß Test |
| 335 | (I-10) | Ammoniumcarbonat | gemäß Test |
| 336 | (I-10) | Ammoniumsulfit | gemäß Test |
| 337 | (I-10) | Ammoniumbenzoat | gemäß Test |
| 338 | (I-10) | Ammoniumhydrogenoxalat | gemäß Test |
| 339 | (I-10) | Ammoniumhydrogencitrat | gemäß Test |
| 340 | (I-10) | Ammoniumacetat | gemäß Test |
| 341 | (I-10) | Tetramethylammoniumsulfat | gemäß Test |
| 342 | (I-10) | Tetramethylammoniumlaktat | gemäß Test |
| 343 | (I-10) | Tetramethylammoniumnitrat | gemäß Test |
| 344 | (I-10) | Tetramethylammoniumthiosulfat | gemäß Test |
| 345 | (I-10) | Tetramethylammoniumthiocyanat | gemäß Test |
| 346 | (I-10) | Tetramethylammoniumcitrat | gemäß Test |
| 347 | (I-10) | Tetramethylammoniumoxalat | gemäß Test |
| 348 | (I-10) | Tetramethylammoniumformiat | gemäß Test |
| 349 | (I-10) | Tetramethylammoniumhydrogenphosphat | gemäß Test |
| 350 | (I-10) | Tetramethylammoniumdihydrogenphosphat | gemäß Test |
| 351 | (I-10) | Tetraethylammoniumsulfat | gemäß Test |
| 352 | (I-10) | Tetraethylammoniumlaktat | gemäß Test |
| 353 | (I-10) | Tetraethylammoniumnitrat | gemäß Test |
| 354 | (I-10) | Tetraethylammoniumthiosulfat | gemäß Test |
| 355 | (I-10) | Tetraethylammoniumthiocyanat | gemäß Test |
| 356 | (I-10) | Tetraethylammoniumcitrat | gemäß Test |
| 357 | (I-10) | Tetraethylammoniumoxalat | gemäß Test |
| 358 | (I-10) | Tetraethylammoniumformiat | gemäß Test |
| 359 | (I-10) | Tetraethylammoniumhydrogenphosphat | gemäß Test |
| 360 | (I-10) | Tetraethylammoniumdihydrogenphosphat | gemäß Test |
| 361 | (I-11) | Ammoniumsulfat | gemäß Test |
| 362 | (I-11) | Ammoniumlaktat | gemäß Test |
| 363 | (I-11) | Ammoniumnitrat | gemäß Test |
| 364 | (I-11) | Ammoniumthiosulfat | gemäß Test |
| 365 | (I-11) | Ammoniumthiocyanat | gemäß Test |
| 366 | (I-11) | Ammoniumcitrat | gemäß Test |
| 367 | (I-11) | Ammoniumoxalat | gemäß Test |
| 368 | (I-11) | Ammoniumformiat | gemäß Test |
| 369 | (I-11) | Ammoniumhydrogenphosphat | gemäß Test |
| 370 | (I-11) | Ammoniumdihydrogenphosphat | gemäß Test |
| 371 | (I-11) | Ammoniumcarbonat | gemäß Test |
| 372 | (I-11) | Ammoniumsulfit | gemäß Test |
| 373 | (I-11) | Ammoniumbenzoat | gemäß Test |
| 374 | (I-11) | Ammoniumhydrogenoxalat | gemäß Test |
| 375 | (I-11) | Ammoniumhydrogencitrat | gemäß Test |
| 376 | (I-11) | Ammoniumacetat | gemäß Test |
| 377 | (I-11) | Tetramethylammoniumsulfat | gemäß Test |
| 378 | (I-11) | Tetramethylammoniumlaktat | gemäß Test |
| 379 | (I-11) | Tetramethylammoniumnitrat | gemäß Test |
| 380 | (I-11) | Tetramethylammoniumthiosulfat | gemäß Test |
| 381 | (I-11) | Tetramethylammoniumthiocyanat | gemäß Test |
| 382 | (I-11) | Tetramethylammoniumcitrat | gemäß Test |
| 383 | (I-11) | Tetramethylammoniumoxalat | gemäß Test |
| 384 | (I-11) | Tetramethylammoniumformiat | gemäß Test |
| 385 | (I-11) | Tetramethylammoniumhydrogenphosphat | gemäß Test |
| 386 | (I-11) | Tetramethylammoniumdihydrogenphosphat | gemäß Test |
| 387 | (I-11) | Tetraethylammoniumsulfat | gemäß Test |
| 388 | (I-11) | Tetraethylammoniumlaktat | gemäß Test |
| 389 | (I-11) | Tetraethylammoniumnitrat | gemäß Test |
| 390 | (I-11) | Tetraethylammoniumthiosulfat | gemäß Test |
| 391 | (I-11) | Tetraethylammoniumthiocyanat | gemäß Test |
| 392 | (I-11) | Tetraethylammoniumcitrat | gemäß Test |
| 393 | (I-11) | Tetraethylammoniumoxalat | gemäß Test |
| 394 | (I-11) | Tetraethylammoniumformiat | gemäß Test |
| 395 | (I-11) | Tetraethylammoniumhydrogenphosphat | gemäß Test |
| 396 | (I-11) | Tetraethylammoniumdihydrogenphosphat | gemäß Test |
| 397 | (I-12) | Ammoniumsulfat | gemäß Test |
| 398 | (I-12) | Ammoniumlaktat | gemäß Test |
| 399 | (I-12) | Ammoniumnitrat | gemäß Test |
| 400 | (I-12) | Ammoniumthiosulfat | gemäß Test |
| 401 | (I-12) | Ammoniumthiocyanat | gemäß Test |
| 402 | (I-12) | Ammoniumcitrat | gemäß Test |
| 403 | (I-12) | Ammoniumoxalat | gemäß Test |
| 404 | (I-12) | Ammoniumformiat | gemäß Test |
| 405 | (I-12) | Ammoniumhydrogenphosphat | gemäß Test |
| 406 | (I-12) | Ammoniumdihydrogenphosphat | gemäß Test |
| 407 | (I-12) | Ammoniumcarbonat | gemäß Test |
| 408 | (I-12) | Ammoniumsulfit | gemäß Test |
| 409 | (I-12) | Ammoniumbenzoat | gemäß Test |
| 410 | (I-12) | Ammoniumhydrogenoxalat | gemäß Test |
| 411 | (I-12) | Ammoniumhydrogencitrat | gemäß Test |
| 412 | (I-12) | Ammoniumacetat | gemäß Test |
| 413 | (I-12) | Tetramethylammoniumsulfat | gemäß Test |
| 414 | (I-12) | Tetramethylammoniumlaktat | gemäß Test |
| 415 | (I-12) | Tetramethylammoniumnitrat | gemäß Test |
| 416 | (I-12) | Tetramethylammoniumthiosulfat | gemäß Test |
| 417 | (I-12) | Tetramethylammoniumthiocyanat | gemäß Test |
| 418 | (I-12) | Tetramethylammoniumcitrat | gemäß Test |
| 419 | (I-12) | Tetramethylammoniumoxalat | gemäß Test |
| 420 | (I-12) | Tetramethylammoniumformiat | gemäß Test |
| 421 | (I-12) | Tetramethylammoniumhydrogenphosphat | gemäß Test |
| 422 | (I-12) | Tetramethylammoniumdihydrogenphosphat | gemäß Test |
| 423 | (I-12) | Tetraethylammoniumsulfat | gemäß Test |
| 424 | (I-12) | Tetraethylammoniumlaktat | gemäß Test |
| 425 | (I-12) | Tetraethylammoniumnitrat | gemäß Test |
| 426 | (I-12) | Tetraethylammoniumthiosulfat | gemäß Test |
| 427 | (I-12) | Tetraethylammoniumthiocyanat | gemäß Test |
| 428 | (I-12) | Tetraethylammoniumcitrat | gemäß Test |
| 429 | (I-12) | Tetraethylammoniumoxalat | gemäß Test |
| 430 | (I-12) | Tetraethylammoniumformiat | gemäß Test |
| 431 | (I-12) | Tetraethylammoniumhydrogenphosphat | gemäß Test |
| 432 | (I-12) | Tetraethylammoniumdihydrogenphosphat | gemäß Test |
| 433 | (I-13) | Ammoniumsulfat | gemäß Test |
| 434 | (I-13) | Ammoniumlaktat | gemäß Test |
| 435 | (I-13) | Ammoniumnitrat | gemäß Test |
| 436 | (I-13) | Ammoniumthiosulfat | gemäß Test |
| 437 | (I-13) | Ammoniumthiocyanat | gemäß Test |
| 438 | (I-13) | Ammoniumcitrat | gemäß Test |
| 439 | (I-13) | Ammoniumoxalat | gemäß Test |
| 440 | (I-13) | Ammoniumformiat | gemäß Test |
| 441 | (I-13) | Ammoniumhydrogenphosphat | gemäß Test |
| 442 | (I-13) | Ammoniumdihydrogenphosphat | gemäß Test |
| 443 | (I-13) | Ammoniumcarbonat | gemäß Test |
| 444 | (I-13) | Ammoniumsulfit | gemäß Test |
| 445 | (I-13) | Ammoniumbenzoat | gemäß Test |
| 446 | (I-13) | Ammoniumhydrogenoxalat | gemäß Test |
| 447 | (I-13) | Ammoniumhydrogencitrat | gemäß Test |
| 448 | (I-13) | Ammoniumacetat | gemäß Test |
| 449 | (I-13) | Tetramethylammoniumsulfat | gemäß Test |
| 450 | (I-13) | Tetramethylammoniumlaktat | gemäß Test |
| 451 | (I-13) | Tetramethylammoniumnitrat | gemäß Test |
| 452 | (I-13) | Tetramethylammoniumthiosulfat | gemäß Test |
| 453 | (I-13) | Tetramethylammoniumthiocyanat | gemäß Test |
| 454 | (I-13) | Tetramethylammoniumcitrat | gemäß Test |
| 455 | (I-13) | Tetramethylammoniumoxalat | gemäß Test |
| 456 | (I-13) | Tetramethylammoniumformiat | gemäß Test |
| 457 | (I-13) | Tetramethylammoniumhydrogenphosphat | gemäß Test |
| 458 | (I-13) | Tetramethylammoniumdihydrogenphosphat | gemäß Test |
| 459 | (I-13) | Tetraethylammoniumsulfat | gemäß Test |
| 460 | (I-13) | Tetraethylammoniumlaktat | gemäß Test |
| 461 | (I-13) | Tetraethylammoniumnitrat | gemäß Test |
| 462 | (I-13) | Tetraethylammoniumthiosulfat | gemäß Test |
| 463 | (I-13) | Tetraethylammoniumthiocyanat | gemäß Test |
| 464 | (I-13) | Tetraethylammoniumcitrat | gemäß Test |
| 465 | (I-13) | Tetraethylammoniumoxalat | gemäß Test |
| 466 | (I-13) | Tetraethylammoniumformiat | gemäß Test |
| 467 | (I-13) | Tetraethylammoniumhydrogenphosphat | gemäß Test |
| 468 | (I-13) | Tetraethylammoniumdihydrogenphosphat | gemäß Test |
| 469 | (I-14) | Ammoniumsulfat | gemäß Test |
| 470 | (I-14) | Ammoniumlaktat | gemäß Test |
| 471 | (I-14) | Ammoniumnitrat | gemäß Test |
| 472 | (I-14) | Ammoniumthiosulfat | gemäß Test |
| 473 | (I-14) | Ammoniumthiocyanat | gemäß Test |
| 474 | (I-14) | Ammoniumcitrat | gemäß Test |
| 475 | (I-14) | Ammoniumoxalat | gemäß Test |
| 476 | (I-14) | Ammoniumformiat | gemäß Test |
| 477 | (I-14) | Ammoniumhydrogenphosphat | gemäß Test |
| 478 | (I-14) | Ammoniumdihydrogenphosphat | gemäß Test |
| 479 | (I-14) | Ammoniumcarbonat | gemäß Test |
| 480 | (I-14) | Ammoniumsulfit | gemäß Test |
| 481 | (I-14) | Ammoniumbenzoat | gemäß Test |
| 482 | (I-14) | Ammoniumhydrogenoxalat | gemäß Test |
| 483 | (I-14) | Ammoniumhydrogencitrat | gemäß Test |
| 484 | (I-14) | Ammoniumacetat | gemäß Test |
| 485 | (I-14) | Tetramethylammoniumsulfat | gemäß Test |
| 486 | (I-14) | Tetramethylammoniumlaktat | gemäß Test |
| 487 | (I-14) | Tetramethylammoniumnitrat | gemäß Test |
| 488 | (I-14) | Tetramethylammoniumthiosulfat | gemäß Test |
| 489 | (I-14) | Tetramethylammoniumthiocyanat | gemäß Test |
| 490 | (I-14) | Tetramethylammoniumcitrat | gemäß Test |
| 491 | (I-14) | Tetramethylammoniumoxalat | gemäß Test |
| 492 | (I-14) | Tetramethylammoniumformiat | gemäß Test |
| 493 | (I-14) | Tetramethylammoniumhydrogenphosphat | gemäß Test |
| 494 | (I-14) | Tetramethylammoniumdihydrogenphosphat | gemäß Test |
| 495 | (I-14) | Tetraethylammoniumsulfat | gemäß Test |
| 496 | (I-14) | Tetraethylammoniumlaktat | gemäß Test |
| 497 | (I-14) | Tetraethylammoniumnitrat | gemäß Test |
| 498 | (I-14) | Tetraethylammoniumthiosulfat | gemäß Test |
| 499 | (I-14) | Tetraethylammoniumthiocyanat | gemäß Test |
| 500 | (I-14) | Tetraethylammoniumcitrat | gemäß Test |
| 501 | (I-14) | Tetraethylammoniumoxalat | gemäß Test |
| 502 | (I-14) | Tetraethylammoniumformiat | gemäß Test |
| 503 | (I-14) | Tetraethylammoniumhydrogenphosphat | gemäß Test |
| 504 | (I-14) | Tetraethylammoniumdihydrogenphosphat | gemäß Test |
| 505 | (I-15) | Ammoniumsulfat | gemäß Test |
| 506 | (I-15) | Ammoniumlaktat | gemäß Test |
| 507 | (I-15) | Ammoniumnitrat | gemäß Test |
| 508 | (I-15) | Ammoniumthiosulfat | gemäß Test |
| 509 | (I-15) | Ammoniumthiocyanat | gemäß Test |
| 510 | (I-15) | Ammoniumcitrat | gemäß Test |
| 511 | (I-15) | Ammoniumoxalat | gemäß Test |
| 512 | (I-15) | Ammoniumformiat | gemäß Test |
| 513 | (I-15) | Ammoniumhydrogenphosphat | gemäß Test |
| 514 | (I-15) | Ammoniumdihydrogenphosphat | gemäß Test |
| 515 | (I-15) | Ammoniumcarbonat | gemäß Test |
| 516 | (I-15) | Ammoniumsulfit | gemäß Test |
| 517 | (I-15) | Ammoniumbenzoat | gemäß Test |
| 518 | (I-15) | Ammoniumhydrogenoxalat | gemäß Test |
| 519 | (I-15) | Ammoniumhydrogencitrat | gemäß Test |
| 520 | (I-15) | Ammoniumacetat | gemäß Test |
| 521 | (I-15) | Tetramethylammoniumsulfat | gemäß Test |
| 522 | (I-15) | Tetramethylammoniumlaktat | gemäß Test |
| 523 | (I-15) | Tetramethylammoniumnitrat | gemäß Test |
| 524 | (I-15) | Tetramethylammoniumthiosulfat | gemäß Test |
| 525 | (I-15) | Tetramethylammoniumthiocyanat | gemäß Test |
| 526 | (I-15) | Tetramethylammoniumcitrat | gemäß Test |
| 527 | (I-15) | Tetramethylammoniumoxalat | gemäß Test |
| 528 | (I-15) | Tetramethylammoniumformiat | gemäß Test |
| 529 | (I-15) | Tetramethylammoniumhydrogenphosphat | gemäß Test |
| 530 | (I-15) | Tetramethylammoniumdihydrogenphosphat | gemäß Test |
| 531 | (I-15) | Tetraethylammoniumsulfat | gemäß Test |
| 532 | (I-15) | Tetraethylammoniumlaktat | gemäß Test |
| 533 | (I-15) | Tetraethylammoniumnitrat | gemäß Test |
| 534 | (I-15) | Tetraethylammoniumthiosulfat | gemäß Test |
| 535 | (I-15) | Tetraethylammoniumthiocyanat | gemäß Test |
| 536 | (I-15) | Tetraethylammoniumcitrat | gemäß Test |
| 537 | (I-15) | Tetraethylammoniumoxalat | gemäß Test |
| 538 | (I-15) | Tetraethylammoniumformiat | gemäß Test |
| 539 | (I-15) | Tetraethylammoniumhydrogenphosphat | gemäß Test |
| 540 | (I-15) | Tetraethylammoniumdihydrogenphosphat | gemäß Test |
| 541 | (I-16) | Ammoniumsulfat | gemäß Test |
| 542 | (I-16) | Ammoniumlaktat | gemäß Test |
| 543 | (I-16) | Ammoniumnitrat | gemäß Test |
| 544 | (I-16) | Ammoniumthiosulfat | gemäß Test |
| 545 | (I-16) | Ammoniumthiocyanat | gemäß Test |
| 546 | (I-16) | Ammoniumcitrat | gemäß Test |
| 547 | (I-16) | Ammoniumoxalat | gemäß Test |
| 548 | (I-16) | Ammoniumformiat | gemäß Test |
| 549 | (I-16) | Ammoniumhydrogenphosphat | gemäß Test |
| 550 | (I-16) | Ammoniumdihydrogenphosphat | gemäß Test |
| 551 | (I-16) | Ammoniumcarbonat | gemäß Test |
| 552 | (I-16) | Ammoniumsulfit | gemäß Test |
| 553 | (I-16) | Ammoniumbenzoat | gemäß Test |
| 554 | (I-16) | Ammoniumhydrogenoxalat | gemäß Test |
| 555 | (I-16) | Ammoniumhydrogencitrat | gemäß Test |
| 556 | (I-16) | Ammoniumacetat | gemäß Test |
| 557 | (I-16) | Tetramethylammoniumsulfat | gemäß Test |
| 558 | (I-16) | Tetramethylammoniumlaktat | gemäß Test |
| 559 | (I-16) | Tetramethylammoniumnitrat | gemäß Test |
| 560 | (I-16) | Tetramethylammoniumthiosulfat | gemäß Test |
| 561 | (I-16) | Tetramethylammoniumthiocyanat | gemäß Test |
| 562 | (I-16) | Tetramethylammoniumcitrat | gemäß Test |
| 563 | (I-16) | Tetramethylammoniumoxalat | gemäß Test |
| 564 | (I-16) | Tetramethylammoniumformiat | gemäß Test |
| 565 | (I-16) | Tetramethylammoniumhydrogenphosphat | gemäß Test |
| 566 | (I-16) | Tetramethylammoniumdihydrogenphosphat | gemäß Test |
| 567 | (I-16) | Tetraethylammoniumsulfat | gemäß Test |
| 568 | (I-16) | Tetraethylammoniumlaktat | gemäß Test |
| 569 | (I-16) | Tetraethylammoniumnitrat | gemäß Test |
| 570 | (I-16) | Tetraethylammoniumthiosulfat | gemäß Test |
| 571 | (I-16) | Tetraethylammoniumthiocyanat | gemäß Test |
| 572 | (I-16) | Tetraethylammoniumcitrat | gemäß Test |
| 573 | (I-16) | Tetraethylammoniumoxalat | gemäß Test |
| 574 | (I-16) | Tetraethylammoniumformiat | gemäß Test |
| 575 | (I-16) | Tetraethylammoniumhydrogenphosphat | gemäß Test |
| 576 | (I-16) | Tetraethylammoniumdihydrogenphosphat | gemäß Test |
| 577 | (I-17) | Ammoniumsulfat | gemäß Test |
| 578 | (I-17) | Ammoniumlaktat | gemäß Test |
| 579 | (I-17) | Ammoniumnitrat | gemäß Test |
| 580 | (I-17) | Ammoniumthiosulfat | gemäß Test |
| 581 | (I-17) | Ammoniumthiocyanat | gemäß Test |
| 582 | (I-17) | Ammoniumcitrat | gemäß Test |
| 583 | (I-17) | Ammoniumoxalat | gemäß Test |
| 584 | (I-17) | Ammoniumformiat | gemäß Test |
| 585 | (I-17) | Ammoniumhydrogenphosphat | gemäß Test |
| 586 | (I-17) | Ammoniumdihydrogenphosphat | gemäß Test |
| 587 | (I-17) | Ammoniumcarbonat | gemäß Test |
| 588 | (I-17) | Ammoniumsulfit | gemäß Test |
| 589 | (I-17) | Ammoniumbenzoat | gemäß Test |
| 590 | (I-17) | Ammoniumhydrogenoxalat | gemäß Test |
| 591 | (I-17) | Ammoniumhydrogencitrat | gemäß Test |
| 592 | (I-17) | Ammoniumacetat | gemäß Test |
| 593 | (I-17) | Tetramethylammoniumsulfat | gemäß Test |
| 594 | (I-17) | Tetramethylammoniumlaktat | gemäß Test |
| 595 | (I-17) | Tetramethylammoniumnitrat | gemäß Test |
| 596 | (I-17) | Tetramethylammoniumthiosulfat | gemäß Test |
| 597 | (I-17) | Tetramethylammoniumthiocyanat | gemäß Test |
| 598 | (I-17) | Tetramethylammoniumcitrat | gemäß Test |
| 599 | (I-17) | Tetramethylammoniumoxalat | gemäß Test |
| 600 | (I-17) | Tetramethylammoniumformiat | gemäß Test |
| 601 | (I-17) | Tetramethylammoniumhydrogenphosphat | gemäß Test |
| 602 | (I-17) | Tetramethylammoniumdihydrogenphosphat | gemäß Test |
| 603 | (I-17) | Tetraethylammoniumsulfat | gemäß Test |
| 604 | (I-17) | Tetraethylammoniumlaktat | gemäß Test |
| 605 | (I-17) | Tetraethylammoniumnitrat | gemäß Test |
| 606 | (I-17) | Tetraethylammoniumthiosulfat | gemäß Test |
| 607 | (I-17) | Tetraethylammoniumthiocyanat | gemäß Test |
| 608 | (I-17) | Tetraethylammoniumcitrat | gemäß Test |
| 609 | (I-17) | Tetraethylammoniumoxalat | gemäß Test |
| 610 | (I-17) | Tetraethylammoniumformiat | gemäß Test |
| 611 | (I-17) | Tetraethylammoniumhydrogenphosphat | gemäß Test |
| 612 | (I-17) | Tetraethylammoniumdihydrogenphosphat | gemäß Test |
| 613 | (I-18) | Ammoniumsulfat | gemäß Test |
| 614 | (I-18) | Ammoniumlaktat | gemäß Test |
| 615 | (I-18) | Ammoniumnitrat | gemäß Test |
| 616 | (I-18) | Ammoniumthiosulfat | gemäß Test |
| 617 | (I-18) | Ammoniumthiocyanat | gemäß Test |
| 618 | (I-18) | Ammoniumcitrat | gemäß Test |
| 619 | (I-18) | Ammoniumoxalat | gemäß Test |
| 620 | (I-18) | Ammoniumformiat | gemäß Test |
| 621 | (I-18) | Ammoniumhydrogenphosphat | gemäß Test |
| 622 | (I-18) | Ammoniumdihydrogenphosphat | gemäß Test |
| 623 | (I-18) | Ammoniumcarbonat | gemäß Test |
| 624 | (I-18) | Ammoniumsulfit | gemäß Test |
| 625 | (I-18) | Ammoniumbenzoat | gemäß Test |
| 626 | (I-18) | Ammoniumhydrogenoxalat | gemäß Test |
| 627 | (I-18) | Ammoniumhydrogencitrat | gemäß Test |
| 628 | (I-18) | Ammoniumacetat | gemäß Test |
| 629 | (I-18) | Tetramethylammoniumsulfat | gemäß Test |
| 630 | (I-18) | Tetramethylammoniumlaktat | gemäß Test |
| 631 | (I-18) | Tetramethylammoniumnitrat | gemäß Test |
| 632 | (I-18) | Tetramethylammoniumthiosulfat | gemäß Test |
| 633 | (I-18) | Tetramethylammoniumthiocyanat | gemäß Test |
| 634 | (I-18) | Tetramethylammoniumcitrat | gemäß Test |
| 635 | (I-18) | Tetramethylammoniumoxalat | gemäß Test |
| 636 | (I-18) | Tetramethylammoniumformiat | gemäß Test |
| 637 | (I-18) | Tetramethylammoniumhydrogenphosphat | gemäß Test |
| 638 | (I-18) | Tetramethylammoniumdihydrogenphosphat | gemäß Test |
| 639 | (I-18) | Tetraethylammoniumsulfat | gemäß Test |
| 640 | (I-18) | Tetraethylammoniumlaktat | gemäß Test |
| 641 | (I-18) | Tetraethylammoniumnitrat | gemäß Test |
| 642 | (I-18) | Tetraethylammoniumthiosulfat | gemäß Test |
| 643 | (I-18) | Tetraethylammoniumthiocyanat | gemäß Test |
| 644 | (I-18) | Tetraethylammoniumcitrat | gemäß Test |
| 645 | (I-18) | Tetraethylammoniumoxalat | gemäß Test |
| 646 | (I-18) | Tetraethylammoniumformiat | gemäß Test |
| 647 | (I-18) | Tetraethylammoniumhydrogenphosphat | gemäß Test |
| 648 | (I-18) | Tetraethylammoniumdihydrogenphosphat | gemäß Test |
| 649 | (I-19) | Ammoniumsulfat | gemäß Test |
| 650 | (I-19) | Ammoniumlaktat | gemäß Test |
| 651 | (I-19) | Ammoniumnitrat | gemäß Test |
| 652 | (I-19) | Ammoniumthiosulfat | gemäß Test |
| 653 | (I-19) | Ammoniumthiocyanat | gemäß Test |
| 654 | (I-19) | Ammoniumcitrat | gemäß Test |
| 655 | (I-19) | Ammoniumoxalat | gemäß Test |
| 656 | (I-19) | Ammoniumformiat | gemäß Test |
| 657 | (I-19) | Ammoniumhydrogenphosphat | gemäß Test |
| 658 | (I-19) | Ammoniumdihydrogenphosphat | gemäß Test |
| 659 | (I-19) | Ammoniumcarbonat | gemäß Test |
| 660 | (I-19) | Ammoniumsulfit | gemäß Test |
| 661 | (I-19) | Ammoniumbenzoat | gemäß Test |
| 662 | (I-19) | Ammoniumhydrogenoxalat | gemäß Test |
| 663 | (I-19) | Ammoniumhydrogencitrat | gemäß Test |
| 664 | (I-19) | Ammoniumacetat | gemäß Test |
| 665 | (I-19) | Tetramethylammoniumsulfat | gemäß Test |
| 666 | (I-19) | Tetramethylammoniumlaktat | gemäß Test |
| 667 | (I-19) | Tetramethylammoniumnitrat | gemäß Test |
| 668 | (I-19) | Tetramethylammoniumthiosulfat | gemäß Test |
| 669 | (I-19) | Tetramethylammoniumthiocyanat | gemäß Test |
| 670 | (I-19) | Tetramethylammoniumcitrat | gemäß Test |
| 671 | (I-19) | Tetramethylammoniumoxalat | gemäß Test |
| 672 | (I-19) | Tetramethylammoniumformiat | gemäß Test |
| 673 | (I-19) | Tetramethylammoniumhydrogenphosphat | gemäß Test |
| 674 | (I-19) | Tetramethylammoniumdihydrogenphosphat | gemäß Test |
| 675 | (I-19) | Tetraethylammoniumsulfat | gemäß Test |
| 676 | (I-19) | Tetraethylammoniumlaktat | gemäß Test |
| 677 | (I-19) | Tetraethylammoniumnitrat | gemäß Test |
| 678 | (I-19) | Tetraethylammoniumthiosulfat | gemäß Test |
| 679 | (I-19) | Tetraethylammoniumthiocyanat | gemäß Test |
| 680 | (I-19) | Tetraethylammoniumcitrat | gemäß Test |
| 681 | (I-19) | Tetraethylammoniumoxalat | gemäß Test |
| 682 | (I-19) | Tetraethylammoniumformiat | gemäß Test |
| 683 | (I-19) | Tetraethylammoniumhydrogenphosphat | gemäß Test |
| 684 | (I-19) | Tetraethylammoniumdihydrogenphosphat | gemäß Test |
| 685 | (I-20) | Ammoniumsulfat | gemäß Test |
| 686 | (I-20) | Ammoniumlaktat | gemäß Test |
| 687 | (I-20) | Ammoniumnitrat | gemäß Test |
| 688 | (I-20) | Ammoniumthiosulfat | gemäß Test |
| 689 | (I-20) | Ammoniumthiocyanat | gemäß Test |
| 690 | (I-20) | Ammoniumcitrat | gemäß Test |
| 691 | (I-20) | Ammoniumoxalat | gemäß Test |
| 692 | (I-20) | Ammoniumformiat | gemäß Test |
| 693 | (I-20) | Ammoniumhydrogenphosphat | gemäß Test |
| 694 | (I-20) | Ammoniumdihydrogenphosphat | gemäß Test |
| 695 | (I-20) | Ammoniumcarbonat | gemäß Test |
| 696 | (I-20) | Ammoniumsulfit | gemäß Test |
| 697 | (I-20) | Ammoniumbenzoat | gemäß Test |
| 698 | (I-20) | Ammoniumhydrogenoxalat | gemäß Test |
| 699 | (I-20) | Ammoniumhydrogencitrat | gemäß Test |
| 700 | (I-20) | Ammoniumacetat | gemäß Test |
| 701 | (I-20) | Tetramethylammoniumsulfat | gemäß Test |
| 702 | (I-20) | Tetramethylammoniumlaktat | gemäß Test |
| 703 | (I-20) | Tetramethylammoniumnitrat | gemäß Test |
| 704 | (I-20) | Tetramethylammoniumthiosulfat | gemäß Test |
| 705 | (I-20) | Tetramethylammoniumthiocyanat | gemäß Test |
| 706 | (I-20) | Tetramethylammoniumcitrat | gemäß Test |
| 707 | (I-20) | Tetramethylammoniumoxalat | gemäß Test |
| 708 | (I-20) | Tetramethylammoniumformiat | gemäß Test |
| 709 | (I-20) | Tetramethylammoniumhydrogenphosphat | gemäß Test |
| 710 | (I-20) | Tetramethylammoniumdihydrogenphosphat | gemäß Test |
| 711 | (I-20) | Tetraethylammoniumsulfat | gemäß Test |
| 712 | (I-20) | Tetraethylammoniumlaktat | gemäß Test |
| 713 | (I-20) | Tetraethylammoniumnitrat | gemäß Test |
| 714 | (I-20) | Tetraethylammoniumthiosulfat | gemäß Test |
| 715 | (I-20) | Tetraethylammoniumthiocyanat | gemäß Test |
| 716 | (I-20) | Tetraethylammoniumcitrat | gemäß Test |
| 717 | (I-20) | Tetraethylammoniumoxalat | gemäß Test |
| 718 | (I-20) | Tetraethylammoniumformiat | gemäß Test |
| 719 | (I-20) | Tetraethylammoniumhydrogenphosphat | gemäß Test |
| 720 | (I-20) | Tetraethylammoniumdihydrogenphosphat | gemäß Test |
| 721 | (I-21) | Ammoniumsulfat | gemäß Test |
| 722 | (I-21) | Ammoniumlaktat | gemäß Test |
| 723 | (I-21) | Ammoniumnitrat | gemäß Test |
| 724 | (I-21) | Ammoniumthiosulfat | gemäß Test |
| 725 | (I-21) | Ammoniumthiocyanat | gemäß Test |
| 726 | (I-21) | Ammoniumcitrat | gemäß Test |
| 727 | (I-21) | Ammoniumoxalat | gemäß Test |
| 728 | (I-21) | Ammoniumformiat | gemäß Test |
| 729 | (I-21) | Ammoniumhydrogenphosphat | gemäß Test |
| 730 | (I-21) | Ammoniumdihydrogenphosphat | gemäß Test |
| 731 | (I-21) | Ammoniumcarbonat | gemäß Test |
| 732 | (I-21) | Ammoniumsulfit | gemäß Test |
| 733 | (I-21) | Ammoniumbenzoat | gemäß Test |
| 734 | (I-21) | Ammoniumhydrogenoxalat | gemäß Test |
| 735 | (I-21) | Ammoniumhydrogencitrat | gemäß Test |
| 736 | (I-21) | Ammoniumacetat | gemäß Test |
| 737 | (I-21) | Tetramethylammoniumsulfat | gemäß Test |
| 738 | (I-21) | Tetramethylammoniumlaktat | gemäß Test |
| 739 | (I-21) | Tetramethylammoniumnitrat | gemäß Test |
| 740 | (I-21) | Tetramethylammoniumthiosulfat | gemäß Test |
| 741 | (I-21) | Tetramethylammoniumthiocyanat | gemäß Test |
| 742 | (I-21) | Tetramethylammoniumcitrat | gemäß Test |
| 743 | (I-21) | Tetramethylammoniumoxalat | gemäß Test |
| 744 | (I-21) | Tetramethylammoniumformiat | gemäß Test |
| 745 | (I-21) | Tetramethylammoniumhydrogenphosphat | gemäß Test |
| 746 | (I-21) | Tetramethylammoniumdihydrogenphosphat | gemäß Test |
| 747 | (I-21) | Tetraethylammoniumsulfat | gemäß Test |
| 748 | (I-21) | Tetraethylammoniumlaktat | gemäß Test |
| 749 | (I-21) | Tetraethylammoniumnitrat | gemäß Test |
| 750 | (I-21) | Tetraethylammoniumthiosulfat | gemäß Test |
| 751 | (I-21) | Tetraethylammoniumthiocyanat | gemäß Test |
| 752 | (I-21) | Tetraethylammoniumcitrat | gemäß Test |
| 753 | (I-21) | Tetraethylammoniumoxalat | gemäß Test |
| 754 | (I-21) | Tetraethylammoniumformiat | gemäß Test |
| 755 | (I-21) | Tetraethylammoniumhydrogenphosphat | gemäß Test |
| 756 | (I-21) | Tetraethylammoniumdihydrogenphosphat | gemäß Test |
| 757 | (I-22) | Ammoniumsulfat | gemäß Test |
| 758 | (I-22) | Ammoniumlaktat | gemäß Test |
| 759 | (I-22) | Ammoniumnitrat | gemäß Test |
| 760 | (I-22) | Ammoniumthiosulfat | gemäß Test |
| 761 | (I-22) | Ammoniumthiocyanat | gemäß Test |
| 762 | (I-22) | Ammoniumcitrat | gemäß Test |
| 763 | (I-22) | Ammoniumoxalat | gemäß Test |
| 764 | (I-22) | Ammoniumformiat | gemäß Test |
| 765 | (I-22) | Ammoniumhydrogenphosphat | gemäß Test |
| 766 | (I-22) | Ammoniumdihydrogenphosphat | gemäß Test |
| 767 | (I-22) | Ammoniumcarbonat | gemäß Test |
| 768 | (I-22) | Ammoniumsulfit | gemäß Test |
| 769 | (I-22) | Ammoniumbenzoat | gemäß Test |
| 770 | (I-22) | Ammoniumhydrogenoxalat | gemäß Test |
| 771 | (I-22) | Ammoniumhydrogencitrat | gemäß Test |
| 772 | (I-22) | Ammoniumacetat | gemäß Test |
| 773 | (I-22) | Tetramethylammoniumsulfat | gemäß Test |
| 774 | (I-22) | Tetramethylammoniumlaktat | gemäß Test |
| 775 | (I-22) | Tetramethylammoniumnitrat | gemäß Test |
| 776 | (I-22) | Tetramethylammoniumthiosulfat | gemäß Test |
| 777 | (I-22) | Tetramethylammoniumthiocyanat | gemäß Test |
| 778 | (I-22) | Tetramethylammoniumcitrat | gemäß Test |
| 779 | (I-22) | Tetramethylammoniumoxalat | gemäß Test |
| 780 | (I-22) | Tetramethylammoniumformiat | gemäß Test |
| 781 | (I-22) | Tetramethylammoniumhydrogenphosphat | gemäß Test |
| 782 | (I-22) | Tetramethylammoniumdihydrogenphosphat | gemäß Test |
| 783 | (I-22) | Tetraethylammoniumsulfat | gemäß Test |
| 784 | (I-22) | Tetraethylammoniumlaktat | gemäß Test |
| 785 | (I-22) | Tetraethylammoniumnitrat | gemäß Test |
| 786 | (I-22) | Tetraethylammoniumthiosulfat | gemäß Test |
| 787 | (I-22) | Tetraethylammoniumthiocyanat | gemäß Test |
| 788 | (I-22) | Tetraethylammoniumcitrat | gemäß Test |
| 789 | (I-22) | Tetraethylammoniumoxalat | gemäß Test |
| 790 | (I-22) | Tetraethylammoniumformiat | gemäß Test |
| 791 | (I-22) | Tetraethylammoniumhydrogenphosphat | gemäß Test |
| 792 | (I-22) | Tetraethylammoniumdihydrogenphosphat | gemäß Test |
| 793 | (I-23) | Ammoniumsulfat | gemäß Test |
| 794 | (I-23) | Ammoniumlaktat | gemäß Test |
| 795 | (I-23) | Ammoniumnitrat | gemäß Test |
| 796 | (I-23) | Ammoniumthiosulfat | gemäß Test |
| 797 | (I-23) | Ammoniumthiocyanat | gemäß Test |
| 798 | (I-23) | Ammoniumcitrat | gemäß Test |
| 799 | (I-23) | Ammoniumoxalat | gemäß Test |
| 800 | (I-23) | Ammoniumformiat | gemäß Test |
| 801 | (I-23) | Ammoniumhydrogenphosphat | gemäß Test |
| 802 | (I-23) | Ammoniumdihydrogenphosphat | gemäß Test |
| 803 | (I-23) | Ammoniumcarbonat | gemäß Test |
| 804 | (I-23) | Ammoniumsulfit | gemäß Test |
| 805 | (I-23) | Ammoniumbenzoat | gemäß Test |
| 806 | (I-23) | Ammoniumhydrogenoxalat | gemäß Test |
| 807 | (I-23) | Ammoniumhydrogencitrat | gemäß Test |
| 808 | (I-23) | Ammoniumacetat | gemäß Test |
| 809 | (I-23) | Tetramethylammoniumsulfat | gemäß Test |
| 810 | (I-23) | Tetramethylammoniumlaktat | gemäß Test |
| 811 | (I-23) | Tetramethylammoniumnitrat | gemäß Test |
| 812 | (I-23) | Tetramethylammoniumthiosulfat | gemäß Test |
| 813 | (I-23) | Tetramethylammoniumthiocyanat | gemäß Test |
| 814 | (I-23) | Tetramethylammoniumcitrat | gemäß Test |
| 815 | (I-23) | Tetramethylammoniumoxalat | gemäß Test |
| 816 | (I-23) | Tetramethylammoniumformiat | gemäß Test |
| 817 | (I-23) | Tetramethylammoniumhydrogenphosphat | gemäß Test |
| 818 | (I-23) | Tetramethylammoniumdihydrogenphosphat | gemäß Test |
| 819 | (I-23) | Tetraethylammoniumsulfat | gemäß Test |
| 820 | (I-23) | Tetraethylammoniumlaktat | gemäß Test |
| 821 | (I-23) | Tetraethylammoniumnitrat | gemäß Test |
| 822 | (I-23) | Tetraethylammoniumthiosulfat | gemäß Test |
| 823 | (I-23) | Tetraethylammoniumthiocyanat | gemäß Test |
| 824 | (I-23) | Tetraethylammoniumcitrat | gemäß Test |
| 825 | (I-23) | Tetraethylammoniumoxalat | gemäß Test |
| 826 | (I-23) | Tetraethylammoniumformiat | gemäß Test |
| 827 | (I-23) | Tetraethylammoniumhydrogenphosphat | gemäß Test |
| 828 | (I-23) | Tetraethylammoniumdihydrogenphosphat | gemäß Test |
| 829 | (1-24) | Ammoniumsulfat | gemäß Test |
| 830 | (I-24) | Ammoniumlaktat | gemäß Test |
| 831 | (I-24) | Ammoniumnitrat | gemäß Test |
| 832 | (I-24) | Ammoniumthiosulfat | gemäß Test |
| 833 | (I-24) | Ammoniumthiocyanat | gemäß Test |
| 834 | (I-24) | Ammoniumcitrat | gemäß Test |
| 835 | (I-24) | Ammoniumoxalat | gemäß Test |
| 836 | (I-24) | Ammoniumformiat | gemäß Test |
| 837 | (I-24) | Ammoniumhydrogenphosphat | gemäß Test |
| 838 | (I-24) | Ammoniumdihydrogenphosphat | gemäß Test |
| 839 | (I-24) | Ammoniumcarbonat | gemäß Test |
| 840 | (I-24) | Ammoniumsulfit | gemäß Test |
| 841 | (I-24) | Ammoniumbenzoat | gemäß Test |
| 842 | (I-24) | Ammoniumhydrogenoxalat | gemäß Test |
| 843 | (I-24) | Ammoniumhydrogencitrat | gemäß Test |
| 844 | (I-24) | Ammoniumacetat | gemäß Test |
| 845 | (I-24) | Tetramethylammoniumsulfat | gemäß Test |
| 846 | (I-24) | Tetramethylammoniumlaktat | gemäß Test |
| 847 | (I-24) | Tetramethylammoniumnitrat | gemäß Test |
| 848 | (I-24) | Tetramethylammoniumthiosulfat | gemäß Test |
| 849 | (I-24) | Tetramethylammoniumthiocyanat | gemäß Test |
| 850 | (I-24) | Tetramethylammoniumcitrat | gemäß Test |
| 851 | (I-24) | Tetramethylammoniumoxalat | gemäß Test |
| 852 | (I-24) | Tetramethylammoniumformiat | gemäß Test |
| 853 | (I-24) | Tetramethylammoniumhydrogenphosphat | gemäß Test |
| 854 | (I-24) | Tetramethylammoniumdihydrogenphosphat | gemäß Test |
| 855 | (I-24) | Tetraethylammoniumsulfat | gemäß Test |
| 856 | (I-24) | Tetraethylammoniumlaktat | gemäß Test |
| 857 | (I-24) | Tetraethylammoniumnitrat | gemäß Test |
| 858 | (I-24) | Tetraethylammoniumthiosulfat | gemäß Test |
| 859 | (I-24) | Tetraethylammoniumthiocyanat | gemäß Test |
| 860 | (I-24) | Tetraethylammoniumcitrat | gemäß Test |
| 861 | (I-24) | Tetraethylammoniumoxalat | gemäß Test |
| 862 | (I-24) | Tetraethylammoniumformiat | gemäß Test |
| 863 | (I-24) | Tetraethylammoniumhydrogenphosphat | gemäß Test |
| 864 | (I-24) | Tetraethylammoniumdihydrogenphosphat | gemäß Test |
| 865 | (I-25) | Ammoniumsulfat | gemäß Test |
| 866 | (I-25) | Ammoniumlaktat | gemäß Test |
| 867 | (I-25) | Ammoniumnitrat | gemäß Test |
| 868 | (I-25) | Ammoniumthiosulfat | gemäß Test |
| 869 | (I-25) | Ammoniumthiocyanat | gemäß Test |
| 870 | (I-25) | Ammoniumcitrat | gemäß Test |
| 871 | (I-25) | Ammoniumoxalat | gemäß Test |
| 872 | (I-25) | Ammoniumformiat | gemäß Test |
| 873 | (I-25) | Ammoniumhydrogenphosphat | gemäß Test |
| 874 | (I-25) | Ammoniumdihydrogenphosphat | gemäß Test |
| 875 | (I-25) | Ammoniumcarbonat | gemäß Test |
| 876 | (I-25) | Ammoniumsulfit | gemäß Test |
| 877 | (I-25) | Ammoniumbenzoat | gemäß Test |
| 878 | (I-25) | Ammoniumhydrogenoxalat | gemäß Test |
| 879 | (I-25) | Ammoniumhydrogencitrat | gemäß Test |
| 880 | (I-25) | Ammoniumacetat | gemäß Test |
| 881 | (I-25) | Tetramethylammoniumsulfat | gemäß Test |
| 882 | (I-25) | Tetramethylammoniumlaktat | gemäß Test |
| 883 | (I-25) | Tetramethylammoniumnitrat | gemäß Test |
| 884 | (I-25) | Tetramethylammoniumthiosulfat | gemäß Test |
| 885 | (I-25) | Tetramethylammoniumthiocyanat | gemäß Test |
| 886 | (I-25) | Tetramethylammoniumcitrat | gemäß Test |
| 887 | (I-25) | Tetramethylammoniumoxalat | gemäß Test |
| 888 | (I-25) | Tetramethylammoniumformiat | gemäß Test |
| 889 | (I-25) | Tetramethylammoniumhydrogenphosphat | gemäß Test |
| 890 | (I-25) | Tetramethylammoniumdihydrogenphosphat | gemäß Test |
| 891 | (I-25) | Tetraethylammoniumsulfat | gemäß Test |
| 892 | (I-25) | Tetraethylammoniumlaktat | gemäß Test |
| 893 | (I-25) | Tetraethylammoniumnitrat | gemäß Test |
| 894 | (I-25) | Tetraethylammoniumthiosulfat | gemäß Test |
| 895 | (I-25) | Tetraethylammoniumthiocyanat | gemäß Test |
| 896 | (I-25) | Tetraethylammoniumcitrat | gemäß Test |
| 897 | (I-25) | Tetraethylammoniumoxalat | gemäß Test |
| 898 | (I-25) | Tetraethylammoniumformiat | gemäß Test |
| 899 | (I-25) | Tetraethylammoniumhydrogenphosphat | gemäß Test |
| 900 | (I-25) | Tetraethylammoniumdihydrogenphosphat | gemäß Test |
| 901 | (I-26) | Ammoniumsulfat | gemäß Test |
| 902 | (I-26) | Ammoniumlaktat | gemäß Test |
| 903 | (I-26) | Ammoniumnitrat | gemäß Test |
| 904 | (I-26) | Ammoniumthiosulfat | gemäß Test |
| 905 | (I-26) | Ammoniumthiocyanat | gemäß Test |
| 906 | (I-26) | Ammoniumcitrat | gemäß Test |
| 907 | (I-26) | Ammoniumoxalat | gemäß Test |
| 908 | (I-26) | Ammoniumformiat | gemäß Test |
| 909 | (I-26) | Ammoniumhydrogenphosphat | gemäß Test |
| 910 | (I-26) | Ammoniumdihydrogenphosphat | gemäß Test |
| 911 | (I-26) | Ammoniumcarbonat | gemäß Test |
| 912 | (I-26) | Ammoniumsulfit | gemäß Test |
| 913 | (I-26) | Ammoniumbenzoat | gemäß Test |
| 914 | (I-26) | Ammoniumhydrogenoxalat | gemäß Test |
| 915 | (I-26) | Ammoniumhydrogencitrat | gemäß Test |
| 916 | (I-26) | Ammoniumacetat | gemäß Test |
| 917 | (I-26) | Tetramethylammoniumsulfat | gemäß Test |
| 918 | (I-26) | Tetramethylammoniumlaktat | gemäß Test |
| 919 | (I-26) | Tetramethylammoniumnitrat | gemäß Test |
| 920 | (I-26) | Tetramethylammoniumthiosulfat | gemäß Test |
| 921 | (I-26) | Tetramethylammoniumthiocyanat | gemäß Test |
| 922 | (I-26) | Tetramethylammoniumcitrat | gemäß Test |
| 923 | (I-26) | Tetramethylammoniumoxalat | gemäß Test |
| 924 | (I-26) | Tetramethylammoniumformiat | gemäß Test |
| 925 | (I-26) | Tetramethylammoniumhydrogenphosphat | gemäß Test |
| 926 | (I-26) | Tetramethylammoniumdihydrogenphosphat | gemäß Test |
| 927 | (I-26) | Tetraethylammoniumsulfat | gemäß Test |
| 928 | (I-26) | Tetraethylammoniumlaktat | gemäß Test |
| 929 | (I-26) | Tetraethylammoniumnitrat | gemäß Test |
| 930 | (I-26) | Tetraethylammoniumthiosulfat | gemäß Test |
| 931 | (I-26) | Tetraethylammoniumthiocyanat | gemäß Test |
| 932 | (I-26) | Tetraethylammoniumcitrat | gemäß Test |
| 933 | (I-26) | Tetraethylammoniumoxalat | gemäß Test |
| 934 | (I-26) | Tetraethylammoniumformiat | gemäß Test |
| 935 | (I-26) | Tetraethylammoniumhydrogenphosphat | gemäß Test |
| 936 | (I-26) | Tetraethylammoniumdihydrogenphosphat | gemäß Test |
| 937 | (I-27) | Ammoniumsulfat | gemäß Test |
| 938 | (I-27) | Ammoniumlaktat | gemäß Test |
| 939 | (I-27) | Ammoniumnitrat | gemäß Test |
| 940 | (I-27) | Ammoniumthiosulfat | gemäß Test |
| 941 | (I-27) | Ammoniumthiocyanat | gemäß Test |
| 942 | (I-27) | Ammoniumcitrat | gemäß Test |
| 943 | (I-27) | Ammoniumoxalat | gemäß Test |
| 944 | (I-27) | Ammoniumformiat | gemäß Test |
| 945 | (I-27) | Ammoniumhydrogenphosphat | gemäß Test |
| 946 | (I-27) | Ammoniumdihydrogenphosphat | gemäß Test |
| 947 | (I-27) | Ammoniumcarbonat | gemäß Test |
| 948 | (I-27) | Ammoriiumsulfit | gemäß Test |
| 949 | (I-27) | Ammoniumbenzoat | gemäß Test |
| 950 | (I-27) | Ammoniumhydrogenoxalat | gemäß Test |
| 951 | (I-27) | Ammoniumhydrogencitrat | gemäß Test |
| 952 | (I-27) | Ammoniumacetat | gemäß Test |
| 953 | (I-27) | Tetramethylammoniumsulfat | gemäß Test |
| 954 | (I-27) | Tetramethylammoniumlaktat | gemäß Test |
| 955 | (I-27) | Tetramethylammoniumnitrat | gemäß Test |
| 956 | (I-27) | Tetramethylammoniumthiosulfat | gemäß Test |
| 957 | (I-27) | Tetramethylammoniumthiocyanat | gemäß Test |
| 958 | (I-27) | Tetramethylammoniumcitrat | gemäß Test |
| 959 | (I-27) | Tetramethylammoniumoxalat | gemäß Test |
| 960 | (I-27) | Tetramethylammoniumformiat | gemäß Test |
| 961 | (I-27) | Tetramethylammoniumhydrogenphosphat | gemäß Test |
| 962 | (I-27) | Tetramethylammoniumdihydrogenphosphat | gemäß Test |
| 963 | (I-27) | Tetraethylammoniumsulfat | gemäß Test |
| 964 | (I-27) | Tetraethylammoniumlaktat | gemäß Test |
| 965 | (I-27) | Tetraethylammoniumnitrat | gemäß Test |
| 966 | (I-27) | Tetraethylammoniumthiosulfat | gemäß Test |
| 967 | (I-27) | Tetraethylammoniumthiocyanat | gemäß Test |
| 968 | (I-27) | Tetraethylammoniumcitrat | gemäß Test |
| 969 | (I-27) | Tetraethylammoniumoxalat | gemäß Test |
| 970 | (I-27) | Tetraethylammoniumformiat | gemäß Test |
| 971 | (I-27) | Tetraethylammoniumhydrogenphosphat | gemäß Test |
| 972 | (I-27) | Tetraethylammoniumdihydrogenphosphat | gemäß Test |
| 973 | (I-28) | Ammoniumsulfat | gemäß Test |
| 974 | (I-28) | Ammoniumlaktat | gemäß Test |
| 975 | (I-28) | Ammoniumnitrat | gemäß Test |
| 976 | (I-28) | Ammoniumthiosulfat | gemäß Test |
| 977 | (I-28) | Ammoniumthiocyanat | gemäß Test |
| 978 | (I-28) | Ammoniumcitrat | gemäß Test |
| 979 | (I-28) | Ammoniumoxalat | gemäß Test |
| 980 | (I-28) | Ammoniumformiat | gemäß Test |
| 981 | (I-28) | Ammoniumhydrogenphosphat | gemäß Test |
| 982 | (I-28) | Ammoniumdihydrogenphosphat | gemäß Test |
| 983 | (I-28) | Ammoniumcarbonat | gemäß Test |
| 984 | (I-28) | Ammoniumsulfit | gemäß Test |
| 985 | (I-28) | Ammoniumbenzoat | gemäß Test |
| 986 | (I-28) | Ammoniumhydrogenoxalat | gemäß Test |
| 987 | (I-28) | Ammoniumhydrogencitrat | gemäß Test |
| 988 | (I-28) | Ammoniumacetat | gemäß Test |
| 989 | (I-28) | Tetramethylammoniumsulfat | gemäß Test |
| 990 | (I-28) | Tetramethylammoniumlaktat | gemäß Test |
| 991 | (I-28) | Tetramethylammoniumnitrat | gemäß Test |
| 992 | (I-28) | Tetramethylammoniumthiosulfat | gemäß Test |
| 993 | (I-28) | Tetramethylammoniumthiocyanat | gemäß Test |
| 994 | (I-28) | Tetramethylammoniumcitrat | gemäß Test |
| 995 | (I-28) | Tetramethylammoniumoxalat | gemäß Test |
| 996 | (I-28) | Tetramethylammoniumformiat | gemäß Test |
| 997 | (I-28) | Tetramethylammoniumhydrogenphosphat | gemäß Test |
| 998 | (I-28) | Tetramethylammoniumdihydrogenphosphat | gemäß Test |
| 999 | (I-28) | Tetraethylammoniumsulfat | gemäß Test |
| 1000 | (I-28) | Tetraethylammoniumlaktat | gemäß Test |
| 1001 | (I-28) | Tetraethylammoniumnitrat | gemäß Test |
| 1002 | (I-28) | Tetraethylammoniumthiosulfat | gemäß Test |
| 1003 | (I-28) | Tetraethylammoniumthiocyanat | gemäß Test |
| 1004 | (I-28) | Tetraethylammoniumcitrat | gemäß Test |
| 1005 | (I-28) | Tetraethylammoniumoxalat | gemäß Test |
| 1006 | (I-28) | Tetraethylammoniumformiat | gemäß Test |
| 1007 | (I-28) | Tetraethylammoniumhydrogenphosphat | gemäß Test |
| 1008 | (I-28) | Tetraethylammoniumdihydrogenphosphat | gemäß Test |
| 1009 | (I-29) | Ammoniumsulfat | gemäß Test |
| 1010 | (I-29) | Ammoniumlaktat | gemäß Test |
| 1011 | (I-29) | Ammoniumnitrat | gemäß Test |
| 1012 | (I-29) | Ammoniumthiosulfat | gemäß Test |
| 1013 | (I-29) | Ammoniumthiocyanat | gemäß Test |
| 1014 | (I-29) | Ammoniumcitrat | gemäß Test |
| 1015 | (I-29) | Ammoniumoxalat | gemäß Test |
| 1016 | (I-29) | Ammoniumformiat | gemäß Test |
| 1017 | (I-29) | Ammoniumhydrogenphosphat | gemäß Test |
| 1018 | (I-29) | Ammoniumdihydrogenphosphat | gemäß Test |
| 1019 | (I-29) | Ammoniumcarbonat | gemäß Test |
| 1020 | (I-29) | Ammoniumsulfit | gemäß Test |
| 1021 | (I-29) | Ammoniumbenzoat | gemäß Test |
| 1022 | (I-29) | Ammoniumhydrogenoxalat | gemäß Test |
| 1023 | (I-29) | Ammoniumhydrogencitrat | gemäß Test |
| 1024 | (I-29) | Ammoniumacetat | gemäß Test |
| 1025 | (I-29) | Tetramethylammoniumsulfat | gemäß Test |
| 1026 | (I-29) | Tetramethylammoniumlaktat | gemäß Test |
| 1027 | (I-29) | Tetramethylammoniumnitrat | gemäß Test |
| 1028 | (I-29) | Tetramethylammoniumthiosulfat | gemäß Test |
| 1029 | (I-29) | Tetramethylammoniumthiocyanat | gemäß Test |
| 1030 | (I-29) | Tetramethylammoniumcitrat | gemäß Test |
| 1031 | (I-29) | Tetramethylammoniumoxalat | gemäß Test |
| 1032 | (I-29) | Tetramethylammoniumformiat | gemäß Test |
| 1033 | (I-29) | Tetramethylammoniumhydrogenphosphat | gemäß Test |
| 1034 | (I-29) | Tetramethylammoniumdihydrogenphosphat | gemäß Test |
| 1035 | (I-29) | Tetraethylammoniumsulfat | gemäß Test |
| 1036 | (I-29) | Tetraethylammoniumlaktat | gemäß Test |
| 1037 | (I-29) | Tetraethylammoniumnitrat | gemäß Test |
| 1038 | (I-29) | Tetraethylammoniumthiosulfat | gemäß Test |
| 1039 | (I-29) | Tetraethylammoniumthiocyanat | gemäß Test |
| 1040 | (I-29) | Tetraethylammoniumcitrat | gemäß Test |
| 1041 | (I-29) | Tetraethylammoniumoxalat | gemäß Test |
| 1042 | (I-29) | Tetraethylammoniumformiat | gemäß Test |
| 1043 | (I-29) | Tetraethylammoniumhydrogenphosphat | gemäß Test |
| 1044 | (I-29) | Tetraethylammoniumdihydrogenphosphat | gemäß Test |
| 1045 | (I-30) | Ammoniumsulfat | gemäß Test |
| 1046 | (I-30) | Ammoniumlaktat | gemäß Test |
| 1047 | (I-30) | Ammoniumnitrat | gemäß Test |
| 1048 | (I-30) | Ammoniumthiosulfat | gemäß Test |
| 1049 | (I-30) | Ammoniumthiocyanat | gemäß Test |
| 1050 | (I-30) | Ammoniumcitrat | gemäß Test |
| 1051 | (I-30) | Ammoniumoxalat | gemäß Test |
| 1052 | (I-30) | Ammoniumformiat | gemäß Test |
| 1053 | (I-30) | Ammoniumhydrogenphosphat | gemäß Test |
| 1054 | (I-30) | Ammoniumdihydrogenphosphat | gemäß Test |
| 1055 | (I-30) | Ammoniumcarbonat | gemäß Test |
| 1056 | (I-30) | Ammoniumsulfit | gemäß Test |
| 1057 | (I-30) | Ammoniumbenzoat | gemäß Test |
| 1058 | (I-30) | Ammoniumhydrogenoxalat | gemäß Test |
| 1059 | (I-30) | Ammoniumhydrogencitrat | gemäß Test |
| 1060 | (I-30) | Ammoniumacetat | gemäß Test |
| 1061 | (I-30) | Tetramethylammoniumsulfat | gemäß Test |
| 1062 | (I-30) | Tetramethylammoniumlaktat | gemäß Test |
| 1063 | (I-30) | Tetramethylammoniumnitrat | gemäß Test |
| 1064 | (I-30) | Tetramethylammoniumthiosulfat | gemäß Test |
| 1065 | (I-30) | Tetramethylammoniumthiocyanat | gemäß Test |
| 1066 | (I-30) | Tetramethylammoniumcitrat | gemäß Test |
| 1067 | (I-30) | Tetramethylammoniumoxalat | gemäß Test |
| 1068 | (I-30) | Tetramethylammoniumformiat | gemäß Test |
| 1069 | (I-30) | Tetramethylammoniumhydrogenphosphat | gemäß Test |
| 1070 | (I-30) | Tetramethylammoniumdihydrogenphosphat | gemäß Test |
| 1071 | (I-30) | Tetraethylammoniumsulfat | gemäß Test |
| 1072 | (I-30) | Tetraethylammoniumlaktat | gemäß Test |
| 1073 | (I-30) | Tetraethylammoniumnitrat | gemäß Test |
| 1074 | (I-30) | Tetraethylammoniumthiosulfat | gemäß Test |
| 1075 | (I-30) | Tetraethylammoniumthiocyanat | gemäß Test |
| 1076 | (I-30) | Tetraethylammoniumcitrat | gemäß Test |
| 1077 | (I-30) | Tetraethylammoniumoxalat | gemäß Test |
| 1078 | (I-30) | Tetraethylammoniumformiat | gemäß Test |
| 1079 | (I-30) | Tetraethylammoniumhydrogenphosphat | gemäß Test |
| 1080 | (I-30) | Tetraethylammoniumdihydrogenphosphat | gemäß Test |
| 1081 | (I-31) | Ammoniumsulfat | gemäß Test |
| 1082 | (I-31) | Ammoniumlaktat | gemäß Test |
| 1083 | (I-31) | Ammoniumnitrat | gemäß Test |
| 1084 | (I-31) | Ammoniumthiosulfat | gemäß Test |
| 1085 | (I-31) | Ammoniumthiocyanat | gemäß Test |
| 1086 | (I-31) | Ammoniumcitrat | gemäß Test |
| 1087 | (I-31) | Ammoniumoxalat | gemäß Test |
| 1088 | (I-31) | Ammoniumformiat | gemäß Test |
| 1089 | (I-31) | Ammoniumhydrogenphosphat | gemäß Test |
| 1090 | (I-31) | Ammoniumdihydrogenphosphat | gemäß Test |
| 1091 | (I-31) | Ammoniumcarbonat | gemäß Test |
| 1092 | (I-31) | Ammoniumsulfit | gemäß Test |
| 1093 | (I-31) | Ammoniumbenzoat | gemäß Test |
| 1094 | (I-31) | Ammoniumhydrogenoxalat | gemäß Test |
| 1095 | (I-31) | Ammoniumhydrogencitrat | gemäß Test |
| 1096 | (I-31) | Ammoniumacetat | gemäß Test |
| 1097 | (I-31) | Tetramethylammoniumsulfat | gemäß Test |
| 1098 | (I-31) | Tetramethylammoniumlaktat | gemäß Test |
| 1099 | (I-31) | Tetramethylammoniumnitrat | gemäß Test |
| 1100 | (I-31) | Tetramethylammoniumthiosulfat | gemäß Test |
| 1101 | (I-31) | Tetramethylammoniumthiocyanat | gemäß Test |
| 1102 | (I-31) | Tetramethylammoniumcitrat | gemäß Test |
| 1103 | (I-31) | Tetramethylammoniumoxalat | gemäß Test |
| 1104 | (I-31) | Tetramethylammoniumformiat | gemäß Test |
| 1105 | (I-31) | Tetramethylammoniumhydrogenphosphat | gemäß Test |
| 1106 | (I-31) | Tetramethylammoniumdihydrogenphosphat | gemäß Test |
| 1107 | (I-31) | Tetraethylammoniumsulfat | gemäß Test |
| 1108 | (I-31) | Tetraethylammoniumlaktat | gemäß Test |
| 1109 | (I-31) | Tetraethylammoniumnitrat | gemäß Test |
| 1110 | (I-31) | Tetraethylammoniumthiosulfat | gemäß Test |
| 1111 | (I-31) | Tetraethylammoniumthiocyanat | gemäß Test |
| 1112 | (I-31) | Tetraethylammoniumcitrat | gemäß Test |
| 1113 | (I-31) | Tetraethylammoniumoxalat | gemäß Test |
| 1114 | (I-31) | Tetraethylammoniumformiat | gemäß Test |
| 1115 | (I-31) | Tetraethylammoniumhydrogenphosphat | gemäß Test |
| 1116 | (I-31) | Tetraethylammoniumdihydrogenphosphat | gemäß Test |
| 1117 | (I-32) | Ammoniumsulfat | gemäß Test |
| 1118 | (I-32) | Ammoniumlaktat | gemäß Test |
| 1119 | (I-32) | Ammoniumnitrat | gemäß Test |
| 1120 | (I-32) | Ammoniumthiosulfat | gemäß Test |
| 1121 | (I-32) | Ammoniumthiocyanat | gemäß Test |
| 1122 | (I-32) | Ammoniumcitrat | gemäß Test |
| 1123 | (I-32) | Ammoniumoxalat | gemäß Test |
| 1124 | (I-32) | Ammoniumformiat | gemäß Test |
| 1125 | (I-32) | Ammoniumhydrogenphosphat | gemäß Test |
| 1126 | (I-32) | Ammoniumdihydrogenphosphat | gemäß Test |
| 1127 | (I-32) | Ammoniumcarbonat | gemäß Test |
| 1128 | (I-32) | Ammoniumsulfit | gemäß Test |
| 1129 | (I-32) | Ammoniumbenzoat | gemäß Test |
| 1130 | (I-32) | Ammoniumhydrogenoxalat | gemäß Test |
| 1131 | (I-32) | Ammoniumhydrogencitrat | gemäß Test |
| 1132 | (I-32) | Ammoniumacetat | gemäß Test |
| 1133 | (I-32) | Tetramethylammoniumsulfat | gemäß Test |
| 1134 | (I-32) | Tetramethylammoniumlaktat | gemäß Test |
| 1135 | (I-32) | Tetramethylammoniumnitrat | gemäß Test |
| 1136 | (I-32) | Tetramethylammoniumthiosulfat | gemäß Test |
| 1137 | (I-32) | Tetramethylammoniumthiocyanat | gemäß Test |
| 1138 | (I-32) | Tetramethylammoniumcitrat | gemäß Test |
| 1139 | (I-32) | Tetramethylammoniumoxalat | gemäß Test |
| 1140 | (I-32) | Tetramethylammoniumformiat | gemäß Test |
| 1141 | (I-32) | Tetramethylammoniumhydrogenphosphat | gemäß Test |
| 1142 | (I-32) | Tetramethylammoniumdihydrogenphosphat | gemäß Test |
| 1143 | (I-32) | Tetraethylammoniumsulfat | gemäß Test |
| 1144 | (I-32) | Tetraethylammoniumlaktat | gemäß Test |
| 1145 | (I-32) | Tetraethylammoniumnitrat | gemäß Test |
| 1146 | (I-32) | Tetraethylammoniumthiosulfat | gemäß Test |
| 1147 | (I-32) | Tetraethylammoniumthiocyanat | gemäß Test |
| 1148 | (I-32) | Tetraethylammoniumcitrat | gemäß Test |
| 1149 | (I-32) | Tetraethylammoniumoxalat | gemäß Test |
| 1150 | (I-32) | Tetraethylammoniumformiat | gemäß Test |
| 1151 | (I-32) | Tetraethylammoniumhydrogenphosphat | gemäß Test |
| 1152 | (I-32) | Tetraethylammoniumdihydrogenphosphat | gemäß Test |
| 1153 | (I-33) | Ammoniumsulfat | gemäß Test |
| 1154 | (I-33) | Ammoniumlaktat | gemäß Test |
| 1155 | (I-33) | Ammoniumnitrat | gemäß Test |
| 1156 | (I-33) | Ammoniumthiosulfat | gemäß Test |
| 1157 | (I-33) | Ammoniumthiocyanat | gemäß Test |
| 1158 | (I-33) | Ammoniumcitrat | gemäß Test |
| 1159 | (I-33) | Ammoniumoxalat | gemäß Test |
| 1160 | (I-33) | Ammoniumformiat | gemäß Test |
| 1161 | (I-33) | Ammoniumhydrogenphosphat | gemäß Test |
| 1162 | (I-33) | Ammoniumdihydrogenphosphat | gemäß Test |
| 1163 | (I-33) | Ammoniumcarbonat | gemäß Test |
| 1164 | (I-33) | Ammoniumsulfit | gemäß Test |
| 1165 | (I-33) | Ammoniumbenzoat | gemäß Test |
| 1166 | (I-33) | Ammoniumhydrogenoxalat | gemäß Test |
| 1167 | (I-33) | Ammoniumhydrogencitrat | gemäß Test |
| 1168 | (I-33) | Ammoniumacetat | gemäß Test |
| 1169 | (I-33) | Tetramethylammoniumsulfat | gemäß Test |
| 1170 | (I-33) | Tetramethylammoniumlaktat | gemäß Test |
| 1171 | (I-33) | Tetramethylammoniumnitrat | gemäß Test |
| 1172 | (I-33) | Tetramethylammoniumthiosulfat | gemäß Test |
| 1173 | (I-33) | Tetramethylammoniumthiocyanat | gemäß Test |
| 1174 | (I-33) | Tetramethylammoniumcitrat | gemäß Test |
| 1175 | (I-33) | Tetramethylammoniumoxalat | gemäß Test |
| 1176 | (I-33) | Tetramethylammoniumformiat | gemäß Test |
| 1177 | (I-33) | Tetramethylammoniumhydrogenphosphat | gemäß Test |
| 1178 | (I-33) | Tetramethylammoniumdihydrogenphosphat | gemäß Test |
| 1179 | (I-33) | Tetraethylammoniumsulfat | gemäß Test |
| 1180 | (I-33) | Tetraethylammoniumlaktat | gemäß Test |
| 1181 | (I-33) | Tetraethylammoniumnitrat | gemäß Test |
| 1182 | (I-33) | Tetraethylammoniumthiosulfat | gemäß Test |
| 1183 | (I-33) | Tetraethylammoniumthiocyanat | gemäß Test |
| 1184 | (I-33) | Tetraethylammoniumcitrat | gemäß Test |
| 1185 | (I-33) | Tetraethylammoniumoxalat | gemäß Test |
| 1186 | (I-33) | Tetraethylammoniumformiat | gemäß Test |
| 1187 | (I-33) | Tetraethylammoniumhydrogenphosphat | gemäß Test |
| 1188 | (I-33) | Tetraethylammoniumdihydrogenphosphat | gemäß Test |
| 1189 | (I-34) | Ammoniumsulfat | gemäß Test |
| 1190 | (I-34) | Ammoniumlaktat | gemäß Test |
| 1191 | (I-34) | Ammoniumnitrat | gemäß Test |
| 1192 | (I-34) | Ammoniumthiosulfat | gemäß Test |
| 1193 | (I-34) | Ammoniumthiocyanat | gemäß Test |
| 1194 | (I-34) | Ammoniumcitrat | gemäß Test |
| 1195 | (I-34) | Ammoniumoxalat | gemäß Test |
| 1196 | (I-34) | Ammoniumformiat | gemäß Test |
| 1197 | (I-34) | Ammoniumhydrogenphosphat | gemäß Test |
| 1198 | (I-34) | Ammoniumdihydrogenphosphat | gemäß Test |
| 1199 | (I-34) | Ammoniumcarbonat | gemäß Test |
| 1200 | (I-34) | Ammoniumsulfit | gemäß Test |
| 1201 | (I-34) | Ammoniumbenzoat | gemäß Test |
| 1202 | (I-34) | Ammoniumhydrogenoxalat | gemäß Test |
| 1203 | (I-34) | Ammoniumhydrogencitrat | gemäß Test |
| 1204 | (I-34) | Ammoniumacetat | gemäß Test |
| 1205 | (I-34) | Tetramethylammoniumsulfat | gemäß Test |
| 1206 | (I-34) | Tetramethylammoniumlaktat | gemäß Test |
| 1207 | (I-34) | Tetramethylammoniumnitrat | gemäß Test |
| 1208 | (I-34) | Tetramethylammoniumthiosulfat | gemäß Test |
| 1209 | (I-34) | Tetramethylammoniumthiocyanat | gemäß Test |
| 1210 | (I-34) | Tetramethylammoniumcitrat | gemäß Test |
| 1211 | (I-34) | Tetramethylammoniumoxalat | gemäß Test |
| 1212 | (I-34) | Tetramethylammoniumformiat | gemäß Test |
| 1213 | (I-34) | Tetramethylammoniumhydrogenphosphat | gemäß Test |
| 1214 | (I-34) | Tetramethylammoniumdihydrogenphosphat | gemäß Test |
| 1215 | (I-34) | Tetraethylammoniumsulfat | gemäß Test |
| 1216 | (I-34) | Tetraethylammoniumlaktat | gemäß Test |
| 1217 | (I-34) | Tetraethylammoniumnitrat | gemäß Test |
| 1218 | (I-34) | Tetraethylammoniumthiosulfat | gemäß Test |
| 1219 | (I-34) | Tetraethylammoniumthiocyanat | gemäß Test |
| 1220 | (I-34) | Tetraethylammoniumcitrat | gemäß Test |
| 1221 | (I-34) | Tetraethylammoniumoxalat | gemäß Test |
| 1222 | (I-34) | Tetraethylammoniumformiat | gemäß Test |
| 1223 | (I-34) | Tetraethylammoniumhydrogenphosphat | gemäß Test |
| 1224 | (I-34) | Tetraethylammoniumdihydrogenphosphat | gemäß Test |
| 1225 | (I-35) | Ammoniumsulfat | gemäß Test |
| 1226 | (I-35) | Ammoniumlaktat | gemäß Test |
| 1227 | (I-35) | Ammoniumnitrat | gemäß Test |
| 1228 | (I-35) | Ammoniumthiosulfat | gemäß Test |
| 1229 | (I-35) | Ammoniumthiocyanat | gemäß Test |
| 1230 | (I-35) | Ammoniumcitrat | gemäß Test |
| 1231 | (I-35) | Ammoniumoxalat | gemäß Test |
| 1232 | (I-35) | Ammoniumformiat | gemäß Test |
| 1233 | (I-35) | Ammoniumhydrogenphosphat | gemäß Test |
| 1234 | (I-35) | Ammoniumdihydrogenphosphat | gemäß Test |
| 1235 | (I-35) | Ammoniumcarbonat | gemäß Test |
| 1236 | (I-35) | Ammoniumsulfit | gemäß Test |
| 1237 | (I-35) | Ammoniumbenzoat | gemäß Test |
| 1238 | (I-35) | Ammoniumhydrogenoxalat | gemäß Test |
| 1239 | (I-35) | Ammoniumhydrogencitrat | gemäß Test |
| 1240 | (I-35) | Ammoniumacetat | gemäß Test |
| 1241 | (I-35) | Tetramethylammoniumsulfat | gemäß Test |
| 1242 | (I-35) | Tetramethylammoniumlaktat | gemäß Test |
| 1243 | (I-35) | Tetramethylammoniumnitrat | gemäß Test |
| 1244 | (I-35) | Tetramethylammoniumthiosulfat | gemäß Test |
| 1245 | (I-35) | Tetramethylammoniumthiocyanat | gemäß Test |
| 1246 | (I-35) | Tetramethylammoniumcitrat | gemäß Test |
| 1247 | (I-35) | Tetramethylammoniumoxalat | gemäß Test |
| 1248 | (I-35) | Tetramethylammoniumformiat | gemäß Test |
| 1249 | (I-35) | Tetramethylammoniumhydrogenphosphat | gemäß Test |
| 1250 | (I-35) | Tetramethylammoniumdihydrogenphosphat | gemäß Test |
| 1251 | (I-35) | Tetraethylammoniumsulfat | gemäß Test |
| 1252 | (I-35) | Tetraethylammoniumlaktat | gemäß Test |
| 1253 | (I-35) | Tetraethylammoniumnitrat | gemäß Test |
| 1254 | (I-35) | Tetraethylammoniumthiosulfat | gemäß Test |
| 1255 | (I-35) | Tetraethylammoniumthiocyanat | gemäß Test |
| 1256 | (I-35) | Tetraethylammoniumcitrat | gemäß Test |
| 1257 | (I-35) | Tetraethylammoniumoxalat | gemäß Test |
| 1258 | (I-35) | Tetraethylammoniumformiat | gemäß Test |
| 1259 | (I-35) | Tetraethylammoniumhydrogenphosphat | gemäß Test |
| 1260 | (I-35) | Tetraethylammoniumdihydrogenphosphat | gemäß Test |
| 1261 | (I-36) | Ammoniumsulfat | gemäß Test |
| 1262 | (I-36) | Ammoniumlaktat | gemäß Test |
| 1263 | (I-36) | Ammoniumnitrat | gemäß Test |
| 1264 | (I-36) | Ammoniumthiosulfat | gemäß Test |
| 1265 | (I-36) | Ammoniumthiocyanat | gemäß Test |
| 1266 | (I-36) | Ammoriumcitrat | gemäß Test |
| 1267 | (I-36) | Ammoniumoxalat | gemäß Test |
| 1268 | (I-36) | Ammoniumformiat | gemäß Test |
| 1269 | (I-36) | Ammoniumhydrogenphosphat | gemäß Test |
| 1270 | (I-36) | Ammoniumdihydrogenphosphat | gemäß Test |
| 1271 | (I-36) | Ammoniumcarbonat | gemäß Test |
| 1272 | (I-36) | Ammoniumsulfit | gemäß Test |
| 1273 | (I-36) | Ammoniumbenzoat | gemäß Test |
| 1274 | (I-36) | Ammoniumhydrogenoxalat | gemäß Test |
| 1275 | (I-36) | Ammoniumhydrogencitrat | gemäß Test |
| 1276 | (I-36) | Ammoniumacetat | gemäß Test |
| 1277 | (I-36) | Tetramethylammoniumsulfat | gemäß Test |
| 1278 | (I-36) | Tetramethylammoniumlaktat | gemäß Test |
| 1279 | (I-36) | Tetramethylammoniumnitrat | gemäß Test |
| 1280 | (I-36) | Tetramethylammoniumthiosulfat | gemäß Test |
| 1281 | (I-36) | Tetramethylammoniumthiocyanat | gemäß Test |
| 1282 | (I-36) | Tetramethylammoniumcitrat | gemäß Test |
| 1283 | (I-36) | Tetramethylammoniumoxalat | gemäß Test |
| 1284 | (I-36) | Tetramethylammoniumformiat | gemäß Test |
| 1285 | (I-36) | Tetramethylammoniumhydrogenphosphat | gemäß Test |
| 1286 | (I-36) | Tetramethylammoniumdihydrogenphosphat | gemäß Test |
| 1287 | (I-36) | Tetraethylammoniumsulfat | gemäß Test |
| 1288 | (I-36) | Tetraethylammoniumlaktat | gemäß Test |
| 1289 | (I-36) | Tetraethylammoniumnitrat | gemäß Test |
| 1290 | (I-36) | Tetraethylammoniumthiosulfat | gemäß Test |
| 1291 | (I-36) | Tetraethylammoniumthiocyanat | gemäß Test |
| 1292 | (I-36) | Tetraethylammoniumcitrat | gemäß Test |
| 1293 | (I-36) | Tetraethylammoniumoxalat | gemäß Test |
| 1294 | (I-36) | Tetraethylammoniumformiat | gemäß Test |
| 1295 | (I-36) | Tetraethylammoniumhydrogenphosphat | gemäß Test |
| 1296 | (I-36) | Tetraethylammoniumdihydrogenphosphat | gemäß Test |
| 1297 | (I-37) | Ammoniumsulfat | gemäß Test |
| 1298 | (I-37) | Ammoniumlaktat | gemäß Test |
| 1299 | (I-37) | Ammoniumnitrat | gemäß Test |
| 1300 | (I-37) | Ammoniumthiosulfat | gemäß Test |
| 1301 | (I-37) | Ammoniumthiocyanat | gemäß Test |
| 1302 | (I-37) | Ammoniumcitrat | gemäß Test |
| 1303 | (I-37) | Ammoniumoxalat | gemäß Test |
| 1304 | (I-37) | Ammoniumformiat | gemäß Test |
| 1305 | (I-37) | Ammoniumhydrogenphosphat | gemäß Test |
| 1306 | (I-37) | Ammoniumdihydrogenphosphat | gemäß Test |
| 1307 | (I-37) | Ammoniumcarbonat | gemäß Test |
| 1308 | (I-37) | Ammoniumsulfit | gemäß Test |
| 1309 | (I-37) | Ammoniumbenzoat | gemäß Test |
| 1310 | (I-37) | Ammoniumhydrogenoxalat | gemäß Test |
| 1311 | (I-37) | Ammoniumhydrogencitrat | gemäß Test |
| 1312 | (I-37) | Ammoniumacetat | gemäß Test |
| 1313 | (I-37) | Tetramethylammoniumsulfat | gemäß Test |
| 1314 | (I-37) | Tetramethylammoniumlaktat | gemäß Test |
| 1315 | (I-37) | Tetramethylammoniumnitrat | gemäß Test |
| 1316 | (I-37) | Tetramethylammoniumthiosulfat | gemäß Test |
| 1317 | (I-37) | Tetramethylammoniumthiocyanat | gemäß Test |
| 1318 | (I-37) | Tetramethylammoniumcitrat | gemäß Test |
| 1319 | (I-37) | Tetramethylammoniumoxalat | gemäß Test |
| 1320 | (I-37) | Tetramethylammoniumformiat | gemäß Test |
| 1321 | (I-37) | Tetramethylammoniumhydrogenphosphat | gemäß Test |
| 1322 | (I-37) | Tetramethylammoniumdihydrogenphosphat | gemäß Test |
| 1323 | (I-37) | Tetraethylammoniumsulfat | gemäß Test |
| 1324 | (I-37) | Tetraethylammoniumlaktat | gemäß Test |
| 1325 | (I-37) | Tetraethylammoniumnitrat | gemäß Test |
| 1326 | (I-37) | Tetraethylammoniumthiosulfat | gemäß Test |
| 1327 | (I-37) | Tetraethylammoniumthiocyanat | gemäß Test |
| 1328 | (I-37) | Tetraethylammoniumcitrat | gemäß Test |
| 1329 | (I-37) | Tetraethylammoniumoxalat | gemäß Test |
| 1330 | (I-37) | Tetraethylammoniumformiat | gemäß Test |
| 1331 | (I-37) | Tetraethylammoniumhydrogenphosphat | gemäß Test |
| 1332 | (I-37) | Tetraethylammoniumdihydrogenphosphat | gemäß Test |
| 1333 | (I-38) | Ammoniumsulfat | gemäß Test |
| 1334 | (I-38) | Ammoniumlaktat | gemäß Test |
| 1335 | (I-38) | Ammoniumnitrat | gemäß Test |
| 1336 | (I-38) | Ammoniumthiosulfat | gemäß Test |
| 1337 | (I-38) | Ammoniumthiocyanat | gemäß Test |
| 1338 | (I-38) | Ammoniumcitrat | gemäß Test |
| 1339 | (I-38) | Ammoniumoxalat | gemäß Test |
| 1340 | (I-38) | Ammoniumformiat | gemäß Test |
| 1341 | (I-38) | Ammoniumhydrogenphosphat | gemäß Test |
| 1342 | (I-38) | Ammoniumdihydrogenphosphat | gemäß Test |
| 1343 | (I-38) | Ammoniumcarbonat | gemäß Test |
| 1344 | (I-38) | Ammoniumsulfit | gemäß Test |
| 1345 | (I-38) | Ammoniumbenzoat | gemäß Test |
| 1346 | (I-38) | Ammoniumhydrogenoxalat | gemäß Test |
| 1347 | (I-38) | Ammoniumhydrogencitrat | gemäß Test |
| 1348 | (I-38) | Ammoniumacetat | gemäß Test |
| 1349 | (I-38) | Tetramethylammoniumsulfat | gemäß Test |
| 1350 | (I-38) | Tetramethylammoniumlaktat | gemäß Test |
| 1351 | (I-38) | Tetramethylammoniumnitrat | gemäß Test |
| 1352 | (I-38) | Tetramethylammoniumthiosulfat | gemäß Test |
| 1353 | (I-38) | Tetramethylammoniumthiocyanat | gemäß Test |
| 1354 | (I-38) | Tetramethylammoniumcitrat | gemäß Test |
| 1355 | (I-38) | Tetramethylammoniumoxalat | gemäß Test |
| 1356 | (I-38) | Tetramethylammoniumformiat | gemäß Test |
| 1357 | (I-38) | Tetramethylammoniumhydrogenphosphat | gemäß Test |
| 1358 | (I-38) | Tetramethylammoniumdihydrogenphosphat | gemäß Test |
| 1359 | (I-38) | Tetraethylammoniumsulfat | gemäß Test |
| 1360 | (I-38) | Tetraethylammoniumlaktat | gemäß Test |
| 1361 | (I-38) | Tetraethylammoniumnitrat | gemäß Test |
| 1362 | (I-38) | Tetraethylammoniumthiosulfat | gemäß Test |
| 1363 | (I-38) | Tetraethylammoniumthiocyanat | gemäß Test |
| 1364 | (I-38) | Tetraethylammoniumcitrat | gemäß Test |
| 1365 | (I-38) | Tetraethylammoniumoxalat | gemäß Test |
| 1366 | (I-38) | Tetraethylammoniumformiat | gemäß Test |
| 1367 | (I-38) | Tetraethylammoniumhydrogenphosphat | gemäß Test |
| 1368 | (I-38) | Tetraethylammoniumdihydrogenphosphat | gemäß Test |
| 1369 | (I-39) | Ammoniumsulfat | gemäß Test |
| 1370 | (I-39) | Ammoniumlaktat | gemäß Test |
| 1371 | (I-39) | Ammoniumnitrat | gemäß Test |
| 1372 | (I-39) | Ammoniumthiosulfat | gemäß Test |
| 1373 | (I-39) | Ammoniumthiocyanat | gemäß Test |
| 1374 | (I-39) | Ammoniumcitrat | gemäß Test |
| 1375 | (I-39) | Ammoniumoxalat | gemäß Test |
| 1376 | (I-39) | Ammoniumformiat | gemäß Test |
| 1377 | (I-39) | Ammoniumhydrogenphosphat | gemäß Test |
| 1378 | (I-39) | Ammoniumdihydrogenphosphat | gemäß Test |
| 1379 | (I-39) | Ammoniumcarbonat | gemäß Test |
| 1380 | (I-39) | Ammoniumsulfit | gemäß Test |
| 1381 | (I-39) | Ammoniumbenzoat | gemäß Test |
| 1382 | (I-39) | Ammoniumhydrogenoxalat | gemäß Test |
| 1383 | (I-39) | Ammoniumhydrogencitrat | gemäß Test |
| 1384 | (I-39) | Ammoniumacetat | gemäß Test |
| 1385 | (I-39) | Tetramethylammoniumsulfat | gemäß Test |
| 1386 | (I-39) | Tetramethylammoniumlaktat | gemäß Test |
| 1387 | (I-39) | Tetramethylammoniumnitrat | gemäß Test |
| 1388 | (I-39) | Tetramethylammoniumthiosulfat | gemäß Test |
| 1389 | (I-39) | Tetramethylammoniumthiocyanat | gemäß Test |
| 1390 | (I-39) | Tetramethylammoniumcitrat | gemäß Test |
| 1391 | (I-39) | Tetramethylammoniumoxalat | gemäß Test |
| 1392 | (I-39) | Tetramethylammoniumformiat | gemäß Test |
| 1393 | (I-39) | Tetramethylammoniumhydrogenphosphat | gemäß Test |
| 1394 | (I-39) | Tetramethylammoniumdihydrogenphosphat | gemäß Test |
| 1395 | (I-39) | Tetraethylammoniumsulfat | gemäß Test |
| 1396 | (I-39) | Tetraethylammoniumlaktat | gemäß Test |
| 1397 | (I-39) | Tetraethylammoniumnitrat | gemäß Test |
| 1398 | (I-39) | Tetraethylammoniumthiosulfat | gemäß Test |
| 1399 | (I-39) | Tetraethylammoniumthiocyanat | gemäß Test |
| 1400 | (I-39) | Tetraethylammoniumcitrat | gemäß Test |
| 1401 | (I-39) | Tetraethylammoniumoxalat | gemäß Test |
| 1402 | (I-39) | Tetraethylammoniumformiat | gemäß Test |
| 1403 | (I-39) | Tetraethylammoniumhydrogenphosphat | gemäß Test |
| 1404 | (I-39) | Tetraethylammoniumdihydrogenphosphat | gemäß Test |

Erfindungsgemäße Pflanzenschutzmittel können auch weitere Komponenten, beispielsweise Tenside bzw. Dispergierhilfsmittel oder Emulgatoren enthalten.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxidpolypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäßen Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Die folgenden Beispiele dienen zur Verdeutlichung der Erfindung und sind in keiner Weise beschränkend auszulegen.

### Beispiel 1

| **Aphis gossypii -Test (APHIGO Spritzbehandlung)** | | |
|---|---|---|
| Lösungsmittel: | 7 | Gewichtsteile Dimethylformamid |
| | | |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen, Penetrationsförderer oder Ammoniumsalzen und Penetrationsförderer werden diese in einer Konzentration von je 1000 ppm nach dem Verdünnen jeweils der fertigen Präparatelösung zupipettiert.

Baumwollblätter *(Gossypium hirsutum*), die stark von der Baumwollblattlaus *(Aphis gossypii*) befallen sind, werden mit einer Wirkstoffzubereitung mit der gewünschten Konzentration gespritzt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden.

Bei diesem Test zeigt z. B. die folgende Verbindungen der Herstellungsbeispiele gute Wirksamkeit:

| **Wirkstoff** | **Konzentration in ppm** | **Abtötung in % nach 6 Tagen** | | | |
|---|---|---|---|---|---|
| | | a.i. | + AMS | + RME | + AMS + RME |
| **I-1** | 0,8 | 25 | 20 | 50 | 95 |
| **I-2** | 0,8 | 15 | 98 | 90 | 15 |
| **I-3** | 0,8 | 0 | 15 | 35 | 90 |
| **I-4** | 4 | 20 | 20 | 65 | 85 |
| **I-5** | 0,8 | 0 | 5 | 15 | 85 |
| **I-6** | 0,8 | 45 | 55 | 80 | 70 |
| | 0,16 | 0 | 0 | 25 | 40 |
| **I-7** | 0,8 | 60 | 60 | 70 | 80 |
| **I-8** | 0,8 | 20 | 30 | 60 | 75 |
| **I-9** | 0,8 | 0 | 0 | 15 | 30 |
| **I-10** | 4 | 65 | 99 | 85 | 99 |
| **I-11** | 0,8 | 15 | 55 | 95 | 99 |
| **I-12** | 4 | 55 | 80 | 85 | 75 |
| | 0,8 | 0 | 5 | 10 | 25 |
| **I-13** | 4 | 80 | 65 | 75 | 75 |
| | 0,8 | 0 | 5 | 5 | 20 |
| **I-14** | 0,8 | 0 | 5 | 40 | 70 |
| **I-15** | 4 | 60 | 85 | 98 | 98 |
| **I-16** | 4 | 80 | 95 | 98 | 90 |
| | 0,8 | 0 | 10 | 10 | 5 |
| **I-17** | 0,8 | 0 | 20 | 40 | 40 |

| | | | | | |
|---|---|---|---|---|---|
| AMS = Ammoniumsulfat RME = Rapsölmethylester (Einsatz formuliert als 500 EW) | | | | | |

### Beispiel 2

| **Myzus persicae -Test (MYZUPE)** | | |
|---|---|---|
| Lösungsmittel: | 7 | Gewichtsteile Dimethylformamid |
| | | |
| Emulgator: | 2 | Gewichtsteil Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration. Bei erforderlicher Zugabe von Ammoniumsalzen, Penetrationsförderer oder Ammoniumsalzen und Penetrationsförderer werden diese in einer Konzentration von je 1000 ppm nach dem Verdünnen jeweils der fertigen Präparatelösung zupipettiert.

Paprikapflanzen *(Capsicum annuum),* die stark von der Grünen Pfirsichblattlaus *(Myzus persicaei)* befallen sind, werden durch Sprühen mit der Wirkstoffzubereitung in der gewünschten Konzentration behandelt.

Nach der gewünschten Zeit wird die Abtötung in % bestimmt. Dabei bedeutet 100 %, dass alle Tiere abgetötet wurden; 0 % bedeutet, dass keine Tiere abgetötet wurden.

Bei diesem Test zeigen z. B. die folgenden Verbindungen der Herstellungsbeispiele gute Wirksamkeit:

| **Wirkstoff** | **Konzentration in ppm** | **Abtötung in % nach 6 Tagen** | | | |
|---|---|---|---|---|---|
| | | a.i. | + AMS | + RME | + AMS + RME |
| **I-1** | 4 | 35 | 95 | 99 | 99 |
| | 0,8 | 0 | 0 | 25 | 35 |
| **I-2** | 0,8 | 0 | 50 | 98 | 30 |
| **I-3** | 4 | 0 | 80 | 85 | 100 |
| **I-4** | 4 | 15 | 80 | 90 | 100 |
| **I-5** | 0,8 | 0 | 0 | 5 | 70 |
| **I-6** | 4 | 60 | 85 | 100 | 100 |
| **I-7** | 0,8 | 55 | 45 | 80 | 90 |
| **I-8** | 0,8 | 40 | 50 | 95 | 95 |
| **I-9** | 4 | 0 | 15 | 60 | 70 |
| **I-10** | 0,8 | 0 | 0 | 90 | 99 |
| **I-11** | 0,8 | 85 | 95 | 99 | 99 |
| | 0,16 | 0 | 0 | 0 | 90 |
| **I-12** | 4 | 85 | 95 | 100 | 95 |
| | 0,8 | 5 | 0 | 10 | 45 |
| **I-13** | 0,8 | 5 | 5 | 35 | 90 |
| **I-14** | 4 | 25 | 60 | 95 | 95 |
| **I-15** | 0,8 | 0 | 0 | 80 | 0 |
| **I-16** | 4 | 95 | 99 | 98 | 100 |
| | 0,8 | 5 | 0 | 10 | 10 |
| **I-17** | 4 | 95 | 99 | 100 | 100 |
| | 0,8 | 0 | 5 | 35 | 25 |

| | | | | | |
|---|---|---|---|---|---|
| AMS = Ammoniumsulfat RME = Rapsölmethylester (Einsatz formuliert als 500 EW) | | | | | |

## Patentansprüche

1. Zusammensetzung umfassend
- mindestens einen insektiziden Wirkstoff der Formel (I) 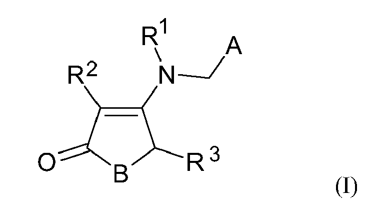
in welcher
A für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position sub-stituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder
A für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
A für einen Rest 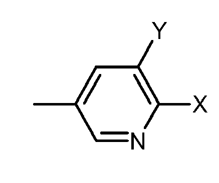
steht,
in welchem
X für Halogen, Alkyl oder Halogenalkyl steht
Y für Halogen, Alkyl, Halogenalkyl, Halogenalkoxy, Azido oder Cyan steht,
B für Sauerstoff, Schwefel, Ethylen oder Methylen steht,
R¹ für Wasserstoff, Alkyl, Halogenalkyl, Alkenyl, Halogenalkenyl, Alkinyl, Cycloalkyl, Cycloalkylalkyl, Halogencycloalkyl, Alkoxy oder Halogencycloalkylalkyl steht,
R² für Wasserstoff oder Halogen steht und
R³ für Wasserstoff oder Alkyl steht,
mit der Maßgabe, dass 4-{[(6-Chlorpyrid-3-yl)methyl](methyl)amino}furan-2(5H)-on und 4-{[(6-Chlorpyrid-3-yl)methyl]amino}furan-2(5H)-on ausgeschlossen sind, und
- mindestens ein Salz der Formel (II) 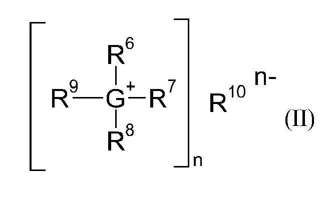
in welcher
G für Stickstoff oder Phosphor steht,
G bevorzugt für Stickstoff steht,
R⁶, R⁷, R⁸ und R⁹ unabhängig voneinander für Wasserstoff oder jeweils gegebenenfalls sub-stituiertes C₁-C₈-Alkyl oder einfach oder mehrfach ungesättigtes, gegebenenfalls substituiertes C₁-C₈-Alkylen stehen, wobei die Substituenten aus Halogen, Nitro und Cyano ausgewählt sein können,
n für 1, 2, 3 oder 4 steht und
R¹⁰ für ein anorganisches oder organisches Anion steht.

2. Zusammensetzung gemäß Anspruch 1, **dadurch gekennzeichnet, dass** der Wirkstoffgehalt zwischen 0,5 und 50 Gew.-% beträgt.

3. Zusammensetzung gemäß Anspruch 1 oder 2, **dadurch gekennzeichnet, dass** G für Stickstoff steht.

4. Zusammensetzung gemäß einem beliebigen der Ansprüche 1 bis 3, **dadurch gekennzeichnet, dass** R¹⁰ für Hydrogencarbonat, Tetraborat, Fluorid, Bromid, Jodid, Chlorid, Monohydrogenphosphat, Dihydrogenphosphat, Hydrogensulfat, Tartrat, Sulfat, Nitrat, Thiosulfat, Thiocyanat, Formiat, Laktat, Acetat, Propionat, Butyrat, Pentanoat, Citrat, Oxalat, Carbonat, Pentaborat, Sulfit, Benzoat, Hydrogenoxalat, Hydrogencitrat, Methylsulfat oder Tetrafluoroborat steht.

5. Zusammensetzung gemäß Anspruch 4, **dadurch gekennzeichnet, dass** R¹⁰ für Laktat, Sulfat, Nitrat, Thiosulfat, Thiocyanat, Citrat, Oxalat oder Formiat steht.

6. Zusammensetzung gemäß Anspruch 5, **dadurch gekennzeichnet, dass** R¹⁰ für Sulfat steht.

7. Zusammensetzung gemäß Anspruch 6, **dadurch gekennzeichnet, dass** das Salz der Formel (II) Ammoniumsulfat ist.

8. Zusammensetzung gemäß einem beliebigen der Ansprüche 1 bis 7, **dadurch gekennzeichnet, dass** sie mindestens einen Penetrationsförderer enthält.

9. Zusammensetzung gemäß Anspruch 8, **dadurch gekennzeichnet, dass** der Penetrationsförderer ein Fettalkohol-Alkoxylat der Formel (III)
R-O-(-AO)ᵥ-R' (III)
in welcher
R für geradkettiges oder verzweigtes Alkyl mit 4 bis 20 Kohlenstoffatomen steht,
R' für Wasserstoff, Methyl, Ethyl, n-Propyl, i-Propyl, n-Butyl, i-Butyl, t-Butyl, n-Pentyl oder n-Hexyl steht,
AO für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
v für Zahlen von 2 bis 30 steht,
oder ein mineralisches oder vegetabiles Öl oder der Ester eines mineralischen oder vegetabilen Öls ist.

10. Zusammensetzung gemäß Anspruch 8, **dadurch gekennzeichnet, dass** der Penetrationsförderer Ester eines vegetabilen Öls ist.

11. Zusammensetzung gemäß Anspruch 10, **dadurch gekennzeichnet, dass** der Penetrationsförderer Rapsölmethylester ist.

12. Zusammensetzung gemäß einem beliebigen der Ansprüche 8 bis 11, **dadurch gekennzeichnet, dass** der Gehalt an Penetrationsförderer 1 bis 95 Gew.-% beträgt.

13. Verfahren zur Bekämpfung von Schadinsekten, **dadurch gekennzeichnet, dass** eine Zusammensetzung gemäß einem oder mehreren der Ansprüche 1 bis 12 unverdünnt oder verdünnt in solcher Menge auf Insekten oder ihren Lebensraum appliziert wird, dass eine wirksame Menge der enthaltenen insektiziden Wirkstoffe auf die Insekten oder ihren Lebensraum wirkt.

14. Verfahren zur Steigerung der Wirkung von Pflanzenschutzmitteln enthaltend einen Wirkstoff der Formel (I) gemäß Anspruch 1, **dadurch gekennzeichnet, dass** das anwendungsfertige Mittel (Spritzbrühe) unter Einsatz eines Salzes der Formel (II) gemäß Anspruch 1 zubereitet wird.

15. Verfahren gemäß Anspruch 13 oder 14, **dadurch gekennzeichnet, dass** die Spritzbrühe unter Einsatz eines Penetrationsförderers zubereitet wird.

16. Verfahren gemäß einem beliebigen der Ansprüch 13 bis 15, **dadurch gekennzeichnet, dass** das Salz der Formel (II) in der Spritzbrühe in einer Endkonzentration von 0,5 bis 80 mmol/l vorliegt.

17. Verfahren gemäß Anspruch 15, **dadurch gekennzeichnet, dass** der Penetrationsförderer in der Spritzbrühe in einer Endkonzentration von 0,1 bis 10 g/l vorliegt.

18. Verfahren gemäß Anspruch 17, **dadurch gekennzeichnet, dass** der Penetrationsförderer in einer Endkonzentration von 0,1 bis 10 g/l und das Salz der Formel (II) in einer Endkonzentration von 0,5 bis 80 mmol/l vorliegt.

19. Verwendung eines Salzes der Formel (II) gemäß Anspruch 1 zur Steigerung der Wirkung eines Pflanzenschutzmittels enthaltend einen Wirkstoff der Formel (I) gemäß Anspruch 1,
**dadurch gekennzeichnet, dass** das Salz bei der Zubereitung eines anwendungsfertigen Pflanzenschutzmittels (Spritzbrühe) eingesetzt wird.

20. Verwendung gemäß Anspruch 19, **dadurch gekennzeichnet, dass** das Salz der Formel (II) in dem anwendungsfertigen Pflanzenschutzmittel in einer Konzentration von 0,5 bis 80 mmol/l vorliegt.

21. Verwendung gemäß Anspruch 19 oder 20 **dadurch gekennzeichnet, dass** das Salz bei der Zubereitung eines anwendungsfertigen Pflanzenschutzmittels (Spritzbrühe) eingesetzt wird, das weiterhin einen Penetrationsförderer enthält.
